(19) Europäisches Patentamt / European Patent Office / Office européen des brevets

(11) EP 4 439 718 A1

(12) **EUROPEAN PATENT APPLICATION**

(43) Date of publication:
**02.10.2024 Bulletin 2024/40**

(21) Application number: **24165573.7**

(22) Date of filing: **22.03.2024**

(51) International Patent Classification (IPC):
***H01M 4/36*** *(2006.01)* ***H01M 4/131*** *(2010.01)*
***H01M 4/1391*** *(2010.01)* ***H01M 4/04*** *(2006.01)*
***H01M 4/62*** *(2006.01)* ***H01M 10/0525*** *(2010.01)*
*H01M 4/505 (2010.01)* *H01M 4/525 (2010.01)*
*H01M 4/02 (2006.01)*

(52) Cooperative Patent Classification (CPC):
**H01M 4/366; H01M 4/0435; H01M 4/131; H01M 4/1391; H01M 4/622; H01M 4/625; H01M 10/0525;** H01M 4/364; H01M 4/505; H01M 4/525; H01M 4/623; H01M 2004/021; H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2023 KR 20230039364**
**08.06.2023 KR 20230073742**

(71) Applicant: **Samsung SDI Co., Ltd.**
**Yongin-si, Gyeonggi-do 17084 (KR)**

(72) Inventors:
- **LEE, Donggeun**
  **17084 Yongin-si (KR)**
- **YOON, Yeonhee**
  **17084 Yongin-si (KR)**
- **KIM, Seongdae**
  **17084 Yongin-si (KR)**
- **LEE, Jinhyon**
  **17084 Yongin-si (KR)**
- **KWON, Ilkyong**
  **17084 Yongin-si (KR)**
- **NAM, Hyun**
  **17084 Yongin-si (KR)**
- **PYUN, Ahram**
  **17084 Yongin-si (KR)**

(74) Representative: **Marks & Clerk LLP**
**15 Fetter Lane**
**London EC4A 1BW (GB)**

# (54) DRY ELECTRODE FILM, AND DRY ELECTRODE AND LITHIUM BATTERY INCLUDING THE SAME

(57) A dry electrode film, and a dry electrode and a lithium battery that includes the dry electrode film, wherein the dry electrode film includes a first dry electrode active material layer including a first dry electrode active material and a first dry binder fibrillized in a first direction, and a second dry electrode active material layer disposed on a surface of the first dry electrode active material layer and including a second dry electrode active material and a second dry binder fibrillized in a second direction that is different from the first direction, wherein the dry electrode film is a self-standing film.

FIG. 2C

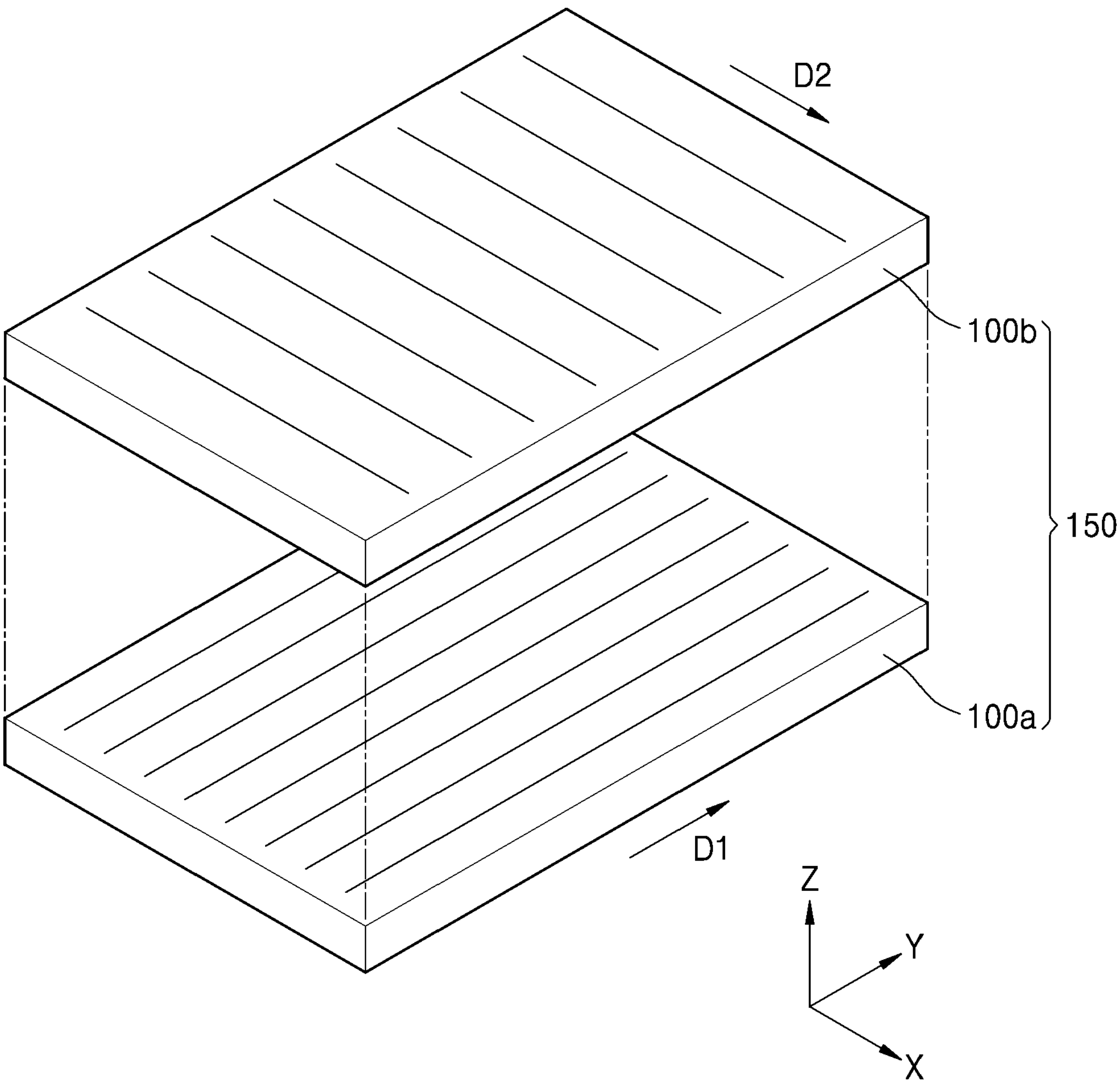

## Description

## BACKGROUND

### 1. Field

Embodiments of the present disclosure described herein are related to a dry electrode film, a dry electrode that includes the dry electrode film, and/or a lithium battery that includes the dry electrode.

### 2. Description of the Related Art

In order to achieve miniaturization and higher performance of one or more suitable devices, in addition to miniaturization and weight reduction of lithium batteries, high battery energy density is also becoming more important. As such, high-capacity lithium batteries are becoming more important.

Electrodes prepared from a slurry including a solvent (e.g., an organic solvent) may use an excessive amount of the solvent in preparing the electrodes. Accordingly, dry methods that eliminate or reduce the use of such solvent (e.g., such an organic solvent) may be considered or desired.

## SUMMARY

Aspects according to one or more embodiments are directed toward a new dry electrode film having improved structural stability by including a plurality of electrode active material layers stretched in different directions.

Aspects according to one or more embodiments are directed toward a dry electrode including the dry film.

Aspects according to one or more embodiments are directed toward a lithium battery including the dry electrode.

Aspects according to one or more embodiments are directed toward a method of preparing the dry electrode film.

Additional aspects will be set forth in part in the description which follows and, in part, will be apparent from the description, or may be learned by practice of the presented embodiments of the present disclosure.

According to one or more embodiments, a dry electrode film includes a first dry electrode active material layer including a first dry electrode active material and a first dry binder fibrillized in a first direction, and a second dry electrode active material layer disposed on a first surface (e.g. one surface) of the first dry electrode active material layer and including a second dry electrode active material and a second dry binder fibrillized in a second direction that is distinguished (e.g. different) from the first direction, wherein the dry electrode film is a self-standing film.

According to one or more embodiments, a dry electrode includes a dry electrode active material layer, and an electrode current collector disposed on a first surface (e.g. one surface) of the dry electrode active material layer or between the first surface (e.g. the one surface) and a second surface (e.g. the other surface) opposite to the first surface (e.g. the one surface), wherein the dry electrode active material layer includes the dry electrode film.

According to one or more embodiments, a lithium battery includes a cathode, an anode, and an electrolyte disposed between the cathode and the anode, wherein the cathode, the anode or a combination thereof is a dry electrode (e.g. at least one of the cathode and the anode), and the dry electrode includes the dry electrode film.

According to one or more embodiments, a method of preparing a dry electrode film includes providing a first dry electrode active material layer including a first dry electrode active material and a fibrillized first dry binder, providing a second dry electrode active material layer including a second dry electrode active material and a fibrillized second dry binder, arranging the first dry electrode active material layer such that the fibrillized first dry binder is disposed in a first direction, and arranging the second dry electrode active material layer on the first dry electrode active material layer such that the fibrillized second dry binder is disposed in a second direction that is distinguished from the first direction.

At least some of the above and other features of the invention are set out in the claims.

## BRIEF DESCRIPTION OF DRAWINGS

The above and other aspects, features, and advantages of certain embodiments of the present disclosure will be more apparent from the following description taken in conjunction with the accompanying drawings, in which:

FIG. 1 is a scanning electron microscope image of a cross section of a first dry electrode active material layer prepared in Example 1 including a first dry binder fibrillized in a first direction;
FIG. 2A is a perspective view of a dry electrode film according to embodiments;
FIG. 2B is a perspective view partially illustrating the interior of a dry electrode film according to embodiments;
FIG. 2C is an exploded view of a dry electrode film according to embodiments;
FIG. 3A is a perspective view of a dry electrode film according to embodiments;

FIG. 3B is a perspective view partially illustrating the interior of a dry electrode film according to embodiments;
FIG. 3C is an exploded view of a dry electrode film according to embodiments;
FIG. 4 is a schematic view illustrating a method of preparing a dry electrode active material layer according to embodiments;
FIGS. 5A-5D are cross-sectional views of dry electrodes according to embodiments;
FIG. 6 is a schematic view of an electrode according to embodiments;
FIGS. 7A-7F are cross-sectional views of electrodes according to embodiments;
FIG. 8 is a cross-sectional view of an electrode according to embodiments;
FIG. 9 is a side view of an electrode assembly according to embodiments;
FIG. 10 is a side view of an electrode assembly according to embodiments;
FIG. 11 is a front view of an electrode assembly according to embodiments;
FIG. 12 is a schematic view of a lithium battery according to embodiments;
FIG. 13 is a schematic view of a lithium battery according to embodiments; and
FIG. 14 is a schematic view of a lithium battery according to embodiments.

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described herein, by referring to the drawings, to explain aspects of the present description. As utilized herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

Hereinafter, as the present disclosure allows for one or more suitable changes and numerous embodiments, specific embodiments will be illustrated in the drawings and described in more detail in the written description. However, this is not intended to limit the present disclosure to particular modes of practice, and it is to be appreciated that all changes, equivalents, and substitutes that do not depart from the technical scope are encompassed in the present disclosure.

The terms utilized herein are merely utilized to describe specific embodiments and are not intended to limit the present disclosure. An expression utilized in the singular encompasses the expression of the plural, unless it has a clearly different meaning in the context. As utilized herein, it is to be understood that the terms such as "including," "having," and "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The symbol "/" utilized herein may be interpreted as "and" or "or" according to the context.

In the drawings, the thicknesses of layers and regions are exaggerated or reduced for clarity. Like reference numerals in the drawings denote like elements throughout, and duplicative descriptions thereof may not be provided the specification. Throughout the specification, it will be understood that when a component, such as a layer, a film, a region, or a plate, is referred to as being "on" another component, the component may be directly on the other component or intervening components may be present thereon. Throughout the specification, while such terms as "first," "second," and/or the like may be utilized to describe one or more suitable components, such components should not be limited to the above terms. The above terms are utilized only to distinguish one component from another.

As utilized herein, the term "dry" refers to a state of not being intentionally in contact with a solvent such as a process solvent or a state of not intentionally including a solvent. For example, a dry conductive material refers to a conductive material that is not intentionally in contact with a solvent or a conductive material that does not intentionally include a solvent. For example, a dry binder refers to a conductive material that is not intentionally in contact with a solvent or a binder that does not intentionally include a solvent. For example, a binder in a liquid state at room temperature without being mixed with a solvent is a dry binder.

As utilized herein, the length of an electrode, the thickness of the electrode, the diameter of a through-hole, the depth of the through-hole, and the area of the through-hole refer to an average length, an average thickness, an average diameter, an average depth, and an average area, respectively. An average value is, for example, an arithmetic average value of values measured at a plurality of points. The length of an electrode, the thickness of the electrode, the diameter of a through-hole, the depth of the through-hole, and the area of the through-hole may each be measured by

utilizing a micrometer, a scanning electron microscope (SEM) image, or an optical microscope image.

As utilized herein, the term "particle diameter" of particles refers to an average diameter when particles are spherical and refers to an average major axis length when particles are non-spherical. A particle diameter of particles may be measured by utilizing a particle size analyzer (PSA). A "particle diameter" of particles is, for example, an "average particle diameter." An average particle diameter refers to, for example, a median particle diameter (D50). The median particle diameter (D50) is a particle size corresponding to a 50 % cumulative volume if (e.g., when) a particle size distribution measured through a laser diffraction method is calculated from particles having a smaller particle size. In other embodiments, an "average particle diameter" may be measured from a SEM image or a transmission electron microscopy (TEM) image through a manual or software.

The "aspect ratio" used herein may refer to the average aspect ratio and may be determined from SEM images.

The term "metal" as utilized herein includes all of metals and metalloids such as silicon and germanium in an elemental or ionic state.

The term "alloy" as utilized herein refers to a mixture of two or more metals.

The term "cathode active material" as utilized herein refers to a cathode material that may undergo lithiation and delithiation.

The term "anode active material" as utilized herein refers to an anode material that may undergo lithiation and delithiation.

The terms "lithiate" and "lithiating" as utilized herein refer to a process of adding lithium to a cathode active material or an anode active material.

The terms "delithiate" and "delithiating" as utilized herein refer to a process of removing lithium from a cathode active material or an anode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

As utilized herein, an electrode film having "anisotropic tensile strength" refers to an electrode film of which tensile strength varies according to stretching directions.

As utilized herein, an electrode film having "isotropic tensile strength" refers to an electrode film of which tensile strengths are substantially the same according to stretching directions.

A tensile strength in a particular direction may be measured by stretching a sample at a speed of 5 mm/min in the particular direction until fracture utilizing a texture analyzer (e.g. TA.XT plus manufactured by Stable Micro Systems), and measuring the largest stress applied at fracture in a stress-strain curve.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The terms "fibril" or "fibrils" as utilized herein refer to the fibrous shape of a substance that has a larger aspect ratio than a particulate of said substance. As utilized herein, the terms "fibrillized" and "fibrillize" refer to a process of converting (e.g., by grinding or pulverizing) particulates of a substance into fibrous shape (i.e., fibrils) of said substance that has higher aspect ratio than the particulates.

Hereinafter, a dry electrode film, a dry electrode including the same, and a lithium battery including the dry electrode according to embodiments will be described in more detail.

A dry electrode film according to embodiments may include a first dry electrode active material layer including a first dry electrode active material and a first dry binder fibrillized in a first direction, and a second dry electrode active material layer disposed on at least one surface of the first dry electrode active material layer and including a second dry electrode active material and a second dry binder fibrillized in a second direction that is different from the first direction, wherein the dry electrode film is a self-standing film.

The first dry binder may be, for example, the same or different from the second dry binder.

FIG. 1 is a scanning electron microscope (SEM) image of a cross section of the dry electrode film according to embodiments. Referring to FIG. 1, the first dry electrode active material layer may include the first dry binder that is fibrillized in the first direction. The first direction may be, for example, a stretching direction of the first dry electrode active material layer. The first dry electrode active material layer may include the first dry binder stretched in the first direction. The first direction may be, for example, an X-axis direction in FIG. 1. The second dry electrode active material layer stretched in the second direction distinguished from the first direction may include the second dry binder fibrillized in the second direction.

For example, in the first dry electrode active material layer stretched in the first direction, mechanical strength thereof in the second direction perpendicular to the first direction may be relatively less than mechanical strength thereof in the first direction. The first dry electrode active material layer may relatively easily deteriorate due to a change in volume of the first dry electrode active material layer in the second direction during charging/discharging. For example, cracks of the first dry electrode active material layer and separation of the first dry electrode active material layer from an electrode current collector may occur. A dry electrode including the first dry electrode active material layer alone may easily deteriorate due to a change in volume in one direction in which structural stability is low. The cycle characteristics of a lithium battery including such a dry electrode may deteriorate.

In other embodiments, in a dry electrode film including the first dry electrode active material layer stretched in the first direction and the second dry electrode active material layer stacked on one surface of the first dry electrode active material layer and stretched in the second direction distinguished (e.g., different) from the first direction, the second dry electrode active material layer may compensate for the previously described structural instability of the first dry electrode active material layer. The dry electrode film may include a plurality of dry electrode active material layers that are stacked in a thickness direction and stretched in different directions, and thus the structural stability of the dry electrode film may be improved. The deterioration of a dry electrode including such a dry electrode film during charging/discharging may be suppressed or reduced. The cycle characteristics of a lithium battery including such a dry electrode may be improved.

The dry electrode film may be a self-standing film and thus may maintain the form of a film without, for example, a support. The dry electrode film having the form of the self-standing film may be easily handled and thus may be easily applied to one or more suitable types (kinds) of lithium battery manufacturing processes. The dry electrode film may be prepared as a separate self-standing film and then disposed on an electrode current collector, and thus additional drying processes may not be provided, thereby simplifying a lithium battery manufacturing process.

A dry electrode film according to embodiments will be described with reference to the accompanying drawings.

Referring to FIGS. 2A to 2C, a dry electrode film 150 may include a first dry electrode active material layer 100a including a first dry electrode active material and a first dry binder fibrillized in a first direction D1, and a second dry electrode active material layer 100b disposed on one surface of the first dry electrode active material layer 100a and including a second dry electrode active material and a second dry binder fibrillized in a second direction D2 distinguished from the first direction D1. The dry electrode film 150 may be a self-standing film.

The first dry electrode active material layer 100a including the first dry binder fibrillized in the first direction D1 and the second dry electrode active material layer 100b including the second dry binder fibrillized in the second direction D2 may be stacked, and thus, at an interface between the first dry electrode active material layer 100a and the second dry electrode active material layer 100b, the first dry binder fibrillized in the first direction D1 and the second dry binder fibrillized in the second direction D2 distinguished from the first direction D1 may cross each other. The dry electrode film 150 may include, for example, a cross-directional fibrillized dry binder. The dry electrode film 150 may include the cross-directional fibrillized dry binder so that the mechanical strength of the dry electrode film 150 may be further improved and the structural stability thereof may be further improved. The deterioration of a dry electrode including the dry electrode film 150 due to a change in volume during charging/discharging may be further suppressed or reduced. The cycle characteristics of a lithium battery including such a dry electrode may be further improved.

The thickness of a region including the cross-directional fibrillized dry binder may be adjusted according to the required mechanical strength of the dry electrode film 150. The dry electrode film 150 may be additionally rolled, thereby increasing the thickness of the region including the cross-directional fibrillized dry binder with respect to the total thickness of the dry electrode film 150. The thickness of the region including the cross-directional fibrillized dry binder may be 50 % or less, 30 % or less, 10 % or less, or 5% or less of the total thickness of the dry electrode film 150. The thickness of the region including the cross-directional fibrillized dry binder may be in a range of more than about 0 % to about 50 %, about 0.01 % to about 30 %, about 0.1 % to about 10 %, or about 0.1 % to about 5 % of the total thickness of the dry

electrode film 150.

A difference between the first direction D1 and the second direction D2 in the dry electrode film 150 may be, for example, in a range of about 45° to about 135°, about 55° to about 125°, about 65° to about 115°, about 75° to about 105°, or about 85° to about 95°. The difference between the first direction D1 and the second direction D2 may be in such a range so that the mechanical strength of the dry electrode film 150 may be further improved and the structural stability thereof may be further improved. The deterioration of a dry electrode including the dry electrode film 150 due to a change in volume during charging/discharging may be further suppressed or reduced. The cycle characteristics of a lithium battery including such a dry electrode may be further improved. For example, the first direction D1 and the second direction D2 may be orthogonal directions.

In the dry electrode film 150, the first direction D1 and the second direction D2 may be, for example, directions perpendicular (or normal) to a thickness direction of the dry electrode film 150. For example, the first direction D1 and the second direction D2 may be directions parallel to a surface direction of the dry electrode film 150. The difference between the first direction D1 and the second direction D2 may refer to, for example, an angle formed by the first direction D1 and the second direction D2 in a plan view of the dry electrode film 150.

Referring to FIGS. 2A to 2C, the second dry electrode active material layer 100b may be disposed on the first dry electrode active material layer 100a such that the first dry binder fibrillized in the first direction D1 and the second dry binder fibrillized in the second direction D2 are directed in different directions.

For example, the first dry binder fibrillized in the first direction D1 and the second dry binder fibrillized in the second direction D2 may be directed in orthogonal directions or directions close to the orthogonal directions (or crossing directions). The first direction D1 in which the first dry binder is fibrillized may be, for example, a machine direction MD of the first dry electrode active material layer 100a. The first direction D1 in which the first dry binder is fibrillized may be, for example, a transverse direction TD of the second dry electrode active material layer 100b. The second direction D2 in which the second dry binder is fibrillized may be, for example, a transverse direction TD of the first dry electrode active material layer 100a. The second direction D2 in which the second dry binder is fibrillized may be, for example, a machine direction MD of the second dry electrode active material layer 100b. The first dry electrode active material layer 100a and the second dry electrode active material layer 100b may be disposed in such a manner so that the mechanical strength of the dry electrode film 150 may be further improved and the structural stability thereof may be further improved. The deterioration of a dry electrode including the dry electrode film 150 due to a change in volume during charging/discharging may be further suppressed or reduced. The cycle characteristics of a lithium battery including such a dry electrode may be further improved.

Referring to FIGS. 3A to 3C, a dry electrode film 150 may include a first dry electrode active material layer 100a including a first dry electrode active material and a first dry binder fibrillized in a first direction D1, a second dry electrode active material layer 100b disposed on one surface of the first dry electrode active material layer 100a and including a second dry electrode active material and a second dry binder fibrillized in a second direction D2 distinguished from the first direction D1, and a third dry electrode active material layer 100c disposed on one surface of the second dry electrode active material layer 100b and including a third dry electrode active material and a third dry binder fibrillized in a third direction D3.

The second dry electrode active material layer 100b may be disposed on the first dry electrode active material layer 100a such that the first dry binder fibrillized in the first direction D1 and the second dry binder fibrillized in the second direction D2 are directed in different directions. The third dry electrode active material layer 100c may be disposed on the second dry electrode active material layer 100b such that the second dry binder fibrillized in the second direction D2 and the third dry binder fibrillized in the third direction D3 are directed in different directions. For example, the first dry binder fibrillized in the first direction D1 and the second dry binder fibrillized in the second direction D2 may be directed in orthogonal directions or directions close to the orthogonal directions (or crossing directions). The second dry binder fibrillized in the second direction D2 and the third dry binder fibrillized in the third direction D3 may be directed in orthogonal directions or directions close to the orthogonal directions. The first direction D1 may be the same as the third direction D3.

The first direction D1 in which the first dry binder is fibrillized may be, for example, a machine direction MD of the first dry electrode active material layer 100a. The first direction D1 in which the first dry binder is fibrillized may be, for example, a transverse direction TD of the second dry electrode active material layer 100b. The first direction D1 in which the first dry binder is fibrillized may be, for example, a machine direction MD of the third dry electrode active material layer 100c. The third direction D3 in which the third dry binder is fibrillized may be, for example, a machine direction MD of the third dry electrode active material layer 100c. The third direction D3 in which the third dry binder is fibrillized may be, for example, the transverse direction TD of the second dry electrode active material layer 100b. The third direction D3 in which the third dry binder is fibrillized may be, for example, a machine direction MD of the first dry electrode active material layer 100a. The second direction D2 in which the second dry binder is fibrillized may be, for example, a transverse direction TD of the first dry electrode active material layer 100a. The second direction D2 in which the second dry binder is fibrillized may be, for example, a machine direction MD of the second dry electrode active

material layer 100b. The second direction D2 in which the second dry binder is fibrillized may be, for example, a transverse direction TD of the third dry electrode active material layer 100c.

The first dry electrode active material layer 100a, the second dry electrode active material layer 100b, and the third dry electrode active material layer 100c may be disposed in such a manner so that the mechanical strength of the dry electrode film 150 may be further improved and the structural stability thereof may be further improved. The deterioration of a dry electrode including the dry electrode film 150 due to a change in volume during charging/discharging may be further suppressed or reduced. The cycle characteristics of a lithium battery including such a dry electrode may be further improved.

FIG. 4 is a schematic view illustrating a method of preparing a dry electrode active material layer according to embodiments.

Referring to FIG. 4, a first dry electrode active material composition may pass between a pair of calender rolls to be processed into the first dry electrode active material layer 100a. A direction in which the first dry electrode active material layer 100a is formed and moved may be the machine direction MD of the first dry electrode active material layer 100a. The first dry electrode active material composition may be stretched in the machine direction MD while passing between the pair of calendar rolls, and thus the first dry electrode active material layer 100a may include the first dry binder fibrillized in the machine direction MD. The transverse direction TD of the first dry electrode active material layer 100a may be a direction crossing the machine direction MD of the first dry electrode active material layer 100a.

In the same manner as the first dry electrode active material layer 100a, a second dry electrode active material composition may pass between the pair of calender rolls to be processed into the second dry electrode active material layer 100b. A direction in which the second dry electrode active material layer 100b is formed and moved may be the machine direction MD of the second dry electrode active material layer 100b. The second dry electrode active material composition may be stretched in the machine direction MD while passing between the pair of calendar rolls, and thus the second dry electrode active material layer 100b may include the second dry binder fibrillized in the machine direction MD. The transverse direction TD of the second dry electrode active material layer 100b may be a direction crossing the machine direction MD of the second dry electrode active material layer 100b.

If present, in the same manner as the first dry electrode active material layer 100a, a third dry electrode active material composition may pass between the pair of calender rolls to be processed into the third dry electrode active material layer 100c. A direction in which the third dry electrode active material layer 100c is formed and moved may be the machine direction MD of the third dry electrode active material layer 100c. The third dry electrode active material composition may be stretched in the machine direction MD while passing between the pair of calendar rolls, and thus the third dry electrode active material layer 100c may include the third dry binder fibrillized in the machine direction MD. The transverse direction TD of the third dry electrode active material layer 100c may be a direction crossing the machine direction MD of the third dry electrode active material layer 100c.

The number of dry electrode active material layers included in the dry electrode film 150 may be, for example, in a range of about 2 to about 100, about 2 to about 50, about 2 to about 20, or about 2 to about 10 (e.g. about 3 to about 100, about 3 to about 50, about 3 to about 20, or about 3 to about 10; about 5 to about 100, about 5 to about 50, about 5 to about 20, or about 5 to about 10). The plurality of dry electrode active material layers included in the dry electrode film 150 may include dry binders fibrillized in different directions, respectively. Among the plurality of dry electrode active material layers included in the dry electrode film 150, two or more dry electrode active material layers may include dry binders fibrillized in different directions, respectively. In particular, for any two adjacent dry electrode active material layers (e.g. for each two adjacent dry electrode active material layers) in the plurality of dry electrode active material layers, the dry binders may be fibrillized in different directions. The plurality of dry electrode active material layers may be stacked in a thickness direction of the dry electrode film 150.

Referring to FIGS. 2A to 3C, for example, a tensile strength L1S1 of the first dry electrode active material layer 100a in the first direction D1 may be different from a tensile strength L1S2 thereof in the second direction D2. A ratio L1 S1/L1 S2 of the tensile strength L1S1 of the first dry electrode active material layer 100a in the first direction D1 to the tensile strength L1S2 of the first dry electrode active material layer 100a in the second direction D2 may be, for example, 1.1 or more, 1.2 or more, 1.3 or more, 1.5 or more, or 2 or more. The ratio L1S1/L1S2 of the tensile strength L1S1 of the first dry electrode active material layer 100a in the first direction D1 to the tensile strength L1S2 of the first dry electrode active material layer 100a in the second direction D2 may be, for example, in a range of about 1.1 to about 100, about 1.2 to about 50, about 1.3 to about 30, about 1.5 to about 20, or about 2 to about 10. The tensile strength L1S1 of the first dry electrode active material layer 100a in the first direction D1 may be, for example, the tensile strength of the first dry electrode active material layer 100a in the machine direction MD. The tensile strength L1S2 of the first dry electrode active material layer 100a in the second direction D2 may be, for example, the tensile strength of the first dry electrode active material layer 100a in the transverse direction TD. The first dry electrode active material layer 100a may have a tensile strength ratio in such a range, and thus the mechanical strength and/or structural stability of the dry electrode film 150 including the first dry electrode active material layer 100a may be further improved.

Referring to FIGS. 2A to 3C, for example, a tensile strength L2S1 of the second dry electrode active material

layer 100b in the first direction D1 may be different from a tensile strength L2S2 thereof in the second direction D2. A ratio L2S1/L2S2 of the tensile strength L2S1 of the second dry electrode active material layer 100b in the first direction D1 to the tensile strength L2S2 of the second dry electrode active material layer 100b in the second direction D2 may be, for example, 0.9 or less, 0.8 or less, 0.7 or less, or 0.5 or less. The ratio L2S1/L2S2 of the tensile strength L2S1 of the second dry electrode active material layer 100b in the first direction D1 to the tensile strength L2S2 of the second dry electrode active material layer 100b in the second direction D2 may be, for example, in a range of about 0.01 to about 0.9, about 0.02 to about 0.8, about 0.03 to about 0.7, about 0.05 to about 0.7, or about 0.1 to about 0.5. The tensile strength L2S1 of the second dry electrode active material layer 100b in the first direction D1 may be, for example, the tensile strength of the second dry electrode active material layer 100b in the transverse direction TD. The tensile strength L2S2 of the second dry electrode active material layer 100b in the second direction D2 may be, for example, the tensile strength of the second dry electrode active material layer 100b in the machine direction MD. The second dry electrode active material layer 100b may have a tensile strength ratio in such a range, and thus the mechanical strength and/or structural stability of the dry electrode film 150 including the second dry electrode active material layer 100b may be further improved.

Referring to FIGS. 2A to 3C, a ratio (FS1-FS2)/(FS1+FS2) of a tensile strength difference (FS1-FS2) between a tensile strength FS1 in the first direction D1 and a tensile strength FS2 in the second direction D2 of the dry electrode film 150 to the tensile strength sum (FS1+FS2) of the tensile strength FS1 in the first direction D1 and the tensile strength FS2 in the second direction D2 of the dry electrode film 150 may be, for example, 0.3 or less, 0.25 or less, 0.2 or less, 0.15 or less, or 0.1 or less. The ratio (FS1-FS2)/(FS1+FS2) of the tensile strength difference (FS1-FS2) between the tensile strength FS1 in the first direction D1 and the tensile strength FS2 in the second direction D2 of the dry electrode film 150 to the tensile strength sum (FS1+FS2) of the tensile strength FS1 in the first direction D1 and the tensile strength FS2 in the second direction D2 of the dry electrode film 150 may be, for example, in a range of about 0.01 to about 0.3, about 0.01 to about 0.25, about 0.01 to about 0.2, about 0.01 to about 0.15, or about 0.01 to about 0.1.

The dry electrode film 150 may have a tensile strength ratio in such a range, and thus the mechanical strength and/or structural stability of the dry electrode film 150 may be further improved. The deterioration of a dry electrode including the dry electrode film 150 due to a change in volume during charging/discharging may be further suppressed or reduced. The cycle characteristics of a lithium battery including such a dry electrode may be further improved.

Referring to FIGS. 2A to 3C, a ratio of a thickness L1T1 of the first dry electrode active material layer 100a to a thickness L2T2 of the second dry electrode active material layer 100b may be, for example, in a range of about 9:1 to about 1:9, about 7:1 to about 1:7, about 5:1 to about 1:5, or about 3:1 to about 1:3. For example, a thickness L1T1 of the first dry electrode material layer 100a may be (substantially) the same as a thickness L2T2 of the second dry electrode active material layer 100b. In embodiments where more than two dry electrode active material layers are provided (e.g. third dry electrode active material layer 100c), thicknesses of the dry electrode material layers may be (substantially) the same as each other. The ratio of the thickness L1T1 of the first dry electrode active material layer 100a to the thickness L2T2 of the second dry electrode active material layer 100b may be in such a range, and thus the mechanical strength and/or structural stability of the dry electrode film 150 may be further improved. The deterioration of a dry electrode including the dry electrode film 150 due to a change in volume during charging/discharging may be further suppressed or reduced. The cycle characteristics of a lithium battery including such a dry electrode may be further improved. If (e.g., when) the thickness L1T1 of the first dry electrode active material layer 100a is greater (e.g., excessively greater) than the thickness L2T2 of the second dry electrode active material layer 100b, then the dry electrode film 150 may substantially correspond to a component including the first dry electrode active material layer 100a, and thus the mechanical strength and/or structural stability of the dry electrode film 150 may be reduced. If (e.g., when) the thickness L1T1 of the first dry electrode active material layer 100a is less (e.g., excessively less) than the thickness L2T2 of the second dry electrode active material layer 100b, then the dry electrode film 150 may substantially correspond to a component including the second dry electrode active material layer 100b, and thus the mechanical strength and/or structural stability of the dry electrode film 150 may be reduced.

The dry electrode film 150 may include a dry electrode active material, and the dry electrode active material may include, for example, a first dry electrode active material and a second dry electrode active material. The first dry electrode active material may be the same or different from the second dry electrode active material. The dry electrode active material will be described in more detail in the part of a dry electrode 300.

The dry electrode film 150 may include a dry binder. The dry binder may include, for example, the first dry binder and the second dry binder. The first dry binder may be the same or different from the second dry binder.

For example, the first dry electrode active material layer 100a may include the first dry binder, and the second dry electrode active material layer 100b may include the second dry binder. The first dry binder and the second dry binder may be, for example, binders that are not impregnated, dissolved, or dispersed in a process solvent during a process of preparing the dry electrode film 150. The first dry binder and the second dry binder may be, for example, binders that do not include a process solvent or is not in contact with a process solvent during a process of preparing the dry electrode film 150. The first dry binder and the second dry binder are fibrillized binders or fibrous binders. The

fibrillized binder or fibrous binder may serve as a matrix for supporting and binding a dry electrode active material and other components included in a dry electrode active material layer. It may be confirmed that the fibrillized binder or fibrous binder has a fibrous form, for example, from a SEM image of an electrode cross section as shown in FIG. 1. The fibrillized binder or fibrous binder may have an aspect ratio of, for example, 10 or more, 20 or more, 50 or more, or 100 or more.

The first dry binder and the second dry binder may each independently include, for example, polytetrafluoroethylene (PTFE), a polyvinylidene fluoride-hexapropylene (PVDF-HFP) copolymer, polyvinylidene fluoride (PVDF), polyvinyl alcohol (PVA), polyacrylonitrile (PAN), carboxymethyl cellulose (CMC), starch, hydroxy propyl cellulose, cellulose, polyvinylpyrrolidone (PVP), polyethylene (PE), polypropylene (PP), ethylene-propylene-diene monomer (EPDM) rubber, sulfonated-EPDM rubber, styrene butadiene rubber (SBR), fluorine-containing rubber, or a combination thereof, but one or more embodiments are not limited thereto. Any binder utilized in preparing a dry electrode may be utilized. The dry binder may include, for example, a fluorine-based binder. The fluorine-based binder may include, for example, PTFE, a PVDF-HFP copolymer, PVDF, or a combination thereof.

A glass transition temperature $T_g$ of the dry binder may be, for example, in a range of about -30 °C to about 150 °C, about 15 °C to about 150 °C, about 15 °C to about 130 °C, about 50 °C to about 130 °C, about 100 °C to about 130 °C, or about 120 °C to about 130 °C. The first dry binder and the second dry binder may each independently have, for example, a glass transition temperature $T_g$ of about -30 °C to about 150 °C, about 15 °C to about 150 °C, about 15 °C to about 130 °C, about 50 °C to about 130 °C, about 100 °C to about 130 °C, or about 120 °C to about 130 °C. A glass transition temperature of PTFE may be, for example, in a range of about 120 °C to about 130 °C. The dry binder may have a glass transition temperature in such a range, and thus the fibrillized binder or fibrous binder may be more easily obtained in a process of preparing a dry electrode. The glass transition temperature of the dry binder may be for example measured by DSC (Differential Scanning Calorimeter), DMA (Dynamic Mechanical Analyzer), TMA (Thermomechanical Analyzer), and/or TGA (Thermogravimetric Analyzer).

The content (e.g., amount) of the dry binder including the first dry binder and the second dry binder may be, for example, in a range of about 0.1 wt% to about 5 wt%, about 0.5 wt% to about 4 wt %, or about 1 wt% to about 3 wt% with respect to the total weight of the dry electrode film 150. The dry electrode film 150 may include the dry binder in such a range so that a binding force of the dry electrode film 150 may be improved and the dry electrode film 150 may maintain a high energy density. The content (e.g., amount) of the first dry binder may be, for example, about 0.1 wt% to about 5 wt%, about 0.5 wt% to about 4 wt%, or about 1 wt% to about 3 wt% with respect to the total weight of the first dry electrode active material layer 100a. The content (e.g., amount) of the second dry binder may be, for example, in a range of about 0.1 wt% to about 5 wt%, about 0.5 wt% to about 4 wt%, or about 1 wt% to about 3 wt% with respect to total weight of the second dry electrode active material layer 100b.

The dry electrode film 150 may further include, for example, a conductive material. The conductive material may be, for example, a dry conductive material. The dry conductive material may be, for example, a conductive material that is not impregnated, dissolved, or dispersed in a process solvent in a process of preparing the dry electrode film 150. The dry conductive material may be, for example, a conductive material that does not include a process solvent or is not in contact with a process solvent during a process of preparing the dry electrode film 150. The dry conductive material may include, for example, a carbon-based conductive material. The carbon-based conductive material may include, for example, a fibrous carbon-based material having an aspect ratio of 10 or more, a particulate carbon-based material having an aspect ratio of 10 or less (e.g. less than 10, or 5 or less), or a combination thereof. The dry conductive material may include, for example, a first dry conductive material disposed in the first dry electrode active material layer 100a and a second conductive material disposed in the second dry electrode active material layer 100b.

The fibrous carbon-based material having an aspect ratio of 10 or more may include, for example, a carbon fiber, carbon nanotubes, carbon nanobelts, and/or the like, but one or more embodiments are not limited thereto. Any material utilized as a carbon-based conductive material in the art may be utilized.

The particulate carbon-based material having an aspect ratio of 10 or less (e.g. less than 10, or 5 or less) may include, for example, Denka black, carbon black, acetylene black, Ketjen black, natural graphite, artificial graphite, and/or the like, but one or more embodiments are not limited thereto. Any material utilized as a carbon-based conductive material in the art may be utilized. The aspect ratio of the particulate carbon-based material may be, for example, in a range of about 1 to about 5, about 1 to about 4, about 1 to about 3, or about 1 to about 2.

The content (e.g., amount) of the dry conductive material included in the dry electrode film 150 may be, for example, in a range of about 0.1 wt% to about 5 wt%, about 0.5 wt% to about 4 wt%, or about 1 wt% to about 3 wt% with respect to the total weight of the dry electrode film 150. The content (e.g., amount) of the first dry conductive material included in the first dry electrode active material layer 100a may be, for example, in a range of about 0.1 wt% to about 5 wt%, about 0.5 wt% to about 4 wt%, or about 1 wt% to about 3 wt% with respect to the total weight of the first dry electrode active material layer 100a. The content (e.g., amount) of the second dry conductive material included in the second dry electrode active material layer 100b may be, for example, in a range of about 0.1 wt% to about 5 wt%, about 0.5 wt% to about 4 wt%, or about 1 wt% to about 3 wt% with respect to the total weight of the second dry electrode

active material layer 100b. The dry electrode film 150 may include the dry conductive material in such a range so that the conductivity of the dry electrode film 150 may be improved and the cycle characteristics of a lithium battery including the dry electrode film 150 may be improved.

The dry electrode film 150 may be free of a residual process solvent (e.g., may exclude a residual process solvent). The dry electrode film 150 may include the dry electrode active material, the dry binder, and the dry conductive material, and a process solvent may not be utilized in a process of preparing the dry electrode film 150 so that the dry electrode film 150 may be free of a residual process solvent (e.g., an intentionally used utilized residual process solvent). The first dry electrode active material layer 100a, the second dry electrode active material layer 100b, and the dry electrode film 150 including the first dry electrode active material layer 100a and the second dry electrode active material layer 100b may be prepared in a dry manner and thus may not include (e.g., may exclude) a process solvent (e.g., an intentionally added process solvent). For example, the dry electrode film 150 may not include (e.g., may exclude) a residual process solvent. An unintended trace amount of solvent may remain in the first dry electrode active material layer 100a, the second dry electrode active material layer 100b, and the dry electrode film 150 including the first dry electrode active material layer 100a and the second dry electrode active material layer 100b, but such a solvent may not be an intentionally added solvent. In some embodiments, the first dry electrode active material layer 100a, the second dry electrode active material layer 100b, and the dry electrode film 150 including the first dry electrode active material layer 100a and the second dry electrode active material layer 100b may be distinguished from a wet electrode active material layer prepared by mixing components and a process solvent and then removing a portion or the entirety of the process solvent through drying. In present disclosure, "not include a or any 'component'" "exclude a or any 'component'", "'component'-free", and/or the like refers to that the "component" not being added, selected or utilized as a component in the composition, but the "component" of less than a suitable amount may still be included due to other impurities and/or external factors.

The dry electrode film 150 may include the first dry electrode active material layer 100a and the second dry electrode active material layer 100b and may further include an interlayer disposed between the first dry electrode active material layer 100a and the second dry electrode active material layer 100b. The first interlayer may further improve a binding force between the first dry electrode active material layer 100a and the second dry electrode active material layer 100b. In some embodiments, the mechanical strength and/or structural stability of the dry electrode film 150 may be further improved. The deterioration of a dry electrode including the dry electrode film 150 due to a change in volume during charging/discharging may be further suppressed or reduced. The cycle characteristics of a lithium battery including such a dry electrode may be further improved. The first interlayer may include, for example, a carbon-based conductive material, a binder, or a combination thereof. The first interlayer may be defined as for a second interlayer to be described.

Referring to FIGS. 5A to 10, a dry electrode 300 according to other embodiments may include a dry electrode active material layer 100, and an electrode current collector 200 disposed on one surface of the dry electrode active material layer 100 or disposed between the one surface and the other surface opposite to the one surface, wherein the dry electrode active material layer 100 includes the previously described dry electrode film 150. The dry electrode 300 may include the dry electrode film 150 having improved mechanical strength and/or structural stability, and thus the deterioration of the dry electrode 300 due to a change in volume during charging/discharging may be suppressed or reduced. The cycle characteristics of a lithium battery including the dry electrode 300 may be improved.

Referring to FIGS. 5A and 5B, the dry electrode 300 may include the electrode current collector 200, and the dry electrode active material layer 100 disposed on one surface or two surfaces of the electrode current collector 200. The dry electrode active material layer 100 may include, for example, a first dry electrode active material layer 100a and a second dry electrode active material layer 100b.

Referring to FIGS. 5C to 5D, the dry electrode 300 may include the electrode current collector 200, and the dry electrode active material layer 100 disposed on one surface or two surfaces of the electrode current collector 200. The dry electrode active material layer 100 may include, for example, the first dry electrode active material layer 100a, the second dry electrode active material layer 100b, and a third dry electrode active material layer 100c.

Referring to FIGS. 6 to 10, in the dry electrode 300, for example, the electrode current collector 200 may be disposed at a portion of one surface of the dry electrode active material layer 100 or only at a portion between two surfaces of the dry electrode active material layer 100. The electrode current collector 200 may be disposed at a portion of one surface of the dry electrode active material layer 100 or at a portion between two surfaces of the dry electrode active material layer 100, and thus a volume occupied by the electrode current collector 200 in an electrode may decrease. In some embodiments, the energy density of a lithium battery including an electrode, which includes the electrode current collector 200 having the decreased volume, may be improved. For example, a lithium battery providing improved output power may be provided.

The dry electrode 300 may include, for example, a first domain DM1 (domain 1) including the dry electrode active material layer 100 and the electrode current collector 200 disposed on one surface or between two surfaces of the dry electrode active material layer 100, and a second domain DM2 (domain 2) which includes the dry electrode active material layer 100 in which the electrode current collector 200 is absent on one surface or between two surfaces

of the dry electrode active material layer 100.

An electrode in which the electrode current collector 200 is disposed at a portion of one surface of the dry electrode active material layer 100 or only at a portion between two surfaces of the dry electrode active material layer 100 may be, for example, a stretchable electrode. The stretchable electrode may be stretched in at least one direction selected from a length direction and a transverse direction of the stretchable electrode. The stretchable electrode may be stretched by, for example, 5 % or more, 10 % or more, 15 % or more, 20 % or more, 30 % or more, 40 % or more, or 50 % or more in the length direction of the stretchable electrode. The stretchable electrode may be stretched by, for example, a range of about 5 % to about 100 %, about 10 % to about 100 %, about 15 % to about 100 %, about 20 % to about 100 %, about 30 % to about 100 %, about 40 % to about 100 %, or about 50 % to about 100 % in the length direction of the stretchable electrode. The stretchable electrode may be stretched by, for example, 5 % or more, 10 % or more, 15 % or more, 20 % or more, 30 % or more, 40 % or more, or 50 % or more in the transverse direction of the stretchable electrode. The stretchable electrode may be stretched by, for example, a range of about 5 % to about 100 %, about 10 % to about 100 %, about 15 % to about 100 %, about 20 % to about 100 %, about 30 % to about 100 %, about 40 % to about 100 %, or about 50 % to about 100 % in the transverse direction of the stretchable electrode. For example, even after being stretched, the stretchable electrode may be restored to its initial length without cracks and/or the like occurring in the stretchable electrode, and even if (e.g., when) such a cycle is repeated a plurality of times, then cracks and/or the like may not occur in the stretchable electrode. The stretchable electrode may include, for example, the electrode current collector 200 only in the first domain and may not include (e.g., may exclude) the electrode current collector 200 in the second domain so that the second domain may be easily stretched. For example, the electrode current collector 200 may be disposed only at a portion of the stretchable electrode so that, even if (e.g., when) a plurality of electrodes are stacked and then wound or bent, then separation of the dry electrode active material layer 100 and the electrode current collector 200 may be minimized or reduced, and one or more suitable types (kinds) of lithium batteries may be easily implemented.

Referring to FIG. 6, the dry electrode 300 may include the dry electrode active material layer 100, wherein the dry electrode active material layer 100 includes the dry electrode active material layer 100 including an electrode active material and a binder, and the electrode current collector 200 partially disposed between two surfaces of the dry electrode active material layer 100. The first domain DM1 may be a domain including the dry electrode active material layer 100 and the electrode current collector 200 disposed between two surfaces of the dry electrode active material layer 100. The first domain DM1 may be a domain including the electrode current collector 200 and the dry electrode active material layer 100 disposed on two surfaces of the electrode current collector 200 in an electrode thickness direction. The second domain DM2 may be a domain which includes the dry electrode active material layer 100 and does not include the electrode current collector 200 disposed between two surfaces of the dry electrode active material layer 100. For example, the second domain DM2 may be the remaining electrode active material layer domain except for the first domain DM1. The first domain DM1 and the second domain DM2 included in the dry electrode 300 may have substantially the same thickness T1.

Referring to FIG. 6, the dry electrode 300 may include the dry electrode active material layer 100, wherein the dry electrode active material layer 100 has a first surface S1 and a second surface S2 opposite to the first surface S1, has a first side surface SS1 connected to ends of the first surface S1 and the second surface S2 in a length direction and a second side surface SS2 opposite to the first side surface SS1, and has a third side surface SS3 connected to ends of the first surface S1 and the second surface S2 in a transverse direction and a fourth side surface SS4 opposite to the third side surface SS3. The first domain DM1 may be a domain which is defined by the first surface S1, the second surface S2, the third side surface SS3, and the fourth side surface SS4 and includes the electrode current collector 200 disposed between the first surface S1 and the second surface S2. The second domain DM2 may be a domain which is defined by the first surface S1, the second surface S2, the third side surface SS3, and the fourth side surface SS4 and in which the electrode current collector 200 is absent between the first surface S1 and the second surface S2. The first domain DM1 and the second domain DM2 included in the dry electrode 300 may have substantially the same thickness T1.

Referring to FIG. 6, the dry electrode active material layer 100 may have a first area A1 defined by a first distance L1 in the length direction and a first distance W1 in the transverse (or width) direction, the electrode current collector 200 may be disposed between the first surface S1 and the second surface S2 and may have a second area A2 defined by a second distance L2 in the length direction and a second distance W2 in the transverse direction, and the second area A2 of the electrode current collector 200 may be 90 % or less of the first area A1 of the dry electrode active material layer 100. For example, the second area A2 of the electrode current collector 200 may be in a range of about 1 % to about 90 %, about 5 % to about 80 %, about 10 % to about 70 %, about 10 % to about 60 %, about 10 % to about 50 %, about 10 % to about 40 %, about 10 % to about 30 %, or about 10 % to about 20 %of the first area A1 of the dry electrode active material layer 100. The area of the electrode current collector 200 in the dry electrode 300 may be smaller than that of the dry electrode active material layer 100, and thus the energy density of a lithium battery adopting the dry electrode 300 may be further improved.

Referring to FIG. 6, the second distance L2 of the electrode current collector 200 in the length direction may

be, for example, 90 % or less, 80 % or less, 70 % or less, 60 % or less, 50 % or less, 40 % or less, 30 % or less, or 20 % or less of the first distance L1 of the dry electrode active material layer 100 in the length direction. The second distance L2 of the electrode current collector 200 in the length direction may be, for example, in a range of about 1 % to about 90 %, about 5 % to about 80 %, about 10 % to about 70 %, about 10 % to about 60 %, about 10 % to about 50 %, about 10 % to about 40 %, about 10 % to about 30 %, or about 10 % to about 20 % of the first distance L1 of the dry electrode active material layer 100 in the length direction. The second distance W2 of the electrode current collector 200 in the transverse direction may be, for example, 100 % or less, 90 % or less, 80 % or less, 70 % or less, 60 % or less, 50 % or less, 40 % or less, 30 % or less, or 20 % or less of the first distance W1 of the dry electrode active material layer 100 in the transverse direction. The second distance W2 of the electrode current collector 200 in the transverse direction may be, for example, in a range of about 1 % to about 100 %, about 5 % to about 90 %, about 10 % to about 80 %, about 10 % to about 70 %, about 10 % to about 60 %, about 10 % to about 50 %, about 10 % to about 40 %, about 10 % to about 30 %, or about 10 % to about 20 % of the first distance W1 of the dry electrode active material layer 100 in the transverse direction. The second distance L2 of the electrode current collector 200 in the length direction may be, for example, 90 % or less or about 50 % of the first distance L1 of the dry electrode active material layer 100 in the length direction, and the second distance W2 of the electrode current collector 200 in the transverse direction may be, for example, 90 % or less or 50 % or less of the first distance W1 of the dry electrode active material layer 100 in the transverse direction. The electrode current collector 200 may have such a size, and thus the energy density of a lithium battery adopting the dry electrode 300 may be further improved.

Referring to FIG. 6, the electrode current collector 200 may be exposed on up to three side surfaces of the first side surface SS1, the second side surface SS2, the third side surface SS3, and the fourth side surface SS4 included in the dry electrode active material layer 100. The electrode current collector 200 may have a smaller area than the dry electrode active material layer 100, and thus the electrode current collector 200 may be exposed on some side surfaces of the side surfaces included in the dry electrode active material layer 100, for example, three side surfaces, two side surfaces, or one side surface. The number of side surfaces of the dry electrode active material layer 100, on which the electrode current collector 200 is exposed, may decrease, and thus a possibility of a short circuit occurring through the side surfaces of the dry electrode active material layer 100 may be reduced, thereby improving the safety of a lithium battery adopting the dry electrode 300.

Referring to FIG. 6, the electrode current collector 200 may further include a tab TB extending to the outside of the dry electrode active material layer 100 through up to two side surfaces selected from the first side surface SS1, the second side surface SS2, the third side surface SS3, and the fourth side surface SS4. For example, the tab TB may extend to the outside of the dry electrode active material layer 100 through the first side surface SS1 and/or the second side surface SS2. In other embodiments, the tab TB may extend to the outside of the dry electrode active material layer 100 through the third side surface SS3 and/or the fourth side surface SS4. The tab TB may extend to the outside of the dry electrode active material layer 100 through one side surface or two opposite side surfaces, and thus a short circuit caused by a plurality of adjacent tabs TB may be prevented or reduced.

Referring to FIGS. 7A to 7F, in the dry electrode 300 according to the present disclosure, the electrode current collector 200 disposed at a portion between two surfaces of the dry electrode active material layer 100 may have one or more suitable shapes and may be disposed at any one of one or more suitable positions in the dry electrode active material layer 100. In FIGS. 7A to 7F, a domain in which the electrode current collector 200 is disposed in the dry electrode active material layer 100 defined by a first side surface SS1, a second side surface SS2, a third side surface SS3, and a fourth side surface SS4 may correspond to the first domain DM1, and a domain in which the electrode current collector 200 is not disposed may correspond to the second domain DM2. The first domain DM1 may be a domain which includes the dry electrode active material layer 100 and includes the electrode current collector 200 disposed on one surface or between two surfaces of the dry electrode active material layer 100. The first domain DM1 may be a domain which includes the electrode current collector 200 and the dry electrode active material layer 100 disposed on one surface or two surfaces of the electrode current collector 200 in an electrode thickness direction. The second domain DM2 may be a domain which includes the dry electrode active material layer 100 and does not include the electrode current collector 200 disposed on one surface or between two surfaces of the dry electrode active material layer 100. The second domain DM2 may be the remaining electrode active material layer domain except for the first domain DM1.

Referring to FIG. 7A, the electrode current collector 200 may be disposed at a portion of the dry electrode active material layer 100 defined by the first side surface SS1, the second side surface SS2, the third side surface SS3, and the fourth side surface SS4. The electrode current collector 200 may include a tab TB exposed on the first side surface SS1 of the dry electrode active material layer 100 and extending to the outside of the dry electrode active material layer 100 through the first side surface SS1. A distance $W_T$ of the tab TB in the transverse direction may be about 100 % of a second distance W2 of the electrode current collector 200 in the transverse direction.

Referring to FIG. 7B, the electrode current collector 200 may be disposed at a portion of the dry electrode active material layer 100 defined by the first side surface SS1, the second side surface SS2, the third side surface SS3, and the fourth side surface SS4. The electrode current collector 200 may include a tab TB exposed on the first side surface

SS1, the second side surface SS2, and the third side surface SS3 of the dry electrode active material layer 100 and extending to the outside of the dry electrode active material layer 100 through the first side surface SS1. A second distance L2 of the electrode current collector 200 in the length direction may be about 100 % of a first distance L1 of the dry electrode active material layer 100 in the length direction. The second distance W2 of the electrode current collector 200 in the transverse direction may be less than about 100 % of a first distance W1 of the dry electrode active material layer 100 in the transverse direction.

Referring to FIG. 7C, the electrode current collector 200 may be disposed at a portion of the dry electrode active material layer 100 defined by the first side surface SS1, the second side surface SS2, the third side surface SS3, and the fourth side surface SS4. The electrode current collector 200 may include a tab TB exposed on the first side surface SS1, the second side surface SS2, and the fourth side surface SS4 of the dry electrode active material layer 100 and extending to the outside of the dry electrode active material layer 100 through the first side surface SS1.

Referring to FIG. 7D, the electrode current collector 200 may be disposed at a portion of the dry electrode active material layer 100 defined by the first side surface SS1, the second side surface SS2, the third side surface SS3, and the fourth side surface SS4. The electrode current collector 200 may include a tab TB exposed on the first side surface SS1 of the dry electrode active material layer 100 and extending to the outside of the dry electrode active material layer 100 through the first side surface SS1. A distance $W_T$ of the tab in the transverse direction may be less than 100 % of a second distance W2 of the electrode current collector 200 in the transverse direction.

Referring to FIGS. 7E, 7F, and 8, a plurality of electrode current collectors 200 may be disposed at portions of the dry electrode active material layer 100 defined by the first side surface SS1, the second side surface SS2, the third side surface SS3, and the fourth side surface SS4. The dry electrode 300 may include the plurality of electrode current collectors 200 disposed to be spaced and/or apart (e.g., spaced apart) from each other in the length direction or transverse direction of the dry electrode active material layer 100. The plurality of electrode current collectors 200 may be spaced from each other by, for example, the same interval or different intervals. The plurality of electrode current collectors 200 may form an angle of 45° or less, 40° or less, 30° or less, 25° or less, 20° or less, 15° or less, 10° or less, or 5° or less together with one surface of the dry electrode active material layer 100, for example, at least one of a first surface S1 and a second surface S2 (facing oppositely away from the first surface S1

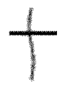

S1

as referenced by the "broken" lines

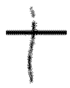

S2

). For example, the plurality of electrode current collectors 200 may form an angle of about 0° together with one surface of the dry electrode active material layer 100, and thus, may be disposed in parallel with the one surface. The plurality of electrode current collectors 200 may be disposed, for example, between the first surface S1 and the second surface S2 of the dry electrode active material layer 100.

Referring to FIG. 8, the dry electrode active material layer 100 may include the first domain DM1 in which the electrode current collector 200 is disposed between the first surface S1 and the second surface S2, and the second domain DM2 in which the electrode current collector 200 is not disposed between the first surface S1 and the second surface S2. A mixture density of the dry electrode active material layer 100 included in the second domain DM2 may be, for example, less than 99 %, 98 % or less, 97 % or less, 96 % or less, 95 % or less, or 90 % or less of a mixture density of the dry electrode active material layer 100 included in the first domain DM1. The mixture density of the dry electrode active material layer 100 included in the second domain DM2 may be, for example, in a range of about 50 % to less than 99 %, about 60 % to about 98 %, about 70 % to about 97 %, about 80 % to about 96 %, or about 90 % to about 95 % of the mixture density of the dry electrode active material layer 100 included in the first domain DM1. The first domain DM1 may include the electrode current collector 200 during rolling of the dry electrode active material layer 100, and thus the mixture density of the dry electrode active material layer 100 included in the first domain DM1 may be higher than the mixture density of the dry electrode active material layer 100 included in the second domain DM2.

If (e.g., when) the dry electrode active material layer 100 included in the first domain DM1 of the dry electrode

300 is measured by utilizing a surface and interfacial measuring analysis system (SAICAS), then a change ratio of a vertical relative binding force $F_{VR}$ according to a depth from a first point spaced and/or apart (e.g., spaced apart) from a surface of the dry electrode active material layer 100 by 5 % in a direction of the electrode current collector 200 to a second point spaced and/or apart (e.g., spaced apart) from a surface of the electrode current collector 200 by 5 %, with respect to the total thickness of the dry electrode active material layer 100, may be, for example, 200 % or less. The change ratio of the vertical relative binding force $F_{VR}$ may be, for example, in a range of about 10 % to about 200 %, about 10 % to about 150 %, or about 10 % to about 100 %. The second point spaced and/or apart (e.g., spaced apart) from the surface of the electrode current collector 200 in the direction of the dry electrode active material layer 100 by 5 % may correspond to a point spaced and/or apart (e.g., spaced apart) from the surface of the dry electrode active material layer 100 in the direction of the electrode current collector 200 by 95 % with respect to the total thickness of the dry electrode active material layer 100. A vertical relative binding force may be calculated from Equation 1. For example, Evaluation Example 3 may be referenced for a SAICAS measurement method.

change ratio of vertical relative binding force $F_{VR}$ = [(maximum value $F_{VR1}$ of vertical relative binding force - minimum value $F_{VR2}$ of vertical relative binding force)/minimum value $F_{VR2}$ of vertical relative binding force)] $\times$ 100 equation 1

In the dry electrode 300, if (e.g., when) measurement is performed by utilizing the SAICAS, then the change ratio of the vertical relative binding force $F_{VR}$ may be 200 % or less, and thus the uniformity of the distribution of components in the dry electrode 300 may be improved. In some embodiments, side reactions and an increase in internal resistance due to substantially non-uniform distribution of the components in the dry electrode active material layer 100 may be suppressed or reduced, thereby improving the reversibility of electrode reactions. The cycle characteristics of a lithium battery may be improved even if (e.g., when) the dry electrode 300 has higher loading. The dry electrode 300 may include the interlayer so that a binding force between the dry electrode active material layer 100 and the electrode current collector 200 may be additionally improved, and the internal resistance of the dry electrode 300 may be reduced. In some embodiments, the cycle characteristics of a lithium battery adopting the dry electrode 300 may be improved.

If (e.g., when) the dry electrode active material layer 100 included in the first domain of the dry electrode 300 is measured by utilizing the SAICAS, then a horizontal binding force ratio of a second horizontal binding force $F_{HA2}$ at a second point spaced and/or apart (e.g., spaced apart) from the surface of the electrode current collector 200 in the direction (for example, a depth direction) of the dry electrode active material layer 100 by 10 % to a first horizontal binding force $F_{HA1}$ at a first point spaced and/or apart (e.g., spaced apart) from the surface of the dry electrode active material layer 100 in the direction of the electrode current collector 200 by 10 %, with respect to the total depth from the surface of the dry electrode active material layer 100 to the surface of the electrode current collector 200, may be, for example, 50 % or more. The horizontal binding force ratio may be, for example, in a range of about 50 % to about 100 %, about 60 % to about 100 %, about 70 % to about 100 %, about 80 % to about 100 %, or about 90 % to about 100 %. The second point spaced and/or apart (e.g., spaced apart) from the surface of the electrode current collector 200 in the direction of the dry electrode active material layer 100 by 10 % may correspond to a point spaced and/or apart (e.g., spaced apart) from the surface of the dry electrode active material layer 100 in the direction of the electrode current collector 200 by 90 % with respect to the total thickness of the dry electrode active material layer 100. The horizontal binding force ratio may be represented, for example, by Equation 2. For example, Evaluation Example 4 may be referenced for a SAICAS measurement method.

horizontal binding force ratio = [second horizontal binding force $F_{H2}$/first horizontal binding force $F_{H1}$] $\times$ 100 equation 2

If (e.g., when) SAICAS measurement is performed, then the horizontal binding force ratio may be 50 % or more, and thus the uniformity of the distribution of components in an electrode may be further improved. The electrode may have a horizontal binding force ratio in such a range, the cycle characteristics of a lithium battery adopting such an electrode may be further improved.

The dry electrode 300 may be, for example, a cathode. The cathode may include a cathode active material layer, and the cathode active material layer may include a cathode active material.

As the cathode active material included in the cathode active material layer, any material may be utilized without limitation as long as the material is a lithium transition metal oxide and is commonly utilized in the art.

For example, the cathode active material may include at least one composite oxide of lithium and a metal selected from cobalt, manganese, nickel, and a combination thereof. A specific example of the cathode active material may include a compound represented by any one of formulas of $Li_aA_{1-b}B'_bD_2$, wherein $0.90 \leq a \leq 1$ and $0 \leq b \leq 0.5$,

$Li_aE_{1-b}B'_bO_{2-c}D_c$, wherein $0.90 \leq a \leq 1$, $0 \leq b \leq 0.5$, and $0 \leq c \leq 0.05$, $LiE_{2-b}B'_bO_{4-c}D_c$, wherein $0 \leq b \leq 0.5$ and $0 \leq c \leq 0.05$, $Li_aNi_{1-b-c}Co_bB'_cD_\alpha$, wherein $0.90 \leq a \leq 1$, $0 \leq b \leq 0.5$, $0 \leq c \leq 0.05$, and $0 < \alpha \leq 2$, $Li_aNi_{1-b-c}Co_bB'_cO_{2-\alpha}F'_\alpha$, wherein $0.90 \leq a \leq 1$, $0 \leq b \leq 0.5$, $0 \leq c \leq 0.05$, and $0 < \alpha < 2$, $Li_aNi_{1-b-c}Co_bB'_cO_2$, wherein $0.90 \leq a \leq 1$, $0 \leq b \leq 0.5$, and $0 \leq c \leq 0.05$, $Li_aNi_{1-b-c}Mn_bB'_cD_\alpha$, wherein $0.90 \leq a \leq 1$, $0 \leq b \leq 0.5$, $0 \leq c \leq 0.05$, and $0 < \alpha \leq 2$, $Li_aNi_{1-b-c}Mn_bB'_cO_{2-\alpha}F'_\alpha$, wherein $0.90 \leq a \leq 1$, $0 \leq b \leq 0.5$, $0 \leq c \leq 0.05$, and $0 < \alpha < 2$, $Li_aNi_{1-b-c}Mn_bB'_cO_2$, wherein $0.90 \leq a \leq 1$, $0 \leq b \leq 0.5$, and $0 \leq c \leq 0.05$, $Li_aNi_bE_cG_dO_2$, wherein $0.90 \leq a \leq 1$, $0 \leq b \leq 0.9$, $0 \leq c \leq 0.5$, and $0.001 \leq d \leq 0.1$, $Li_aNi_bCo_cMn_dG_eO_2$, wherein $0.90 \leq a \leq 1$, $0 \leq b \leq 0.9$, $0 \leq c \leq 0.5$, $0 \leq d \leq 0.5$, and $0.001 \leq e \leq 0.1$, $Li_aNiG_bO_2$, wherein $0.90 \leq a \leq 1$ and $0.001 \leq b \leq 0.1$, $Li_aCoG_bO_2$, wherein $0.90 \leq a \leq 1$ and $0.001 \leq b \leq 0.1$, $Li_aMnG_bO_2$, wherein $0.90 \leq a \leq 1$ and $0.001 \leq b \leq 0.1$, $Li_aMn_2G_bO_4$, wherein $0.90 \leq a \leq 1$ and $0.001 \leq b \leq 0.1$, $QO_2$, $QS_2$, $LiQS_2$, $V_2O_5$, $LiV_2O_5$, $LiI'O_2$, $LiNiVO_4$, $Li_{(3-f)}J_2(PO_4)_3$, wherein $0 \leq f \leq 2$, $Li_{(3-f)}Fe_2(PO_4)_3$, wherein $0 \leq f \leq 2$, and $LiFePO_4$.

In the formulas representing the previously described compounds, A may be Ni, Co, Mn, or a combination thereof, B' may be Al, Ni, Co, Mn, Cr, Fe, Mg, Sr, V, a rare earth element, or a combination thereof, D may be O, F, S, P, or a combination thereof, E may be Co, Mn, or a combination thereof, F' may be F, S, P, or a combination thereof, G may be Al, Cr, Mn, Fe, Mg, La, Ce, Sr, V, or a combination thereof, Q may be Ti, Mo, Mn, or a combination thereof, I' may be Cr, V, Fe, Sc, Y, or a combination thereof, and J may be V, Cr, Mn, Co, Ni, Cu, or a combination thereof.

A compound in which a coating layer is added to a surface of the above compound may also be utilized, and a mixture of the above compound and a compound in which a coating layer is added may also be utilized. The coating layer added to the surface of the above compound may include, for example, a coating element compound of an oxide or a hydroxide of a coating element, an oxyhydroxide of a coating element, an oxycarbonate of a coating element, or a hydroxycarbonate of a coating element. A compound constituting the coating layer may be amorphous or crystalline. The coating element included in the coating layer may include Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. A coating method may include, for example, spray coating, dipping, and/or the like. A specific coating method may be well understood by those skilled in the art, and thus a detailed description thereof will not be provided.

The cathode active material may be, for example, a composite cathode active material.

The composite active material layer may include, for example, a core including a lithium transition metal oxide, and a shell disposed along a surface of the core, wherein the shell includes at least one type or kind of a first metal oxide represented by a formula of $M_aO_b$, wherein $0<a \leq 3$, $0<b<4$, and if (e.g., when) a is 1, 2, or 3, then b is not an integer, and graphene, the first metal oxide is disposed in a graphene matrix, M is at least one metal selected from Groups 2 to 13, Group 15, and Group 16 of the periodic table of elements), the lithium transition metal oxide includes nickel, and a nickel content (e.g., amount) is 80 mol% or more with respect to the total number of moles of a transition metal. The shell including the first metal oxide and graphene may be disposed on the core of the composite cathode active material.

Graphene according to a related art may be difficult to uniformly apply on the core due to agglomeration. In other embodiments, in the composite cathode active material, a composite including a plurality of first metal oxides disposed in the graphene matrix may be utilized so that aggregation of graphene may be prevented or reduced, and also the substantially uniform shell may be disposed on the core. In some embodiments, contact between the core and an electrolyte may be effectively blocked, thereby preventing or reducing side reactions due to the contact between the core and the electrolyte. For example, reduction of nickel ions ($Ni^{3+}$->$Ni^{2+}$) and cation mixing due to an electrolyte may be suppressed or reduced, thereby suppressing the formation of a resistive layer having a NiO phase and/or the like. In some embodiments, elution of nickel ions may also be suppressed or reduced. The shell including graphene may have flexibility and thus may easily accommodate a change in volume of the composite cathode active material during charging/discharging, thereby suppressing cracks from occurring inside the composite cathode active material. Graphene may have high electronic conductivity, and thus interfacial resistance between the composite cathode active material and an electrolyte may be reduced. In some embodiments, despite the introduction of the shell including graphene, the internal resistance of a lithium battery may be maintained or reduced. In other embodiments, the first metal oxide may have withstand voltage, and thus the deterioration of the lithium transition metal oxide included in the core may be prevented or reduced during charging/discharging at a high voltage. For example, the cycle characteristics and high-temperature stability of a lithium battery including the composite cathode active material may be improved. The shell may include, for example, at least one type or kind of first metal oxide or two or more types (kinds) of different first metal oxides. In some embodiments, while the composite cathode active material includes the lithium transition metal oxide at a high nickel content (e.g., amount) of 80 mol% or more with respect to the total number of moles of the transition metal, the shell including the first metal oxide and graphene may be disposed on the core, thereby providing high discharge capacity and cycle characteristics at the same time. For example, the composite cathode active material having a high nickel content (e.g., amount) of 80 mol% or more may provide improved capacity while still providing excellent or suitable lifespan characteristics as compared with a composite cathode active material having a relatively low nickel content (e.g., amount). A metal included in the first metal oxide may include, for example, at least one selected from Al, Nb, Mg, Sc, Ti, Zr, V, W, Mn, Fe, Co, Pd, Cu, Ag, Zn, Sb, and Se.

The first metal oxide may include, for example, at least one selected from $Al_2O_z$, wherein $0<z<3$, $NbO_x$, wherein

$0<x<2.5$, $MgO_x$, wherein $0<x<1$, $Sc_2O_z$, wherein $0<z<3$, $TiO_y$, wherein $0<y<2$, $ZrO_y$, wherein $0<y<2$, $V_2O_z$, wherein $0<z<3$, $WO_y$, wherein $0<y<2$, $MnO_y$, wherein $0<y<2$, $Fe_2O_z$, wherein $0<z<3$, $Co_3O_w$, wherein $0<w<4$, $PdO_x$, wherein $0<x<1$, $CuO_x$, wherein $0<x<1$, $AgO_x$, wherein $0<x<1$, $ZnO_x$, wherein $0<x<1$, $Sb_2O_z$, wherein $0<z<3$, and $SeO_y$, wherein $0<y<2$. The first metal oxide may be disposed in the graphene matrix, thereby improving the uniformity of the shell disposed on the core and further improving the withstand voltage of the composite cathode active material. For example, the shell may include $Al_2O_x$, wherein $0<x<3$. The shell may further include at least one type or kind of a second metal oxide represented by formula of $M_aO_c$, wherein $0<a\leq3$, $0<c\leq4$, and if (e.g., when) a is 1, 2, or 3, then c is an integer. M may be at least one metal selected from Groups 2 to 13, Group 15, and Group 16 of the periodic table of elements. For example, the second metal oxide may include the same metal as the first metal oxide, and c/a that is a ratio of c to a of the second metal oxide may have a greater value than b/a that is a ratio of b to a of the first metal oxide. For example, c/a > b/a. The second metal oxide may be selected from, for example, $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide may be a reduction product of the second metal oxide. A portion or the entirety of the second metal oxide may be reduced to obtain the first metal oxide. In some embodiments, the first metal oxide has a lower oxygen content (e.g., amount) and a lower metal oxidation number than the second metal oxide. For example, the shell may include $Al_2O_x$ that is the first metal oxide and $Al_2O_3$ that is the second metal oxide, wherein $0<x<3$. In the composite cathode active material, for example, the graphene included in the shell may be chemically bound to a transition metal of the lithium transition metal oxide included in the core through a chemical bond. A carbon atom © of the graphene included in the shell may be chemically bound to a transition metal (Me) of the lithium transition metal oxide through a C-O-Me bond (for example, a C-O-Ni bond), for example, utilizing an oxygen atom. The graphene included in the shell may be chemically bound to the lithium transition metal oxide included in the core through a chemical bond, thereby allowing the core and the shell to be a composite. In some embodiments, the composite cathode active material may be distinguished from a simple physical mixture of graphene and a lithium transition metal oxide. For example, the first metal oxide included in the shell may also be chemically bound to the graphene through a chemical bond. In some embodiments, the chemical bond may be, for example, a covalent bond or an ionic bond. The covalent bond may be, for example, a bond including at least one selected from an ester group, an ether group, a carbonyl group, an amide group, a carbonate anhydride group, and an acid anhydride group. The ionic bond may be, for example, a bond including a carboxylic acid ion, an ammonium ion, an acyl cation group, and/or the like. The thickness of the shell may be, for example, in a range of about 1 nm to about 5 μm, about 1 nm to about 1 μm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. The shell may have a thickness in such a range, an increase in internal resistance of a lithium battery including the composite cathode active material may be suppressed or reduced.

The content (e.g., amount) of a composite included in the composite cathode active material may be 3 wt% or less, 2 wt% or less, 1 wt% or less, 0.5 wt% or less, or 0.2 wt% or less of the total weight of the composite cathode active material. The content (e.g., amount) of the composite may be in a range of about 0.01 wt% to about 3 wt%, about 0.01 wt% to about 1 wt%, about 0.01 wt% to about 0.7 wt%, about 0.01 wt% to about 0.6 wt%, about 0.1 wt% to about 0.5 wt%, about 0.01 wt% to about 0.2 wt%, about 0.01 wt% to about 0.1 wt%, or about 0.03 wt% to about 0.07 wt% of the total weight of the composite cathode active material. The composite cathode active material may include the composite in such a range, the cycle characteristics of a lithium battery including the composite cathode active material may be further improved. An average particle diameter of at least one selected from among the first metal oxide and the second metal oxide included in the composite may be in a range of about 1 nm to about 1 μm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. The first metal oxide and/or the second metal oxide may have a particle diameter in such a nanorange and thus may be more uniformly distributed in the graphene matrix of the composite. In some embodiments, such a composite may be uniformly applied on the core without agglomeration to form the shell. For example, the first metal oxide and/or the second metal oxide may have a particle diameter in such a range and thus may be more uniformly disposed on the core. In some embodiments, the first metal oxide and/or the second metal oxide may be uniformly disposed on the core, thereby more effectively exhibiting withstand voltage characteristics. The average particle diameters of the first metal oxide and the second metal oxide may be measured, for example, through a measurement device utilizing a laser diffraction method or a dynamic light scattering method. For example, an average particle diameter may be measured by utilizing a laser scattering particle size distribution meter (for example, LA-920 manufactured by Horiba Corporation) and may be a value of a median diameter (D50) if (e.g., when) metal oxide particles are accumulated to 50 % from the smaller particle in the volume conversion (i.e., the value of the particle size corresponding to 50% from the smallest particle when the total number of particles is 100% in the distribution curve accumulated in the order of the smallest particle size to the largest particle size).

The core included in the composite cathode active material may include, for example, a lithium transition metal

oxide represented by a formula selected from Formulas 1 to 8:

Formula 1 $Li_aCO_xM_yO_{2-b}A_b$

in Formula 1, 1.0≤a≤1.2, 0≤b≤0.2, 0.9≤x≤1, 0≤y≤0.1, x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A may be F, S, Cl, Br, or a combination thereof,

Formula 2 $Li_aNi_xCo_yM_zO_{2-b}A_b$

in Formula 2, 1.0≤a≤1.2, 0≤b≤0.2, 0.8≤x<1, 0≤y≤0.3, 0<z≤0.3, x+y+z=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A may be F, S, Cl, Br, or a combination thereof,

Formula 3 $LiNi_xCo_yMn_zO_2$

Formula 4 $LiNi_xCo_yAl_zO_2$

in Formula 3 and Formula 4, 0.8≤x≤0.95, 0≤y≤0.2, 0<z≤0.2, and x+y+z=1,

Formula 5 $LiNi_xCo_yMn_zAl_wO_2$

in Formula 5, 0.8≤x≤0.95, 0≤y≤0.2, 0<z≤0.2, 0<w≤0.2, and x+y+z+w=1,

Formula 6 $Li_aNi_xMn_yM'_zO_{2-b}A_b$

in Formula 6, 1.0≤a≤1.2, 0≤b≤0.2, 0<x≤0.3, 0.5≤y<1, 0<z≤0.3, x+y+z=1, M' may be cobalt (Co), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminium (Al), boron (B), or a combination thereof, and A may be F, S, Cl, Br, or a combination thereof,

Formula 7 $Li_aM1_xM2_yPO_{4-b}X_b$

in Formula 7, 0.90≤a≤1.1, 0≤x≤0.9, 0≤y≤0.5, 0.9<x+y<1.1, 0≤b≤2, M1 may be chromium (Cr), manganese (Mn), iron (Fe), cobalt (Co), nickel (Ni), copper (Cu), zirconium (Zr), or a combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X may be O, F, S, P, or a combination thereof, and

Formula 8 $Li_aM3_zPO_4$

in Formula 8, 0.90≤a≤1.1, 0.9≤z≤1.1, and M3 may be chromium (Cr), manganese (Mn), iron (Fe), cobalt (Co), nickel (Ni), copper (Cu), zirconium (Zr), or a combination thereof.
The content (e.g., amount) of the cathode active material included in the cathode active material layer may be, for example, in a range of about 80 wt% to about 98 wt% or about 90 wt% to about 98 wt% with respect to the total weight of the cathode active material layer.
The dry electrode 300 may be, for example, an anode. The anode may include an anode active material layer, and the anode active material layer may include an anode active material.
Any material utilized as an anode active material of a lithium battery in the art may be utilized as the anode active material. For example, the anode active material may include at least one selected from a lithium metal, a metal alloyable with lithium, a transition metal oxide, a non-transition metal oxide, and a carbon-based material. Examples of the metal alloyable with lithium may include Si, Sn, Al, Ge, Pb, Bi, Sb, a Si-Y alloy, wherein Y is an alkali metal, an alkali earth metal, a Group 13 element, a Group 14 element, a transition metal, a rare earth element, or a combination thereof and is not Si, a Sn-Y alloy, wherein Y is an alkali metal, an alkali earth metal, a Group 13 element, a Group 14 element, a transition metal, a rare earth element, or a combination thereof and is not Sn, and/or the like. The element Y may include, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru,

Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te, or a combination thereof). The transition metal oxide may be, for example, lithium titanium oxide, vanadium oxide, lithium vanadium oxide, and/or the like. The non-transition metal oxide may be, for example, $SnO_2$, $SiO_x$, wherein $0<x\leq2$, and/or the like. The carbon-based material may be, for example, crystalline carbon, amorphous carbon, or a mixture thereof. The crystalline carbon may be, for example, graphite such as non-shaped, plate-shaped, flake-shaped, spherical, or fibrous natural graphite or artificial graphite. The amorphous carbon may be, for example, soft carbon (low-temperature fired carbon) or hard carbon, mesophase pitch carbide, fired coke, and/or the like.

The content (e.g., amount) of the anode active material included in the anode active material layer may be, for example, in a range of about 80 wt% to about 98 wt% or about 90 wt% to about 98 wt% with respect to the total weight of the anode active material layer.

Any material, which does not react with lithium, for example, any material, which does not form an alloy or compound with lithium and has conductivity (e.g., is a conductor), may be utilized as a material constituting the electrode current collector 200. A metal substrate may include, for example, a metal or alloy. The metal substrate may be made of, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof. The electrode current collector 200 may have a form of one selected from, for example, a sheet, foil, a film, a plate, a porous body, a mesoporous body, a through-hole-containing body, a polygonal ring body, a mesh body, a foam body, and a nonwoven body, but one or more embodiments are not necessarily limited to the form. Any form utilized in the art may be utilized.

The electrode current collector 200 may have a thickness that is reduced as compared with an electrode current collector 200 included in an electrode of a related art. In some embodiments, an electrode according to the present disclosure may include, for example, a thin film current collector, and thus may be distinguished from an electrode of a related art including a thick film current collector. An electrode according to embodiments may adopt a thin film current collector having a reduced thickness, and thus the thickness of a dry electrode active material layer in the electrode including the thin film current collector may relatively increase. In some embodiments, the energy density of a lithium battery adopting such an electrode may increase. The thickness of the electrode current collector 200 including a metal substrate and an interlayer may be, for example, less than 15 μm, 14.5 μm or less, or 14 μm or less. The thickness of the electrode current collector 200 may be, for example, in a range of about 0.1 μm to less than 15 μm, about 1 μm to about 14.5 μm, about 2 μm to about 14 μm, about 3 μm to about 14 μm, about 5 μm to about 14 μm, or about 10 μm to about 14 μm.

Any material, which does not react with lithium, for example, any material, which does not form an alloy or compound with lithium and has conductivity (e.g., is a conductor), may be utilized as a material constituting the electrode current collector 200. The electrode current collector 200 may include, for example, a metal or an alloy. The electrode current collector 200 may be made of, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof.

The electrode current collector 200 may have a form of one selected from, for example, a sheet, foil, a film, a plate, a porous body, a mesoporous body, a through-hole-containing body, a polygonal ring body, a mesh body, a foam body, and a nonwoven body, but one or more embodiments are not necessarily limited to the form. Any form utilized in the art may be utilized.

In some embodiments, the electrode current collector 200 may include, for example, a base film and a metal layer disposed on one surface or two surfaces of the base film. The electrode current collector 200 may include a substrate, and the substrate may have a structure including, for example, a base film and a metal layer disposed on one surface or two surfaces of the base film. The previously described interlayer may be additionally disposed on the metal layer. The base film may include, for example, a polymer. The polymer may be, for example, a thermoplastic polymer. The polymer may include, for example, polyethylene terephthalate (PET), PE, PP, polybutylene terephthalate (PBT), polyimide (PI), or a combination thereof. The base film may include the thermoplastic polymer, and thus during a short circuit, the base film may be melted to suppress or reduce a rapid increase in current. The base film may be, for example, an insulator. The metal layer may include, for example, copper (Cu), stainless steel, titanium (Ti), iron (Fe), cobalt (Co), nickel (Ni), or an alloy thereof. The metal layer may serve as an electrochemical fuse to be cut if (e.g., when) an overcurrent occurs, thereby performing a short circuit prevention function. The thickness of the metal layer may be adjusted to adjust a limit current and a maximum current. The metal layer may be plated or deposited on the base film. If (e.g., when) the thickness of the metal layer decreases, then a limit current and/or a maximum current of the electrode current collector 200 may decrease, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal chip may be added between the metal layer and the lead tab. The metal

chip may be a flake made of the same material as a metal of the metal layer. The metal chip may be, for example, metal foil or a metal mesh. The metal chip may be, for example, aluminium foil, copper foil, or SUS foil. The metal chip may be disposed on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. The thickness of the base film may be, for example, in a range of about 1 μm to 50 μm, about 1.5 μm to about 50 μm, about 1.5 μm to about 40 μm, or about 1 μm to about 30 μm. The base film may have a thickness in such a range, and thus the weight of an electrode assembly may be more effectively reduced. A melting point of the base film may be, for example, in a range of about 100 °C to about 300 °C, about 100 °C to about 250 °C, or about 100 °C to about 200 °C. The base film may have a melting point in such a range, and thus the base film may be melted and easily coupled to the lead tab in a process of welding the lead tab. In order to improve adhesive strength between the base film and the metal layer, surface treatment such as corona treatment may be performed on the base film. The thickness of the metal layer may be, for example, in a range of about 0.01 μm to about 3 μm, about 0.1 μm to about 3 μm, about 0.1 μm to about 2 μm, or about 0.1 μm to about 1 μm. The metal layer may have a thickness in such a range, and thus the stability of an electrode assembly may be secured while conductivity is maintained. The thickness of the metal chip may be, for example, in a range of about 2 μm to about 10 μm, about 2 μm to about 7 μm, or about 4 μm to about 6 μm. The metal chip may have a thickness in such a range, and thus the metal layer and the lead tab may be more easily connected. The electrode current collector 200 may have such a structure, and thus the weight of an electrode may be reduced, thereby improving an energy density. The electrode current collector 200 may be, for example, a cathode current collector. The electrode current collector 200 may be, for example, an anode current collector.

The dry electrode 300 may further include the second interlayer disposed between the dry electrode active material layer 100 and the electrode current collector 200.

The second interlayer may be directly disposed, for example, on one surface or two surfaces of the electrode current collector 200. In some embodiments, other layers may not be disposed between the electrode current collector 200 and the second interlayer. The second interlayer may be directly disposed on one surface or two surfaces of the electrode current collector 200, thereby further improving a binding force between the substrate and the dry electrode active material layer 100.

The thickness of the second interlayer may be, for example, 30 % or less of the thickness of the electrode current collector 200. The thickness of the second interlayer may be, for example, in a range of about 0.01 % to about 30 %, about 0.1 % to about 30 %, about 0.5 % to about 30 %, about 1 % to about 25 %, about 1 % to about 20%, about 1 % to about 15 %, about 1 % to about 10 %, about 1 % to about 5 %, or about 1 % to about 3 % of the thickness of the electrode current collector 200. The thickness of the second interlayer may be, for example, in a range of about 10 nm to about 5 μm, about 50 nm to about 5 μm, about 200 nm to about 4 μm, about 500 nm to about 3 μm, about 500 nm to about 2 μm, about 500 nm to about 1.5 μm, or about 700 nm to about 1.3 μm. The second interlayer may have a thickness in such a range so that a binding force between the electrode current collector 200 and the dry electrode active material layer 100 may be further improved, and an increase in interfacial resistance may be suppressed or reduced.

The second interlayer may include, for example, a binder. The second interlayer may include the binder so that a binding force between the electrode current collector 200 and the dry electrode active material layer 100 may be further improved. The binder included in the second interlayer may be, for example, a conductive binder or a non-conductive binder.

The conductive binder may include, for example, an ion-conductive binder and/or an electron-conductive binder. A binder having both (e.g., simultaneously) ionic conductivity and electronic conductivity may belong to an ion-conductive binder and may also belong to an electron-conductive binder.

Examples of the ion-conductive binder may include poly(styrene sulfonate) (PSS), a PVDF-HFP copolymer, polyvinyl fluoride (PVF), PVDF, poly(methylmethacrylate) (PMMA), polyethylene oxide (PEO), polyethylene glycol (PEG), PAN, PTFE, polyethylenedioxythiophene (PEDOT), polypyrrole (PPY), polyaniline, and polyacetylene. The ion-conductive binder may include a polar functional group. Examples of the ion-conductive binder including a polar functional group may include Nafion, Aquivion, Flemion, Gore, Aciplex, Morgane ADP, sulfonated poly(ether ketone) (SPEEK), sulfonated poly(arylene ether ketone sulfone) (SPAEKKS), sulfonated poly(sulfonated poly(aryl ether ketone) (SPAEK), poly[bis(benzimidazobenzisoquinolinones)] (SPBIBI), PSS, lithium 9,10-diphenylanthracene-2-sulfonate ($DPASLi^+$), and/or the like. Examples of the electron-conductive binder may include polyacetylene, polythiophene, polypyrrole, poly(p-phenylene), poly(phenylenevinylene), poly(phenylenesulfide), polyaniline, and/or the like. The second interlayer may be, for example, a conductive layer including a conductive polymer.

The binder included in the second interlayer may be selected from, for example, binders included in the dry electrode active material layer 100. The second interlayer layer may include the same binder as the dry electrode active material layer 100. The binder included in the second interlayer may be, for example, a fluorine-based binder. The fluorine-based binder included in the second interlayer may include, for example, PVDF. The second interlayer may be

disposed on the electrode current collector 200, for example, in a dry type or kind or wet type or kind. The second interlayer layer may be, for example, a binding layer including a binder.

The second interlayer may additionally include, for example, a carbon-based conductive material. The carbon-based conductive material included in the second interlayer may be selected from carbon-based conductive materials included in the dry electrode active material layer 100. The second interlayer may include the same carbon-based conductive material as the dry electrode active material layer 100. The second interlayer may include the carbon-based conductive material and thus may be, for example, a conductive layer. The second interlayer may be, for example, a conductive layer including a binder and a carbon-based conductive material.

The second interlayer may be disposed on the electrode current collector 200 in a dry type or kind, for example, through chemical vapor deposition (CVD), physical vapor deposition (PVD), and/or the like. The second interlayer may be disposed on the electrode current collector 200 in a wet type or kind, for example, through spin coating, dip coating, and/or the like. The second interlayer may be disposed on the electrode current collector 200 by, for example, depositing a carbon-based conductive material on the electrode current collector 200 through deposition. The second interlayer applied through dry coating may be made of a carbon-based conductive material and may not include (e.g., may exclude) a binder. In some embodiments, the second interlayer may be disposed on the electrode current collector 200 by, for example, applying a composition including a carbon-based conductive material, a binder, and a solvent on a surface of the electrode current collector 200 and drying the composition. The second interlayer may have a single-layer structure or a multi-layer structure including a plurality of layers.

According to other embodiments, a lithium battery may include a cathode, an anode, and an electrolyte disposed between the cathode and the anode, wherein at least one of the cathode and the anode is a dry electrode 300, and the dry electrode 300 includes the dry electrode film 150 described above.

The lithium battery may include at least one of the cathode and the anode, each including the previously described dry electrode film 150, and thus the cycle characteristics of the lithium battery may be improved.

Referring to FIGS. 9 to 11, a lithium battery 1000 may include a cathode 300a, an anode 300b, and an electrolyte 400 disposed between the cathode 300a and the anode 300b, wherein at least one of the cathode 300a and the anode 300b is the previously described electrode. The lithium battery 1000 may include an electrode assembly 500.

Referring to FIG. 9, the electrode assembly 500 may include a plurality of cathodes 300a stacked in a thickness direction, a plurality of anodes 300b disposed between the plurality of cathodes 300a, and a plurality of electrolytes 400 disposed between the plurality of cathodes 300a and the plurality of anodes 300b. The cathode 300a may include a cathode current collector 200a, the cathode current collector 200a may include a cathode tab Ta extending to the outside of a cathode active material layer 101 through one side surface SS5 of the electrode assembly 500, the anode 300b may include an anode current collector 200b, and the anode current collector 200b may include an anode tab Tb extending to the outside of an anode active material layer 102 through the other side surface SS6 of the electrode assembly 500 opposite to the one side surface SS5 of the electrode assembly 500. The lithium battery 1000 may include the electrode assembly 500. The cathode tab Ta and the anode tab Tb may be disposed on side surfaces opposite to each other, and thus a possibility of a short circuit between the cathode tab Ta and the anode tab Tb may be reduced.

Referring to FIG. 10, the electrode assembly 500 may include a plurality of cathodes 300a stacked in a thickness direction, a plurality of anodes 300b disposed between the plurality of cathodes 300a, and a plurality of electrolytes 400 disposed between the plurality of cathodes 300a and the plurality of anodes 300b. The cathode 300a may include a cathode current collector 200a, the cathode current collector 200a may include a cathode tab Ta extending to the outside of a cathode active material layer 101 through one side surface SS5 of the electrode assembly 500, the anode 300b may include an anode current collector 200b, and the anode current collector 200b may include an anode tab Tb extending to the outside of an anode active material layer 102 through the same one side surface SS5 of the electrode assembly 500. The lithium battery 1000 may include the electrode assembly 500.

Referring to FIG. 11, on one side surface SS5, a plurality of cathode tabs Ta may be disposed to be spaced and/or apart (e.g., spaced apart) from each other by certain intervals in a thickness direction, and a plurality of anode tabs Tb may be disposed to be spaced and/or apart (e.g., spaced apart) from each other by certain intervals in the thickness direction. The plurality of cathode tabs Ta may be disposed adjacent to one side surface SS7 of the electrode assembly 500 in a transverse direction, and the plurality of anode tabs Tb may be disposed adjacent to the other side surface SS8 of the electrode assembly 500 in the transverse direction. FIG. 11 is a front view of one side surface SS5 of FIG. 9. The lithium battery 1000 may include the electrode assembly 500.

Although the cathode tab Ta and the anode tab Tb are disposed on the same side surface, the cathode tab Ta and the anode tab Tb may be disposed to be spaced and/or apart (e.g., spaced apart) from each other in the transverse direction, and thus a possibility of a short circuit between the cathode tab Ta and the anode tab Tb may decrease.

The lithium battery 1000 may include, for example, a lithium primary battery or a lithium secondary battery. The lithium battery 1000 may include, for example, a lithium ion battery, a lithium solid battery, and a lithium air battery.

The electrolyte 400 included in the lithium battery 1000 may be, for example, a liquid electrolyte or a solid electrolyte. The solid electrolyte may be, for example, an oxide-based solid electrolyte or a sulfide-based solid electrolyte.

A method of preparing a dry electrode film 150 according to embodiments may be provided.

The method of preparing the dry electrode film 150 may include providing a first dry electrode active material layer 100a including a first dry electrode active material and a fibrillized first dry binder, providing a second dry electrode active material layer 100b including a second dry electrode active material and a fibrillized second dry binder, arranging the first dry electrode active material layer 100a such that the fibrillized first dry binder is disposed in a first direction D1, and arranging the second dry electrode active material layer 100b on the first dry electrode active material layer 100a such that the fibrillized second dry binder is disposed in a second direction D2 that is distinguished from the first direction D1. The second dry electrode active material layer 100b may be disposed on the first dry electrode active material layer 100a such that a difference between the first direction D1 and the second direction D2 is, for example, in a range of 45° to about 135°, about 55° to about 125°, about 65° to about 115°, about 75° to about 105°, or about 85° to about 95°. The second dry electrode active material layer 100b may be disposed on the first dry electrode active material layer 100a such that the first direction D1 and the second direction D2 form, for example, an orthogonal direction. The dry electrode film 150 prepared in this way may include, for example, cross-directional fibrillized dry binders that are fibrillized in different directions so that the mechanical strength of the dry electrode film 150 may be further improved and the structural stability thereof may be further improved. The deterioration of a dry electrode 300 including the dry electrode film 150 due to a change in volume during charging/discharging may be further suppressed or reduced. The cycle characteristics of a lithium battery including the dry electrode 300 may be further improved.

The providing of the first dry electrode active material layer 100a including the first dry electrode active material and the fibrillized first dry binder may include, for example, dry-mixing the first dry electrode active material and the first dry binder to prepare a first dry mixture, and forming the first dry electrode active material layer 100a, which includes the fibrillized first dry binder, from the first dry mixture.

First, the first dry electrode active material and the first dry binder may be dry-mixed to prepare the first dry mixture. Detailed contents of the first dry electrode active material may be as defined in the part of the dry electrode film 150. The dry-mixing may refer to mixing that is performed without utilizing a process solvent. A process solvent may be, for example, a solvent utilized in preparing an electrode slurry. The process solvent may be, for example, water, N-methylpyrrolidone (NMP), and/or the like, but is not limited thereto. A material is not limited as long as the material is a process solvent utilized in preparing an electrode slurry. The dry-mixing may be performed, for example, at a temperature of about 25 °C to about 65 °C by utilizing a stirrer. The dry-mixing may be performed at a rotational speed of about 10 rpm to about 10,000 rpm or about 100 rpm to about 1,000 rpm by utilizing the stirrer. The dry-mixing may be performed for about 1 minute to about 200 minutes or about 1 minute to about 150 minutes by utilizing the stirrer.

The first dry mixture may further include a first dry conductive material. The first dry mixture may further include the first dry conductive material, and thus the internal resistance of the first dry electrode active material layer 100a may decrease.

The dry-mixing may be performed, for example, once. The first dry electrode active material, the first dry conductive material, and the first dry binder may be dry-mixed to prepare a dry mixture including a fibrillated dry binder. The dry-mixing may be performed, for example, at a rotational speed of about 2,000 rpm or more at a temperature of about -35 °C to about 65 °C for 1 minute or more. Through primary dry-mixing, the first dry electrode active material, the first dry conductive material, and the first dry binder may be uniformly mixed, and the dry mixture may include the fibrillated dry binder. The temperature during the dry-mixing may be, for example, in a range of about -30 °C to about 65 °C, about -20 °C to about 65 °C, about -10 °C to about 65 °C, about 0 °C to about 65 °C, about 10 °C to about 65 °C, about 20 °C to about 65 °C, about 25 °C to about 60 °C, about 25 °C to about 50 °C, or about 25 °C to about 40 °C. The rotational speed during the dry-mixing may be, for example, in a range of about 2,000 rpm to about 20,000 rpm, about 3,000 rpm to about 15,000 rpm, about 4,000 rpm to about 15,000 rpm, about 7,000 rpm to about 15,000 rpm, about 9,000 rpm to about 15,000 rpm, about 11,000 rpm to about 15,000 rpm, or about 13,000 rpm to about 15,000 rpm. A time for which the dry-mixing is performed may be, for example, in a range of about 1 minute to about 120 minutes, about 5 minutes to about 60 minutes, about 10 minutes to about 30 minutes, or about 10 minutes to about 20 minutes. In other embodiments, the dry-mixing may be performed, for example, twice or more. First, the first dry electrode active material, the first dry conductive material, and the first dry binder may be primarily dry-mixed to prepare the first dry mixture as an intermediate dry mixture. The primary dry-mixing may be performed, for example, at a rotational speed of about 2,000 rpm or less at a temperature of about -35 °C to about 65 °C for 15 minutes or less. The primary dry-mixing may be performed, for example, at a rotational speed of about 500 rpm to about 2,000 rpm at a temperature of about - 35 °C to about 65 °C for about 5 minutes to about 15 minutes. The intermediate dry mixture in which the first dry electrode active material, the first dry conductive material, and the first dry binder are uniformly mixed may be prepared through the primary dry-mixing. Next, the intermediate dry mixture including the first dry electrode active material, the first dry conductive material, and the first dry binder may be secondarily dry-mixed to prepare the first dry mixture. The secondary dry-mixing may be performed, for example, at a rotational speed of about 2,000 rpm or more at a temperature of about -30 °C to about 65 °C for 5 minutes or more. The secondary dry-mixing may be performed, for example, at a rotational speed of about 2,000 rpm to about 20,000 rpm at a temperature of about 25 °C to about 65

°C for about 5 minutes to about 60 minutes. The first dry mixture including a fibrillated dry binder may be obtained through the secondary dry-mixing.

The stirrer may be, for example, a kneader. The stirrer may include, for example, a chamber, at least one rotating shaft disposed inside the chamber to rotate, and a blade rotatably coupled to the rotating shaft and disposed in a length direction of the rotating shaft. The blade may be, for example, at least one selected from a ribbon blade, a sigma blade, a Z blade, a dispersion blade, and a screw blade. By including the blade, without a solvent, an electrode active material, a dry conductive material, and a dry binder may be effectively mixed to prepare a dough-like mixture. The stirrer may be, for example, an extruder. The stirrer may include, for example, a single screw extruder, a double screw extruder, and/or the like.

Examples of the first dry conductive material may include Denka black, carbon black, graphite particles, natural graphite, artificial graphite, acetylene black, Ketjen black, and a carbon fiber; carbon nanotubes; a metal powder, a metal fiber, or a metal tube of copper, nickel, aluminium, or silver; and a conductive polymer such as a polyphenylene derivative, but one or more embodiments are not limited thereto. Any material utilized as a conductive material in the art may be utilized. A conductive material may be, for example, a carbon-based conductive material.

Examples of the first dry binder may include a vinylidene fluoride/hexafluoropropylene copolymer, PVDF, PAN, polymethyl methacrylate, PTFE, a mixture of the above polymers, a SBR-based polymer, and/or the like. Examples of a solvent may include NMP, acetone, water, and/or the like, but one or more embodiments are not necessarily limited thereto. Any material utilized in the art may be utilized.

A plasticizer or a pore former may be further added to the first dry mixture to additionally form pores in the dry electrode film 150.

The contents of the first dry electrode active material, the first dry conductive material, and the first dry binder utilized in the first dry mixture may be as described previously in the part of the dry electrode 300.

In a cathode, a cathode electrode active material may be utilized as an electrode active material. The cathode active material may be as defined in the part of the previously described electrode. In an anode, an anode active material may be utilized as an electrode active material. The anode active material may be as defined in the part of the previously described electrode.

Next, the first dry electrode active material layer 100a including the fibrillized first dry binder may be formed from the first dry mixture.

The first dry electrode active material layer 100a may be formed by allowing the first dry mixture to pass between at least one pair of calender rolls spaced and/or apart (e.g., spaced apart) from each other by a certain interval. Referring to FIG. 4, the first dry electrode mixture may pass between the calender rolls to form the first dry electrode active material layer 100a in the form of a sheet. The first dry mixture may pass between the calender rolls to be rolled to form the first dry electrode active material layer 100a, and the first dry electrode active material layer 100a may include the first dry binder fibrillized in a direction in which the first dry electrode active material layer 100a moves, for example, a machine direction MD. The first dry electrode active material layer 100a may include the first dry binder fibrillized in the first direction D1, for example, the machine direction MD. The first dry electrode active material layer 100a may be prepared in the form of a sheet. The first dry electrode active material layer 100a may be, for example, a self-standing film.

The providing of the second dry electrode active material layer 100b including the second dry electrode active material and the fibrillized second dry binder may include, for example, dry-mixing the second dry electrode active material and the second dry binder to prepare a second dry mixture, and forming the second dry electrode active material layer 100b, which includes the fibrillized second dry binder, from the second dry mixture.

In the providing of the second dry electrode active material layer 100b including the second dry electrode active material and the fibrillized second dry binder, the second dry electrode active material layer 100b may be prepared in substantially the same manner as in the providing of the first dry electrode active material layer 100a, except that the second dry electrode active material, the second dry binder, and a second dry conductive material are utilized.

The arranging of the first dry electrode active material layer 100a such that the fibrous first dry binder is disposed in the first direction D1 may include arranging the first dry electrode active material layer 100a such that the fibrous first dry binder faces the first direction D1. The first direction D1 may be any direction. For example, the first dry electrode active material layer 100a may be disposed such that the fibrillized first dry binder faces any direction.

The arranging of the second dry electrode active material layer 100b on the first dry electrode active material layer 100a such that the fibrillized second dry binder is disposed in the second direction D2 that is distinguished from the first direction D1 may include arranging the second dry electrode active material layer 100b on the first dry electrode active material layer 100a such that the fibrillized second dry binder is oriented in a different direction from the fibrillized first dry binder. The dry electrode film 150 may be prepared by arranging the second dry electrode active material layer 100b on the first dry electrode active material layer 100a including the fibrillized first dry binder such that the second dry electrode active material layer 100b includes the second dry binder fibrillized in the second direction D2 that is distinguished from the first direction D1.

The dry electrode film 150 may be prepared, for example, by stacking a plurality of first dry electrode active

material layers 100a in a thickness direction and arranging the fibrillized first dry binders, which are included in the first dry electrode active material layers 100a, to face (or be arranged to extend in) different directions. For example, while the plurality of first dry electrode active material layers 100a are stacked in the thickness direction, another first dry electrode active material layer 100a may be rotated clockwise by at least some angles, for example, an angle of about 45° to about 135°, and disposed on one first dry electrode active material layer 100a, thereby preparing the dry electrode film 150. If (e.g., when) the first dry electrode active material layer 100a is in the form of a square sheet, while the first dry electrode active material layers 100a may be stacked in the thickness direction, then another first dry electrode active material layer 100a may be rotated clockwise by an angle of about 90° and disposed on one first dry electrode active material layer 100a, thereby preparing the dry electrode film 150.

The dry electrode film 150 may be additionally rolled. The rolling may be, for example, roll pressing, flat pressing, and/or the like, but is not necessarily limited thereto. A pressure during the rolling may be, for example, in a range of about 0.1 ton/$cm^2$ to about 10.0 ton/$cm^2$, about 0.5 ton/$cm^2$ to about 10.0 ton/$cm^2$, or about 1.0 ton/$cm^2$to about 10.0 ton/$cm^2$. If (e.g., when) the pressure during the rolling excessively increases, then the dry electrode film 150 may crack. If (e.g., when) the pressure during the rolling is excessively low, then a rolling effect may be insignificant.

A method of preparing an electrode according to other embodiments may be provided.

The method of preparing an electrode may include providing an electrode current collector, and providing a dry electrode film 150 on one surface or two surfaces of the electrode current collector.

First, the electrode current collector may be provided.

The electrode current collector may additionally include a coating layer disposed on one surface or two surfaces of the electrode current collector. The providing of the electrode current collector may additionally include, for example, arranging the coating layer on one surface or two surfaces of the electrode current collector. A material of the electrode current collector may be as defined in the part of the previously described electrode current collector. A cathode current collector may be, for example, aluminium foil. An anode current collector may be, for example, copper foil. In the arranging of the coating layer on one surface or two surfaces of the electrode current collector, the coating layer may be disposed on one surface or two surfaces of the electrode current collector in a dry or wet type or kind. A specific coating method may be as defined in the part of the electrode current collector including the previously described coating layer.

Next, the dry electrode film 150 may be disposed on one surface or two surfaces of the electrode current collector to prepare an electrode. For example, the electrode may be prepared through a method of laminating the dry electrode film 150 on the electrode current collector.

The electrode prepared through the previously described method of preparing an electrode may include the electrode current collector, and a dry electrode active material layer disposed on one surface or two surfaces of the electrode current collector, wherein the dry electrode active material layer includes the dry electrode film 150.

For example, a lithium battery may be manufactured through the following example method, but one or more embodiments are not necessarily limited thereto. A method may vary according to required conditions.

First, both (e.g., simultaneously) a cathode and an anode may be prepared according to the previously described method of preparing the dry electrode film 150 and the previously described method of preparing an electrode. In other embodiments, one electrode of the cathode and the anode may be prepared through such a dry manufacturing method, and the other electrode may be prepared through a wet manufacturing method. For example, the other electrode may be prepared by preparing an electrode slurry including an electrode active material, a conductive material, a binder, and a solvent, coating an electrode current collector with the prepared electrode slurry, and drying the electrode current collector. A conductive material and a binder included in an electrode prepared in a wet type or kind may be selected from conductive materials and binders utilized in preparing such a dry electrode.

Next, a separator to be inserted between the cathode and the anode may be prepared.

Any separator commonly utilized in a lithium battery may be utilized as the separator. For example, a separator having low resistance to the movement of ions in an electrolyte and an excellent or suitable electrolyte impregnation ability may be utilized. For example, the separator may include at least one selected from among a glass fiber, polyester, Teflon, PE, PP, PTFE, and a combination thereof and may be in the form of a nonwoven fabric or a woven fabric. For example, a windable separator including PE, PP, and/or the like may be utilized in a lithium ion battery, and a separator having an excellent or suitable electrolyte impregnation ability may be utilized in a lithium ion polymer battery.

The separator may be prepared through the following example method, but one or more embodiments are not necessarily limited to such a method. A method may be adjusted according to conditions.

First, a polymer resin, a filler, and a solvent may be mixed to prepare a separator composition. The separator composition may be applied directly onto an electrode and dried to form the separator. In other embodiments, the separator composition may be cast and dried on a support, and then a separator film peeled off of the support may be laminated on the electrode to form the separator.

A polymer utilized for preparing the separator is not limited, and any material utilized in a binding material of an electrode plate may be utilized. For example, the polymer may include a vinylidene fluoride/hexafluoropropylene copolymer, PVDF, PAN, polymethyl methacrylate, or a mixture thereof.

Next, an electrolyte may be prepared.

The electrolyte may be, for example, an organic electrolyte. For example, a lithium salt may be dissolved in an organic solvent to prepare the organic electrolyte.

Any material may be utilized as the organic solvent as long as the material is utilized as an organic solvent in the art. Examples of the organic solvent may include propylene carbonate, ethylene carbonate (EC), fluoroethylene carbonate, butylene carbonate, dimethyl carbonate (DMC), diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

As the lithium salt, any material may be utilized as long as the material is utilized as a lithium salt in the art. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$, wherein x and y are each a natural number, LiCl, LiI, or a mixture thereof.

In other embodiments, the electrolyte may be, for example, a solid electrolyte. The solid electrolyte may include, for example, boron oxide, lithium oxynitride, and/or the like, but one or more embodiments are not limited thereto. Any material may be utilized as long as the material is utilized as a solid electrolyte in the art. The solid electrolyte may be formed on the anode through, for example, sputtering, or a separate solid electrolyte sheet may be stacked on the anode. The solid electrolyte may be, for example, an oxide-based solid electrolyte or a sulfide-based solid electrolyte.

Referring to FIG. 12, a lithium battery 1 according to embodiments may include a cathode 3, an anode 2, and a separator 4. The cathode 3, the anode 2, and the separator 4 may be wound or folded to form a battery structure 7. The formed battery structure 7 may be accommodated in a battery case 5. An organic electrolyte may be injected into the battery case 5, and the battery case 5 may be sealed with a cap assembly 6 to complete the lithium battery 1. The battery case 5 may have a cylindrical shape, but one or more embodiments are not necessarily limited to such a shape. For example, the battery case 5 may have a prismatic shape, a thin film shape, and/or the like.

Referring to FIG. 13, a lithium battery 1a according to embodiments may include a cathode 3a, an anode 2a, and a separator 4a. The separator 4a may be disposed between the cathode 3a and the anode 2a, and the cathode 3a, the anode 2a, and the separator 4a may be wound or folded to form a battery structure 7a. The formed battery structure 7a may be accommodated in a battery case 5a. The lithium battery 1a may include an electrode tab 8a serving as an electrical path for guiding a current generated in the battery structure 7a to the outside. An organic electrolyte may be injected into the battery case 5a, and the battery case 5a may be sealed to complete the lithium battery 1a. The battery case 5a may have a prismatic shape, but one or more embodiments are not necessarily limited to such a shape. For example, the battery case 5a may have a cylindrical shape, a thin film shape, and/or the like.

Referring to FIG. 14, a lithium battery 1b according to embodiments may include a cathode 3b, an anode 2b and a separator 4b. The separator 4b may be disposed between the cathode 3b and the anode 2b to form a battery structure 7b. The battery structure 7b may be stacked in a bi-cell structure and then accommodated in a battery case 5b. The lithium battery 1b may include an electrode tab 8b serving as an electrical path for guiding a current generated in the battery structure 7b to the outside. An organic electrolyte may be injected into the battery case 5b, and the battery case 5b may be sealed to complete the lithium battery 1b. The battery case 5b may have a prismatic shape, but one or more embodiments are not necessarily limited to such a shape. For example, the battery case 5b may have a cylindrical shape, a thin film shape, and/or the like.

A pouch-type or kind lithium battery may correspond to a case in which a pouch is utilized as a battery case in the lithium batteries of FIGS. 12 to 14. The pouch-type or kind lithium battery may include one or more battery structures. A separator may be disposed between a cathode and an anode to form the battery structure. After the battery structure is stacked in a bi-cell structure, the battery structure may be impregnated in an organic electrolyte, accommodated in a pouch, and sealed to complete the pouch-type or kind lithium battery. For example, in some embodiments, the previously described cathode, anode, and separator may be simply stacked and accommodated in a pouch in the form of an electrode assembly or may be wound or folded into a jelly roll-shaped electrode assembly and then accommodated in a pouch. Subsequently, an organic electrolyte may be injected into the pouch, and the pouch may be sealed to complete a lithium battery.

A lithium battery may have excellent or suitable lifespan characteristics and high-rate characteristics and thus may be utilized, for example, in electric vehicles (EVs). For example, the lithium battery may be utilized in hybrid vehicles such as plug-in hybrid electric vehicles (PHEVs). In some embodiments, the lithium battery may be utilized in fields in which large amounts of power are required to be stored. For example, the lithium battery may be utilized in electric bicycles, power tools, and/or the like.

A plurality of lithium batteries may be stacked to form a battery module, and a plurality of battery modules may form a battery pack. The battery pack may be utilized in all devices requiring high capacity and high output power. For example, the battery pack may be utilized in laptops, smartphones, electric vehicles, and/or the like. A battery module may include, for example, a plurality of batteries and a frame for holding the plurality of batteries. A battery pack may

include, for example, a plurality of battery modules and a busbar for connecting the plurality of battery modules. The battery module and/or the battery pack may further include a cooling device. A plurality of battery packs may be adjusted by a battery management system. The battery management system may include a battery pack and a battery controller connected to the battery pack.

Hereinafter, the present disclosure will be described in more detail with reference to the following Examples and Comparative Examples. However, the following Examples are merely presented to exemplify the present disclosure, and the scope of the present disclosure is not limited thereto.

**Manufacturing of lithium battery (half-cell)**

**Example 1: Two-layer dry cathode film, 90-degree difference between first direction and second direction**

**Preparation of cathode film**

$LiNi_{0.91}Co_{0.05}Al_{0.04}O_2$ (hereinafter referred to as NCA91) as a dry cathode active material, a carbon conductive material (Denka black) as a dry conductive material, and PTFE as a dry binder were put into a blade mixer at a weight ratio of 93:4:3 and then primarily dry-mixed at a speed of 900 rpm at a temperature of 25 °C for 10 minutes to prepare a first dry mixture in which a cathode active material, a dry conductive material, and a dry binder were uniformly mixed. Subsequently, in order for the dry binder to be fibrillized, the first dry mixture was additionally secondarily mixed at a speed of 4,800 rpm at a temperature of 25 °C for 20 minutes to prepare a second dry mixture. A separate solvent was not utilized during preparation of the first dry mixture and the second dry mixture.

As shown in FIG. 4, the second dry mixture was put between a pair of calender rolls of a rolling device and calendered to prepare a dry cathode active material layer sheet. The prepared dry cathode active material layer sheet was cut at regular intervals to prepare each of a first dry cathode active material layer sheet and a second dry cathode active material layer sheet. The first dry cathode active material layer sheet and the second dry cathode active material sheet each included a dry binder fibrillized in a machine direction MD. The first dry cathode active material layer sheet and the second dry cathode active material layer sheet were each a self-standing film having no support, had a square shape, and had the same thickness.

The first dry cathode active material layer sheet was disposed. The first dry cathode active material layer included the dry binder fibrillized in a first direction. The second dry cathode active material layer sheet was rotated clockwise by an angle of 90° and disposed on one surface of the first dry cathode active material layer sheet to prepare a stack having a two-layer structure. The second dry cathode active material layer sheet was rotated clockwise by an angle of 90° so that the fibrillized dry binder of the second dry cathode active material layer was disposed in a second direction. The first direction which was an orientation direction of the fibrillized dry binder included in the first dry cathode active material layer and the second direction which was an orientation direction of the fibrillized dry binder included in the second cathode active material layer had a difference of 90°. The stack was rolled to prepare a dry electrode film including a first dry cathode active material layer and a second dry cathode active material layer.

**Preparation of cathode**

A cathode current collector, in which a carbon layer as a coating layer was disposed on one surface of an aluminium thin film having a thickness of 12 μm, was prepared. The coating layer may be regarded as an interlayer.

A composition including a carbon conductive material (Denka black) and PVDF was applied onto an aluminium thin film and then dried to prepare the carbon layer. The thickness of the carbon layer disposed on one surface of the aluminium thin film was about 1 μm.

A dry cathode film was disposed on one surface of the cathode current collector, on which the carbon layer was disposed, to prepare a cathode in which an interlayer and a cathode active material layer were sequentially disposed on the cathode current collector. The thickness of the cathode active material layer was about 100 μm.

**Manufacturing of lithium battery**

By utilizing the cathode prepared above, a lithium metal was utilized as a counter electrode, and a solution, in which a PTFE separator and 1.3 M $LiPF_6$ were dissolved in EC+ethyl methyl carbonate (EMC)+DMC (volume ratio of 3:4:3), was utilized as an electrolyte to manufacture a coin cell.

**Example 2: Two-layer dry cathode film, 45-degree difference between first direction and second direction**

A cathode film, a cathode, and a lithium battery were manufactured in substantially the same manner as in

Example 1, except that a second dry cathode active material layer sheet was rotated clockwise by an angle of 45° and disposed on one surface of a first dry cathode active material layer sheet to prepare a dry electrode film having a two-layer structure.

**Example 3: Two-layer dry cathode film, 135-degree difference between first direction and second direction**

A cathode film, a cathode, and a lithium battery were manufactured in substantially the same manner as in Example 1, except that a second dry cathode active material layer sheet was rotated clockwise by an angle of 135° and disposed on one surface of a first dry cathode active material layer sheet to prepare a dry electrode film having a two-layer structure.

**Example 4: Three-layer dry cathode film, 90-degree difference between first direction and second direction, 90-degree difference between second direction and third direction**

A third dry cathode active material layer sheet was additionally prepared in substantially the same manner as a first dry cathode active material layer sheet and a second dry cathode active material layer sheet.

A cathode film, a cathode, and a lithium battery were manufactured in substantially the same manner as in Example 1, except that the second dry cathode active material layer sheet was rotated clockwise by an angle of 90° and disposed on one surface of the first dry cathode active material layer sheet and the third dry cathode active material layer sheet was rotated clockwise by an angle of 180° and disposed on one surface of the second dry cathode active material layer sheet to prepare a dry electrode film having a three-layer structure.

**Comparative Example 1: Two-layer dry cathode film, 0-degree difference between first direction and second direction**

A cathode film, a cathode, and a lithium battery were manufactured in substantially the same manner as in Example 1, except that a second dry cathode active material layer sheet was not rotated clockwise and directly disposed on one surface of a first dry cathode active material layer sheet to prepare a dry electrode film having a two-layer structure.

**Comparative Example 2: Wet cathode**

**Preparation of cathode**

A mixture obtained by mixing $LiNi_{0.91}Co_{0.05}Al_{0.04}O_2$ as a cathode active material, a carbon conductive material (Denka black), and PVDF at a weight ratio of 92:4:4 was mixed with NMP in an agate mortar to prepare a slurry.

The slurry was applied onto the entirety of one surface of an aluminium current collector having a thickness of 12 μm through bar coating, dried at room temperature, and then dried once again under conditions of vacuum and a temperature 120 °C to introduce a cathode active material layer, thereby preparing a stack. Next, the prepared stack was rolled to prepare a cathode.

**Manufacturing of coin cell**

A coin cell was manufactured in substantially the same manner as in Example 1, except that the cathode prepared above was utilized.

**Evaluation Example 1: Measurement of tensile strength of dry electrode** active material layer

Tensile strength was measured on the first dry cathode active material layer sheet and the second dry cathode active material layer sheet utilized in the dry electrode film prepared in Example 1.

In the first dry electrode active material sheet, the dry binder fibrillized in the first direction is disposed in the machine direction.

The second dry cathode active material layer sheet is rotated clockwise by an angle of 90° with respect to the first dry cathode active material layer sheet, and thus the dry binder fibrillized in the first direction is disposed in the second dry cathode active material layer sheet in a transverse direction.

Tensile strength in the first direction (machine direction MD) and tensile strength in the second direction (transverse direction TD) were each measured on the first dry cathode active material layer sheet prepared in Example 1.

Tensile strength in the first direction (transverse direction TD) and tensile strength in the second direction (mechanical direction MD) were each measured on the second dry cathode active material layer sheet prepared in

Example 1.

By utilizing a texture analyzer (TA.XT plus manufactured by Stable Micro Systems Ltd), a sample of each of the first dry cathode active material layer sheet and the second dry cathode active material layer sheet was stretched at a speed of 5 mm/min in the machine direction MD and the transverse direction TD to obtain a stress-strain curve. In the obtained stress-strain curve, machine direction tensile strength (MDS) and transverse direction tensile strength (TDS), which were the highest stresses among stresses applied before fracture of the sample, were each measured. Some of ratios of the MDS to the TDS are shown in Table 1.

Table 1

| | Ratio of tensile strength of the first direction (MDS L1S1) to tensile strength of the second direction (TDS L1S2) of first dry cathode active material layer sheet | Ratio of tensile strength of the first direction (TDS L2S1) to tensile strength of the second direction (MDS L2S2) of second dry cathode active material layer sheet |
|---|---|---|
| Example 1 | 1.5 | 0.8 |

As shown in Table 1, a ratio MD/TD of the tensile strength in the first direction (machine direction MD) to the tensile strength in the second direction (axial direction, TD) of the first dry cathode active material layer sheet was 1.1 or more.

A ratio TD/MD of the tensile strength in the first direction (transverse direction TD) to the tensile strength in the second direction (machine direction MD) of the second dry cathode active material sheet was less than 0.9.

It was confirmed that each of the first dry cathode active material layer and the second dry cathode active material layer was manufactured by being stretched in one direction through the calender rolls so that the tensile strengths in the first and second directions were different from each other.

**Evaluation Example 1: Measurement of tensile strength of dry electrode film**

Tensile strength of each of the dry electrode films prepared in Examples 1 to 4 and Comparative Example 1 was measured.

By utilizing a texture analyzer (TA.XT plus manufactured by Stable Micro Systems Ltd), a sample of each of the dry electrode films was stretched at a speed of 5 mm/min in the first direction and the second direction perpendicular to the first direction to obtain a stress-strain curve. In the obtained stress-strain curve, a tensile strength FS1 in the first direction and a tensile strength FS2 in the second direction, which were the highest stresses among stresses applied before fracture of the sample, were each measured. Referring to FIG. 2A, the first direction may be a D1 direction, and the second direction may be a D2 direction.

From the measured tensile strengths, a ratio (FS1-FS2)/(FS1+FS2) of a tensile strength difference (FS1-FS2) between the tensile strength FS1 in the first direction and the tensile strength FS2 in the second direction of the dry electrode film to the sum (FS1+FS2) of the tensile strength FS1 in the first direction and the tensile strength FS2 in the second direction of the dry electrode film was calculated and shown in Table 2.

Table 2

| | (FS1-FS2)/(FS1+FS2) |
|---|---|
| Example 1 | 0.05 |
| Example 2 | 0.15 |
| Example 3 | 0.16 |
| Example 4 | 0.3 |
| Comparative Example 1 | 0.33 |

As shown in Table 2, a relative difference in tensile strength according to directions in the dry cathode films prepared in Examples 1 to 4 was 0.3 or less. In some embodiments, in the dry cathode films prepared in Examples 1 to 4, a difference in tensile strength according to stretching directions may decrease, and thus the deterioration of a dry electrode active material layer due to a change in volume during charging/discharging may be effectively suppressed or reduced.

A relative difference in tensile strength according to directions in the dry cathode film prepared in Comparative Example 1 was greater than 0.3, and a difference in tensile strength increased according to stretching directions. In some embodiments, in the dry cathode film prepared in Comparative Example 1, due to an increase in difference in tensile strength according to the stretching directions, it may be difficult to suppress or reduce the deterioration of the electrode active material layer due to a change in volume during charging/discharging.

**Evaluation Example 3: Evaluation of vertical binding force of cathode active material layer (I)**

By utilizing SAICAS (SAICAS EN-EX manufactured by Dipla Wintes Co., Ltd., in JAPAN), the binding characteristics of the cathode active material layers included in the cathodes of Example 1 and Comparative Example 2 were analyzed.

By utilizing a diamond blade with a width of 1 mm, under conditions of a clearance angle of 10°, a rake angle of 20°, a shear angle of 45°, a horizontal velocity of 4 μm/s, and a vertical velocity of 0.4 μm/s, a constant velocity analysis was performed to measure a vertical binding force Fv according to a depth.

First, a first constant velocity analysis was performed from a first position on a surface of the cathode active material layer included in a first domain to a surface of the cathode current collector, and the blade was moved horizontally along the surface of the cathode current collector to remove the cathode active material layer. Then, at a position of 10

μm behind the first position, a second constant velocity analysis was performed under the same conditions as the first constant velocity analysis. Data measured in the second constant velocity analysis was utilized.

In the cathode active material layer, a vertical binding force of the cathode active material layer was measured, and measured data was normalized to a binding force graph area to derive a vertical relative binding force $F_{VR}$ according to a depth of the cathode active material layer.

The vertical binding force of the cathode active material layer was derived by utilizing data measured in a section from a first point spaced and/or apart (e.g., spaced apart) from the surface of the cathode active material layer by 5 % to a second point spaced and/or apart (e.g., spaced apart) from the surface of the electrode current collector by 5 %, with respect to the total thickness of the cathode active material layer. For example, data near the surface of the cathode active material layer and data near the surface of the electrode current collector were excluded to prevent or reduce measurement errors.

A change ratio of the vertical relative binding force $F_{VR}$ was calculated by utilizing Equation 1 from data about the derived vertical relative binding force $F_{VR}$ of the cathode active material layer.

$$\text{change ratio of vertical relative binding force } F_{VR} = [(\text{maximum value of vertical relative binding force} - \text{minimum value of vertical relative binding force})/\text{minimum value of vertical relative binding force})] \times 100 \quad \text{equation 1}$$

As a result of measurement, the change ratio of the vertical relative binding force of the cathode active material layer included in the cathode of Example 1 was 200 % or less. It was confirmed that the cathode active material layer of Example 1 had substantially uniform binding force and composition distribution regardless of a position in a thickness direction.

In other embodiments, the change ratio of the vertical relative binding force of the cathode active material layer included in the cathode of Comparative Example 2 was greater than 300 %. It was confirmed that the cathode active material layer of Comparative Example 2 had binding force and composition distribution that significantly changed according to a position in a thickness direction.

**Evaluation Example 4: Evaluation of horizontal binding force of cathode active material layer (II)**

By utilizing SAICAS (SAICAS EN-EX manufactured by Dipla Wintes Co., Ltd., in JAPAN), the binding characteristics of the cathode active material layers included in the cathodes prepared in Example 1 and Comparative Example 2 were analyzed.

By utilizing a diamond blade with a width of 1 mm, under conditions of a clearance angle of 10°, a rake angle of 20°, a shear angle of 45°, a horizontal velocity of 4 μm/s, and a vertical velocity of 0.4 μm/s, a constant velocity analysis was performed to measure a horizontal binding force $F_H$ according to a depth.

First, a first constant velocity analysis was performed from a first position on a surface of the cathode active material layer included in a first domain to a surface of the cathode current collector, and a blade was horizontally moved along the surface of the cathode current collector to remove the cathode active material layer. Next, at a position of 10 μm behind the first position, a second constant velocity analysis was performed under the same conditions as the first constant velocity analysis. Data measured in the second constant velocity analysis was utilized.

A first horizontal binding force $F_{H1}$ at a first point spaced and/or apart (e.g., spaced apart) from the surface of the cathode active material layer by 10 % and a second horizontal binding force $F_{H2}$ at a second point spaced and/or apart (e.g., spaced apart) from the surface of the cathode current collector by 10 %, with respect to the total thickness of the cathode active material layer, were measured.

A horizontal binding force ratio between the first point and the second point is defined by Equation 2:

Equation 2

$$\text{horizontal binding force ratio (\%) between first point and second point} = [F_{H2}/F_{H1}] \times 100$$

As a result of measurement, the horizontal binding force ratio of the cathode active material layer of Example 1 was 70 % or more.

In other embodiments, the horizontal binding force ratio of the cathode active material layer of Comparative Example 2 was less than 40 %.

In some embodiments, the horizontal binding force ratio of the cathode active material layer of Example 1 was increased as compared with the cathode active material layer of Comparative Example 2.

For example, it was confirmed that the cathode active material layer of Example 1 had more substantially uniform binding force and composition distribution than the cathode active material layer of Comparative Example 2.

**Evaluation Example 5: Evaluation of charge/discharge characteristics at room temperature**

The lithium batteries manufactured in Examples 1 to 4 and Comparative Example 1 were charged at a constant current rate of 0.1 C at a temperature of 25 °C until a voltage reached 4.4 V (vs. Li), and then, in a constant voltage mode, while 4.4 V was maintained, the charging was cut off at a current rate of 0.05 C. Subsequently, the lithium batteries were discharged at a constant current rate of 0.1 C until the voltage reached 2.8 V (vs. Li) during discharging (formation cycle).

The lithium batteries subjected to the formation cycle were charged at a constant current rate of 0.5 C at a temperature of 25 °C until the voltage reached 4.4 V (vs. Li). Subsequently, the lithium batteries were discharged at a constant current rate of 0.5 C until the voltage reached 2.8 V (vs. Li) during discharging. Such a cycle was repeated up to a $100^{th}$ cycle (100 times).

The lithium batteries were rested for 10 minutes after every charging/discharging cycle. A capacity retention ratio at the $100^{th}$ cycle is defined by Equation 3.

$$\text{capacity retention ratio (\%)} = [\text{discharge capacity at } 100^{th} \text{ cycle/discharge capacity at } 1^{st} \text{ cycle}] \times 100 \qquad \text{equation 3}$$

As a result of charge/discharge tests, the lifespan characteristics at room temperature of the lithium batteries of Examples 1 to 4 were improved as compared with the lithium battery of Comparative Example 1.

The lithium batteries of Examples 1 to 4 including the dry electrode films with improved mechanical strength and/or structural stability had improved cycle characteristics as compared with the lithium battery of Comparative Example 1 including the dry electrode film with substantially non-uniform tensile strength according to directions.

According to an aspect, by including a plurality of electrode active material layers stretched in different directions, the structural stability of a dry electrode film may be improved.

In some embodiments, by including a dry electrode film having improved structural stability, the deterioration of a dry electrode during charging/discharging may be suppressed or reduced.

In other embodiments, by including a dry electrode film having improved structural stability, the cycle characteristics of a lithium battery may be improved.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the scope of the present disclosure as defined by the following claims and equivalents thereof.

Embodiments are set out in the following clauses:

Clause 1. A dry electrode film comprising:

a first dry electrode active material layer comprising a first dry electrode active material and a first dry binder fibrillized in a first direction; and
a second dry electrode active material layer disposed on one surface of the first dry electrode active material layer and comprising a second dry electrode active material and a second dry binder fibrillized in a second direction that is distinguished from the first direction,
wherein the dry electrode film is a self-standing film.

Clause 2. The dry electrode film of clause 1, wherein a difference between the first direction and the second direction is a degree in a range of about 45° to about 135°.

Clause 3. The dry electrode film of clause 1 or clause 2, wherein the first direction is a machine direction (MD) of the first dry electrode active material layer or a transverse direction (TD) of the second dry electrode active material layer, and
the second direction is a transverse direction (TD) of the first dry electrode active material layer or a machine direction (MD) of the second dry electrode active material layer.

Clause 4. The dry electrode film of any one of clauses 1 to 3, wherein a tensile strength (L1S1) of the first dry

electrode active material layer in the first direction is different from a tensile strength (L1S2) of the first dry electrode active material layer in the second direction,

wherein a ratio (L1S1/L1S2) of the tensile strength (L1S1) of the first dry electrode active material layer in the first direction to the tensile strength (L1S2) of the first dry electrode active material layer in the second direction is 1.1 or more, and
a tensile strength (L2S1) of the second dry electrode active material layer in the first direction is different from a tensile strength (L2S2) of the second dry electrode active material layer in the second direction,
wherein a ratio (L2S1/L2S2) of the tensile strength (L2S1) of the second dry electrode active material layer in the first direction to the tensile strength (L2S2) of the second dry electrode active material layer in the second direction is 0.9 or less.

Clause 5. The dry electrode film of any one of clauses 1 to 4, wherein a ratio ((FS1-FS2)/(FS1+FS2)) of a tensile strength difference (FS1-FS2) between a tensile strength (FS1) of the dry electrode film in the first direction and a tensile strength (FS2) of the dry electrode film in the second direction to a sum (FS1+FS2) of the tensile strength (FS1) of the dry electrode film in the first direction and the tensile strength (FS2) of the dry electrode film in the second direction is 0.3 or less.

Clause 6. The dry electrode film of any one of clauses 1 to 5, wherein a ratio of a thickness (L1T1) of the first dry electrode active material layer to a thickness (L2T2) of the second dry electrode active material layer is in a range of about 9:1 to about 1:9.

Clause 7. The dry electrode film of any one of clauses 1 to 6, wherein at least one of the first dry binder and the second dry binder comprises a fluorine-based binder,

wherein a glass transition temperature ($T_g$) of each of the first dry binder and the second dry binder is in a range of about 15 °C to about 100 °C, and
a content of the dry binder comprising the first dry binder and the second dry binder is in a range of about 0.1 wt% to about 5 wt% with respect to a total weight of the dry electrode film.

Clause 8. The dry electrode film of any one of clauses 1 to 7, further comprising a dry conductive material,

wherein the dry conductive material comprises a carbon-based conductive material,
the carbon-based conductive material comprises a fibrous carbon-based material having an aspect ratio of 10 or more, a particulate carbon-based material having an aspect ratio of 5 or less, or a combination thereof, and
a content of the dry conductive material is in a range of about 0.1 wt% to about 5 wt% with respect to a total weight of the dry electrode film.

Clause 9. The dry electrode film of any one of clauses 1 to 8, wherein the dry electrode film is free of a residual process solvent.

Clause 10. The dry electrode film of any one of clauses 1 to 9, further comprising a first interlayer disposed between the first dry electrode active material layer and the second dry electrode active material layer,
wherein the first interlayer comprises a carbon-based conductive material, a binder, or a combination thereof.

Clause 11. A dry electrode comprising:

a dry electrode active material layer; and
an electrode current collector disposed on one surface of the dry electrode active material layer or between the one surface and the other surface opposite to the one surface,
wherein the dry electrode active material layer comprises the dry electrode film of any one of clauses 1 to 10.

Clause 12. The dry electrode of clause 11, wherein the dry electrode active material layer has:

a first surface and a second surface opposite to the first surface;
a first side surface connected to ends of the first surface and the second surface in a length direction and a second side surface opposite to the first side surface;
a third side surface connected to ends of the first surface and the second surface in a transverse direction and

a fourth side surface opposite to the third side surface; and
a first area defined by a first distance in the length direction and a first distance in the transverse direction, and the electrode current collector is disposed between the first surface and the second surface and has a second area defined by a second distance in the length direction and a second distance in the transverse direction,
wherein the second area of the electrode current collector is less than 100 % of the first area of the dry electrode film.

Clause 13. The dry electrode of clause 11 or clause 12, wherein a second distance of the electrode current collector in a length direction is less than 100 % of a first distance of the dry electrode active material layer in the length direction,

a second distance of the electrode current collector in a transverse direction is less than 100 % of a first distance of the dry electrode active material layer in the transverse direction, or
the second distance of the electrode current collector in the length direction is less than 100 % of the first distance of the dry electrode active material layer in the length direction, and the second distance of the electrode current collector in the transverse direction is less than 100 % of the first distance of the dry electrode active material layer in the transverse direction.

Clause 14. The dry electrode of any one of clauses 11 to 13, wherein the dry electrode active material layer comprises a first domain in which the electrode current collector is disposed between a first surface and a second surface, and a second domain in which the electrode current collector is absent between the first surface and the second surface, wherein a mixture density of the second domain is less than 100 % of a mixture density of the first domain.

Clause 15. The dry electrode of any one of clauses 11 to 14, wherein, if the dry electrode active material layer is measured by using a surface and interfacial measuring analysis system (SAICAS), a change ratio of a vertical relative binding force ($F_{VR}$) according to a depth from a first point spaced apart from a surface of the dry electrode active material layer by 5 % in a direction of the electrode current collector to a second point spaced apart from a surface of the electrode current collector by 5 %, with respect to a total thickness of the dry electrode active material layer, is 300 % or less.

Clause 16. The dry electrode of any one of clauses 11 to 15, wherein, if the dry electrode active material layer is measured by using a surface and interfacial measuring analysis system (SAICAS), a horizontal binding force ratio of a second horizontal binding force ($F_{H2}$) at a second point spaced apart from a surface of the electrode current collector by 10 % to a first horizontal binding force ($F_{H1}$) at a first point spaced apart from a surface of the dry electrode active material layer in a direction of the electrode current collector by 10 %, with respect to a total thickness of the dry electrode active material layer, is 50 % or more.

Clause 17. The dry electrode as of any one of clauses 11 to 16, wherein the electrode current collector has a form selected from a sheet, a foil, a film, a plate, a porous body, a mesoporous body, a through-hole-containing body, a polygonal ring body, a mesh body, a foam body, and a nonwoven body.

Clause 18. The dry electrode of any one of clauses 11 to 17, wherein the electrode current collector comprises a base film and a metal layer disposed on one surface or two surfaces of the base film,

wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), titanium (Ti), iron (Fe), cobalt (Co), nickel (Ni), zinc (Zn), aluminium (Al), germanium (Ge), lithium (Li), or an alloy thereof.

Clause 19. The dry electrode of any one of clauses 11 to 18, further comprising a second interlayer disposed between the dry electrode active material layer and the electrode current collector,
wherein the first interlayer comprises a carbon-based conductive material.

Clause 20. A lithium battery comprising:

a cathode;
an anode; and
an electrolyte disposed between the cathode and the anode,

wherein at least one of the cathode and the anode is a dry electrode, and the dry electrode comprises the dry electrode film of any one of clauses 1 to 10.

## Claims

**1.** A dry electrode film comprising:

a first dry electrode active material layer comprising a first dry electrode active material and a first dry binder fibrillized in a first direction; and
a second dry electrode active material layer on a surface of the first dry electrode active material layer and comprising a second dry electrode active material and a second dry binder fibrillized in a second direction that is distinguished from the first direction,
wherein the dry electrode film is a self-standing film.

**2.** The dry electrode film as claimed in claim 1, wherein a difference between the first direction and the second direction is a degree in a range of about 45° to about 135°.

**3.** The dry electrode film as claimed in claim 1 or claim 2, wherein the first direction is a machine direction (MD) of the first dry electrode active material layer or a transverse direction (TD) of the second dry electrode active material layer, and
the second direction is a transverse direction (TD) of the first dry electrode active material layer or a machine direction (MD) of the second dry electrode active material layer.

**4.** The dry electrode film as claimed in any one of claims 1 to 3, wherein a tensile strength (L1S1) of the first dry electrode active material layer in the first direction is different from a tensile strength (L1S2) of the first dry electrode active material layer in the second direction,

wherein a ratio (L1S1/L1S2) of the tensile strength (L1S1) of the first dry electrode active material layer in the first direction to the tensile strength (L1S2) of the first dry electrode active material layer in the second direction is 1.1 or more, and
a tensile strength (L2S1) of the second dry electrode active material layer in the first direction is different from a tensile strength (L2S2) of the second dry electrode active material layer in the second direction,
wherein a ratio (L2S1/L2S2) of the tensile strength (L2S1) of the second dry electrode active material layer in the first direction to the tensile strength (L2S2) of the second dry electrode active material layer in the second direction is 0.9 or less.

**5.** The dry electrode film as claimed in any one of claims 1 to 4, wherein a ratio ((FS1-FS2)/(FS1+FS2)) of a tensile strength difference (FS1-FS2) between a tensile strength (FS1) of the dry electrode film in the first direction and a tensile strength (FS2) of the dry electrode film in the second direction to a sum (FS1+FS2) of the tensile strength (FS1) of the dry electrode film in the first direction and the tensile strength (FS2) of the dry electrode film in the second direction is 0.3 or less.

**6.** The dry electrode film as claimed in any one of claims 1 to 5, wherein a ratio of a thickness (L1T1) of the first dry electrode active material layer to a thickness (L2T2) of the second dry electrode active material layer is in a range of about 9:1 to about 1:9.

**7.** The dry electrode film as claimed in any one of claims 1 to 6, wherein at least one of the first dry binder and the second dry binder comprises a fluorine-based binder, and

wherein a glass transition temperature ($T_g$) of each of the first dry binder and the second dry binder is in a range of about 15 °C to about 100 °C, and
a content of the dry binder comprising the first dry binder and the second dry binder is in a range of about 0.1 wt% to about 5 wt% with respect to a total weight of the dry electrode film.

**8.** The dry electrode film as claimed in any one of claims 1 to 7, further comprising a dry conductive material,

wherein the dry conductive material comprises a carbon-based conductive material,

the carbon-based conductive material comprises a fibrous carbon-based material having an aspect ratio of 10 or more, a particulate carbon-based material having an aspect ratio of 5 or less, or a combination thereof, and a content of the dry conductive material is in a range of about 0.1 wt% to about 5 wt% with respect to a total weight of the dry electrode film.

**9.** The dry electrode film as claimed in any one of claims 1 to 8, wherein the dry electrode film is free of a residual process solvent.

**10.** The dry electrode film as claimed in any one of claims 1 to 9, further comprising a first interlayer between the first dry electrode active material layer and the second dry electrode active material layer,
wherein the first interlayer comprises a carbon-based conductive material, a binder, or a combination thereof.

**11.** A dry electrode comprising:

a dry electrode active material layer; and
an electrode current collector on a surface of the dry electrode active material layer or between the surface of the dry electrode active material layer and a separate surface of the dry electrode active material layer, the separate surface being opposite to the surface,
wherein the dry electrode active material layer comprises the dry electrode film as claimed in any one of claims 1 to 10.

**12.** The dry electrode as claimed in claim 11, wherein the dry electrode active material layer has:

a first surface and a second surface opposite to the first surface;
a first side surface connected to ends of the first surface and the second surface in a length direction of the dry electrode and a second side surface opposite to the first side surface;
a third side surface connected to ends of the first surface and the second surface in a transverse direction of the dry electrode and a fourth side surface opposite to the third side surface; and
a first area defined by a first distance in the length direction and a first distance in the transverse direction,
wherein the electrode current collector is between the first surface and the second surface and has a second area defined by a second distance in the length direction and a second distance in the transverse direction, and
wherein the second area of the electrode current collector is less than 100 % of the first area of the dry electrode film.

**13.** The dry electrode as claimed in claim 11 or claim 12, wherein:

(i) a second distance of the electrode current collector in a length direction of the dry electrode is less than 100 % of a first distance of the dry electrode active material layer in the length direction,

a second distance of the electrode current collector in a transverse direction of the dry electrode is less than 100 % of a first distance of the dry electrode active material layer in the transverse direction, or
the second distance of the electrode current collector in the length direction is less than 100 % of the first distance of the dry electrode active material layer in the length direction, and the second distance of the electrode current collector in the transverse direction is less than 100 % of the first distance of the dry electrode active material layer in the transverse direction; and/or

(ii) the dry electrode active material layer comprises a first domain in which the electrode current collector is between a first surface of the dry electrode active material layer and a second surface of the dry electrode active material layer, and a second domain in which the electrode current collector is not between the first surface and the second surface,
wherein a mixture density of the second domain is less than or equal to 100 % of a mixture density of the first domain.

**14.** The dry electrode as claimed in any one of claims 11 to 13, wherein:

(i) if the dry electrode active material layer is measured by utilizing a surface and interfacial measuring analysis system (SAICAS), then a change ratio of a vertical relative binding force ($F_{VR}$) according to a depth from a first point spaced from a surface of the dry electrode active material layer by 5 % in a direction of the electrode

current collector to a second point spaced from a surface of the electrode current collector by 5 %, with respect to a total thickness of the dry electrode active material layer, is 300 % or less; and/or
(ii) if the dry electrode active material layer is measured by utilizing a surface and interfacial measuring analysis system (SAICAS), then a horizontal binding force ratio of a second horizontal binding force ($F_{H2}$) at a second point spaced from a surface of the electrode current collector by 10 % to a first horizontal binding force ($F_{H1}$) at a first point spaced from a surface of the dry electrode active material layer in a direction of the electrode current collector by 10 %, with respect to a total thickness of the dry electrode active material layer, is 50 % or more; and/or
(iii) the electrode current collector has a form selected from among a sheet, a foil, a film, a plate, a porous body, a mesoporous body, a through-hole-containing body, a polygonal ring body, a mesh body, a foam body, and a nonwoven body; and/or
(iv) the electrode current collector comprises a base film and a metal layer on at least one surface of the base film,

wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), titanium (Ti), iron (Fe), cobalt (Co), nickel (Ni), zinc (Zn), aluminium (Al), germanium (Ge), lithium (Li), or an alloy thereof; and/or

(v) the dry electrode further comprises a second interlayer between the dry electrode active material layer and the electrode current collector,
wherein the first interlayer comprises a carbon-based conductive material.

**15.** A lithium battery comprising:

a cathode;
an anode; and
an electrolyte between the cathode and the anode,
wherein the cathode, the anode, or a combination thereof is a dry electrode, and
the dry electrode comprises the dry electrode film as claimed in any one of claims 1 to 10.

FIG. 1

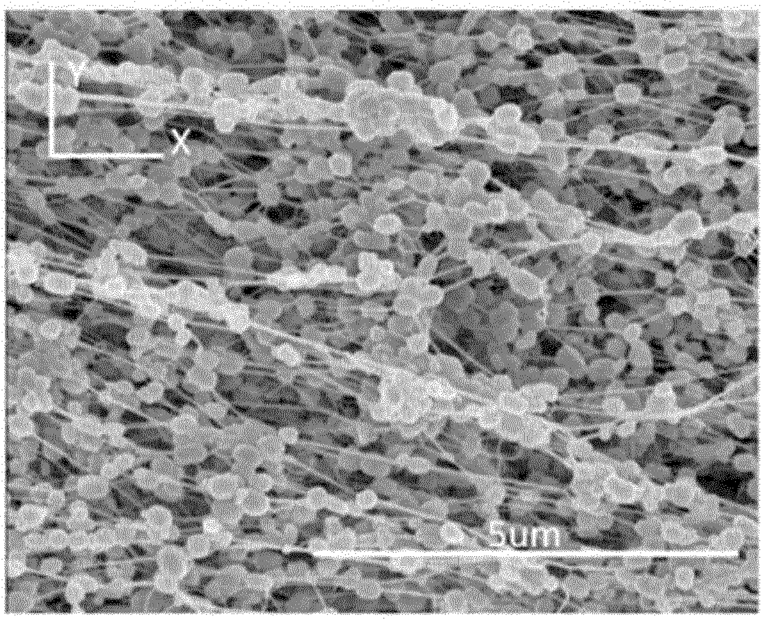

FIG. 2A

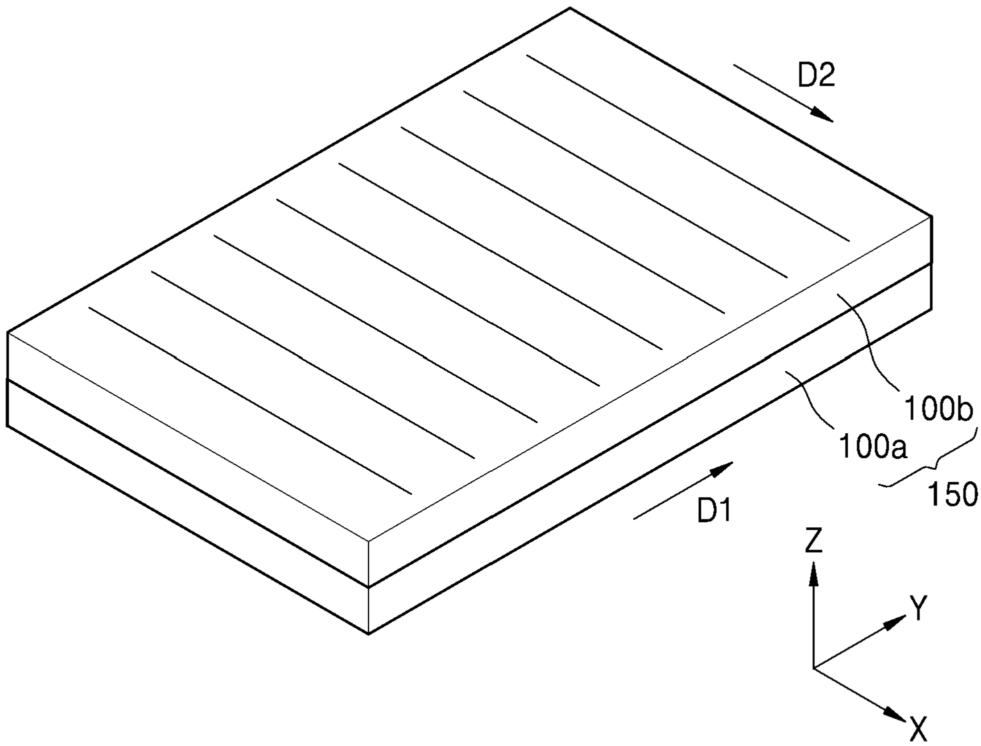

FIG. 2B

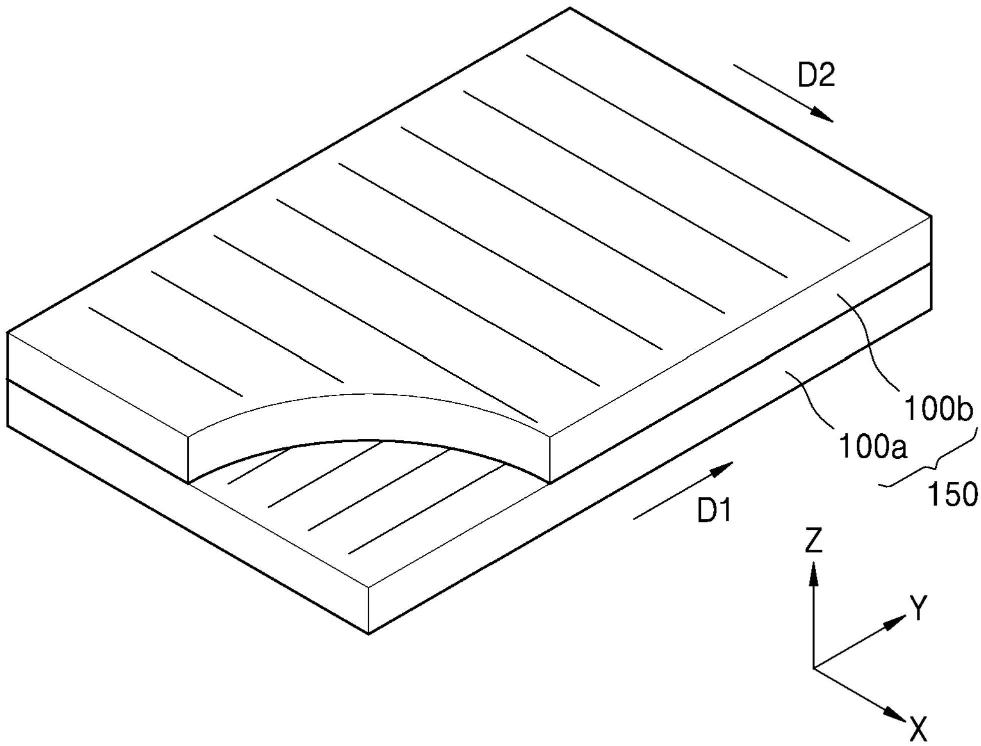

FIG. 2C

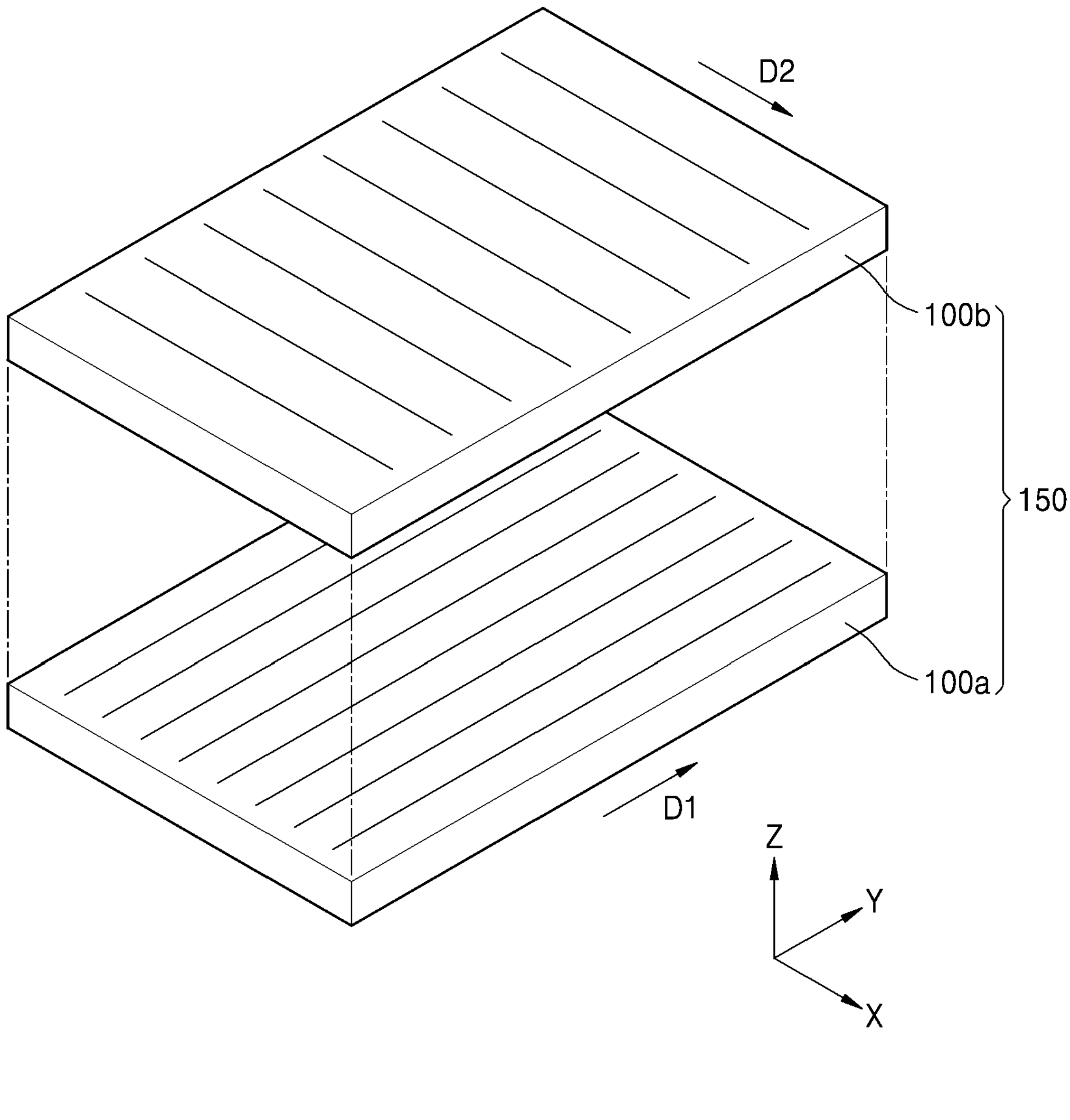

# FIG. 3A

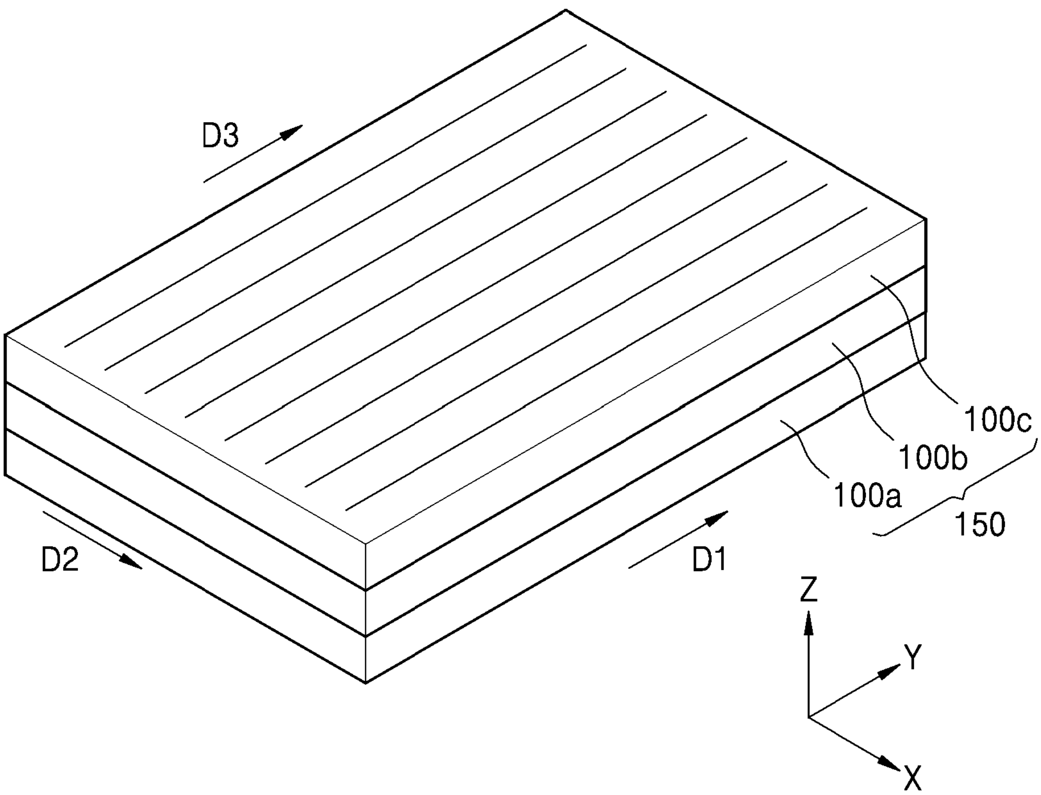

FIG. 3B

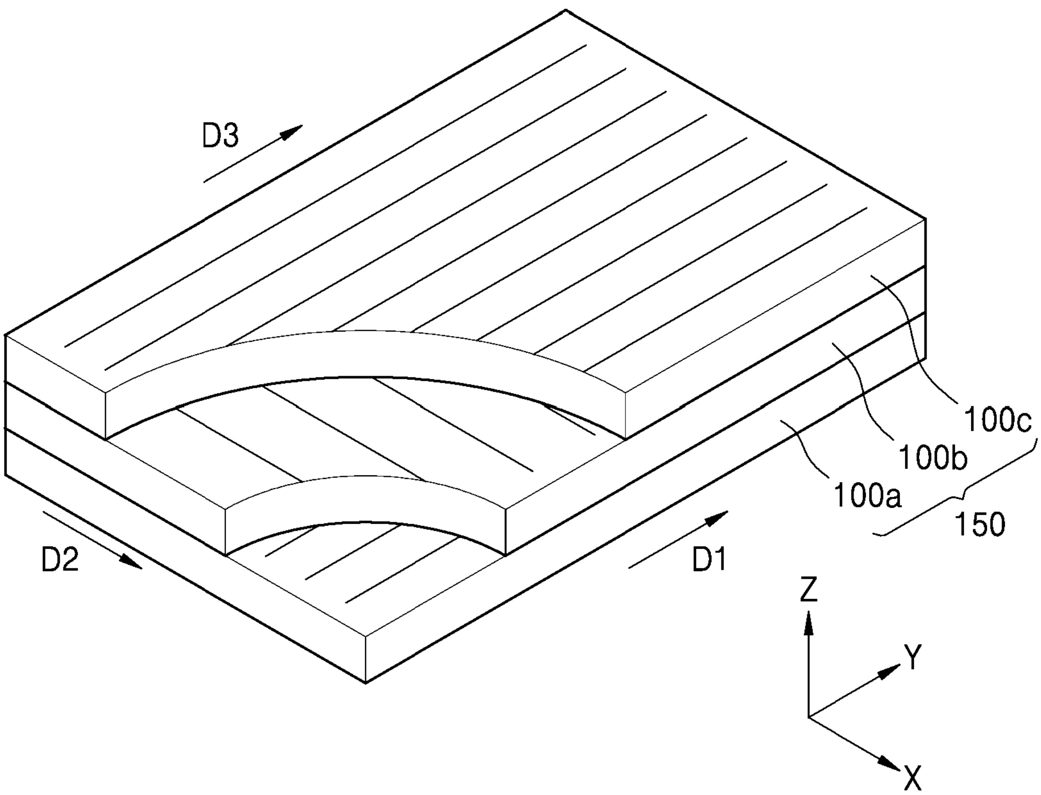

FIG. 3C

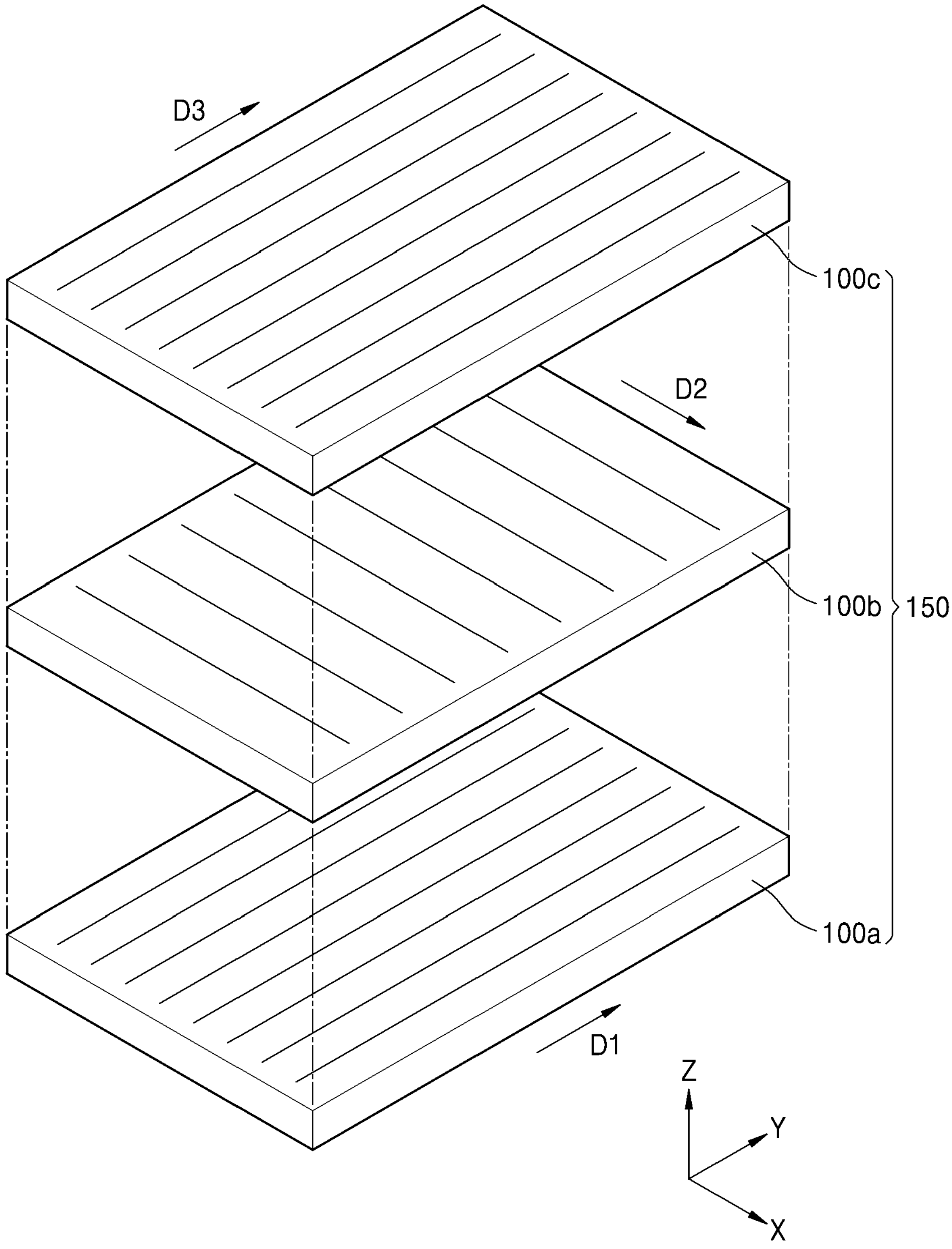

FIG. 4

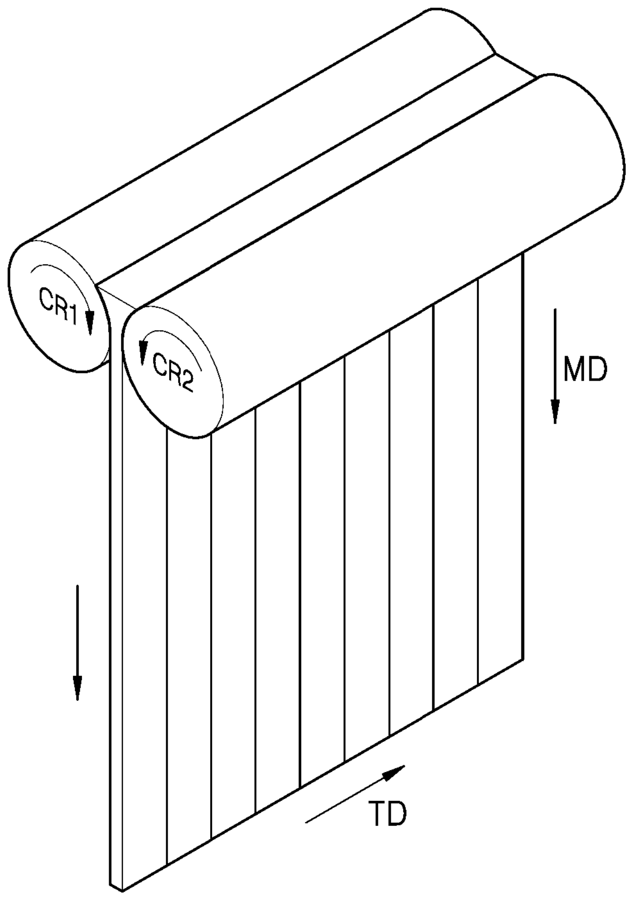

FIG. 5A

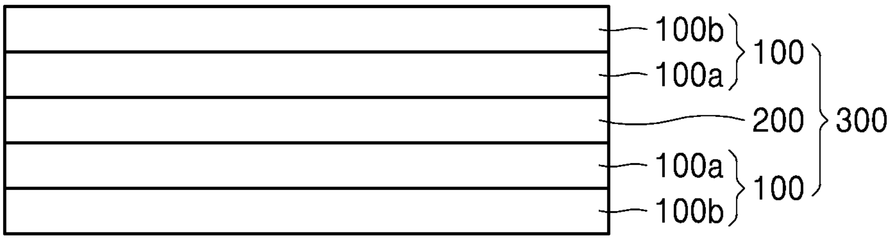


FIG. 5B

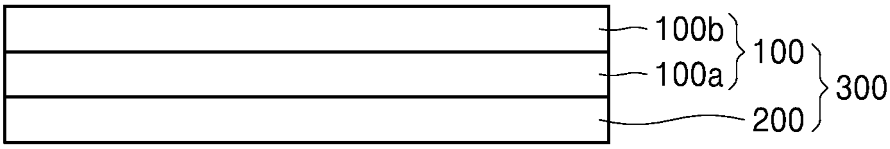

FIG. 5C

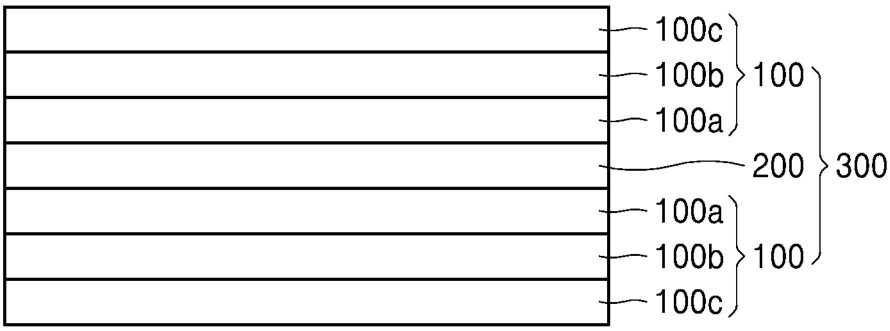
100c
100b
100a
100
200
300
100a
100b
100c
100

FIG. 5D

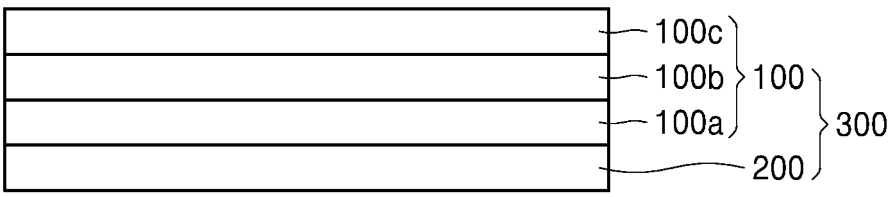
100c
100b
100a
100
300
200

FIG. 6

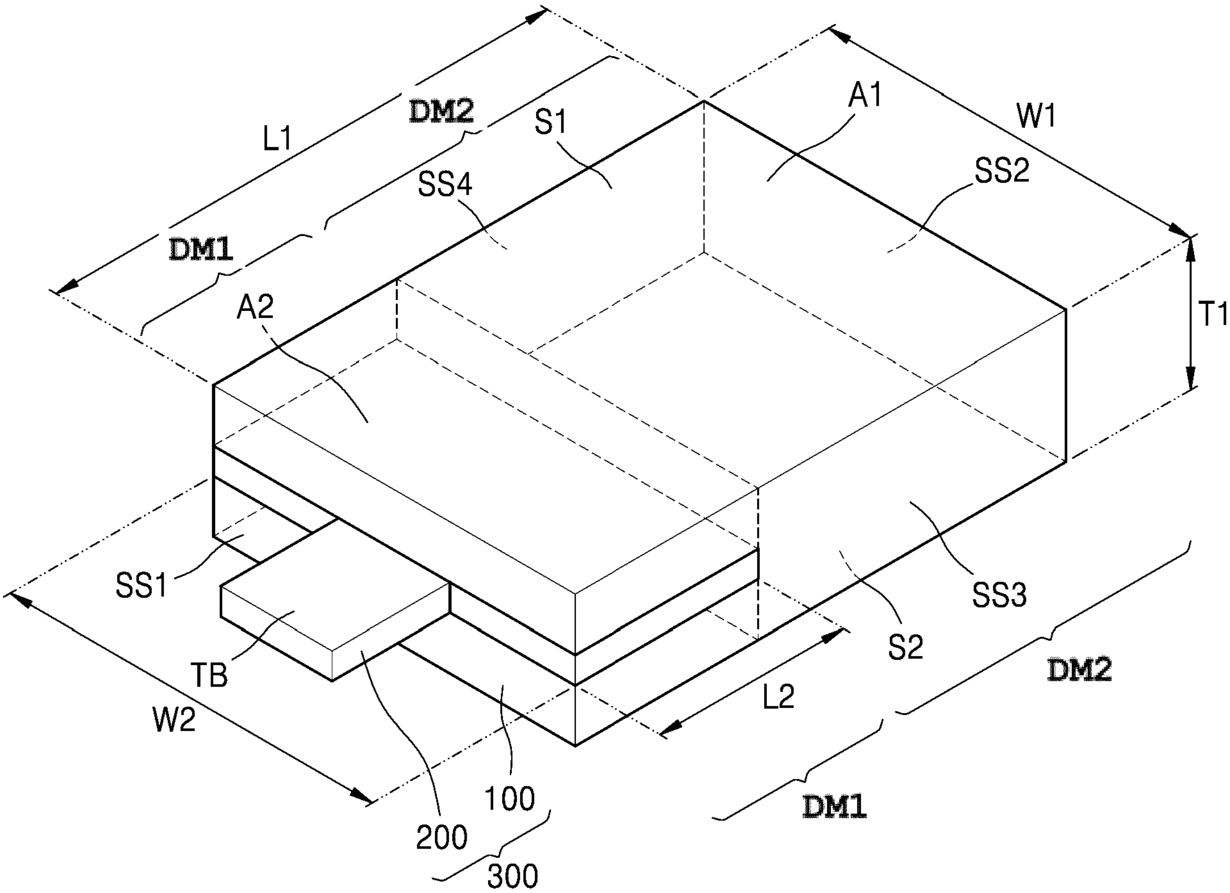
L1
DM2
S1
A1
W1
SS4
SS2
DM1
T1
A2
SS1
SS3
TB
S2
L2
DM2
W2
DM1
100
200
300

FIG. 7A

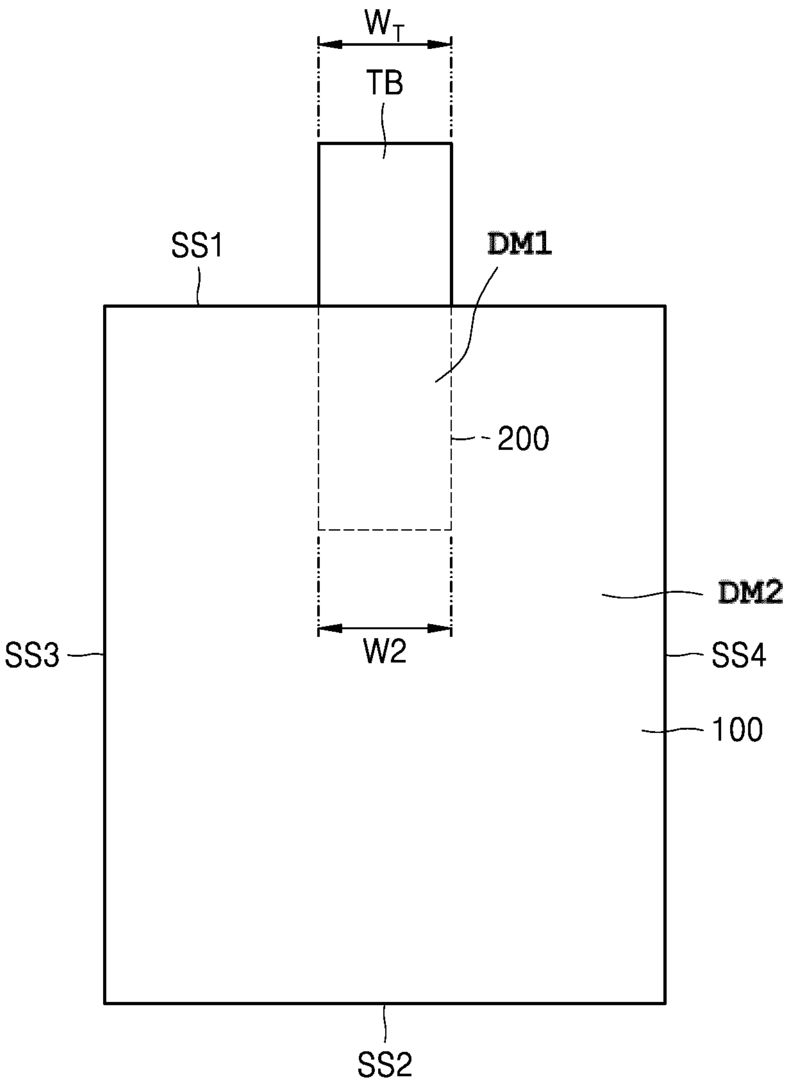

FIG. 7B

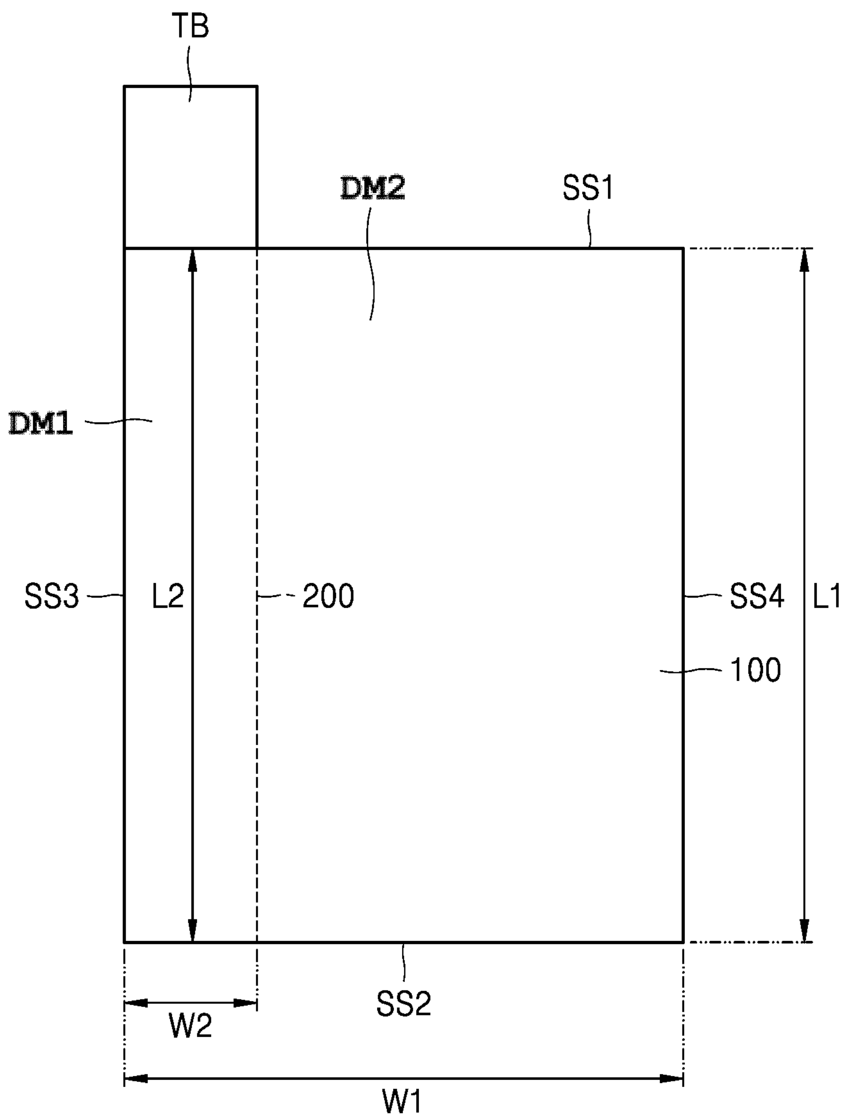

FIG. 7C

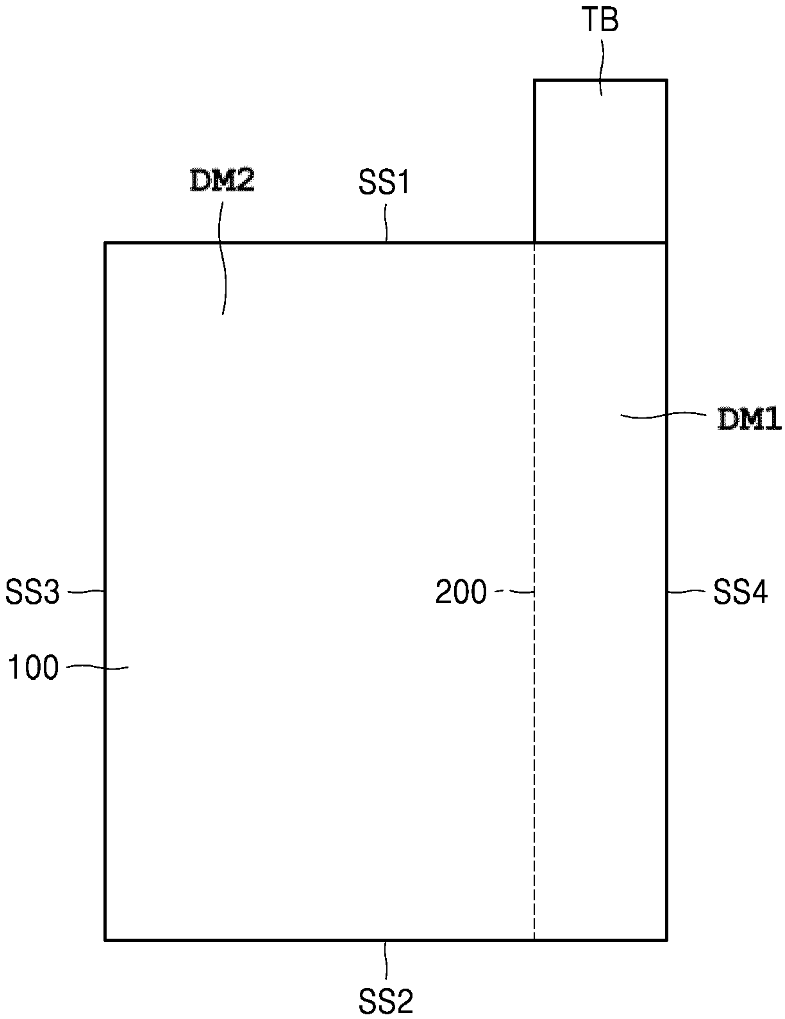

FIG. 7D

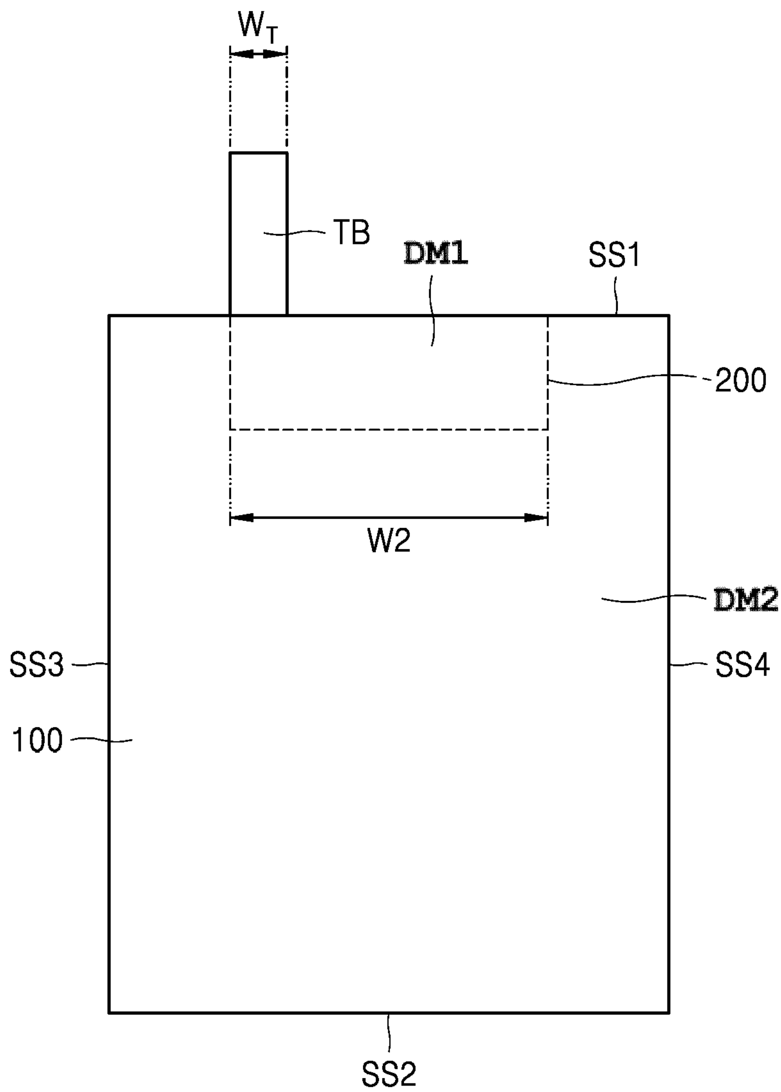

FIG. 7E

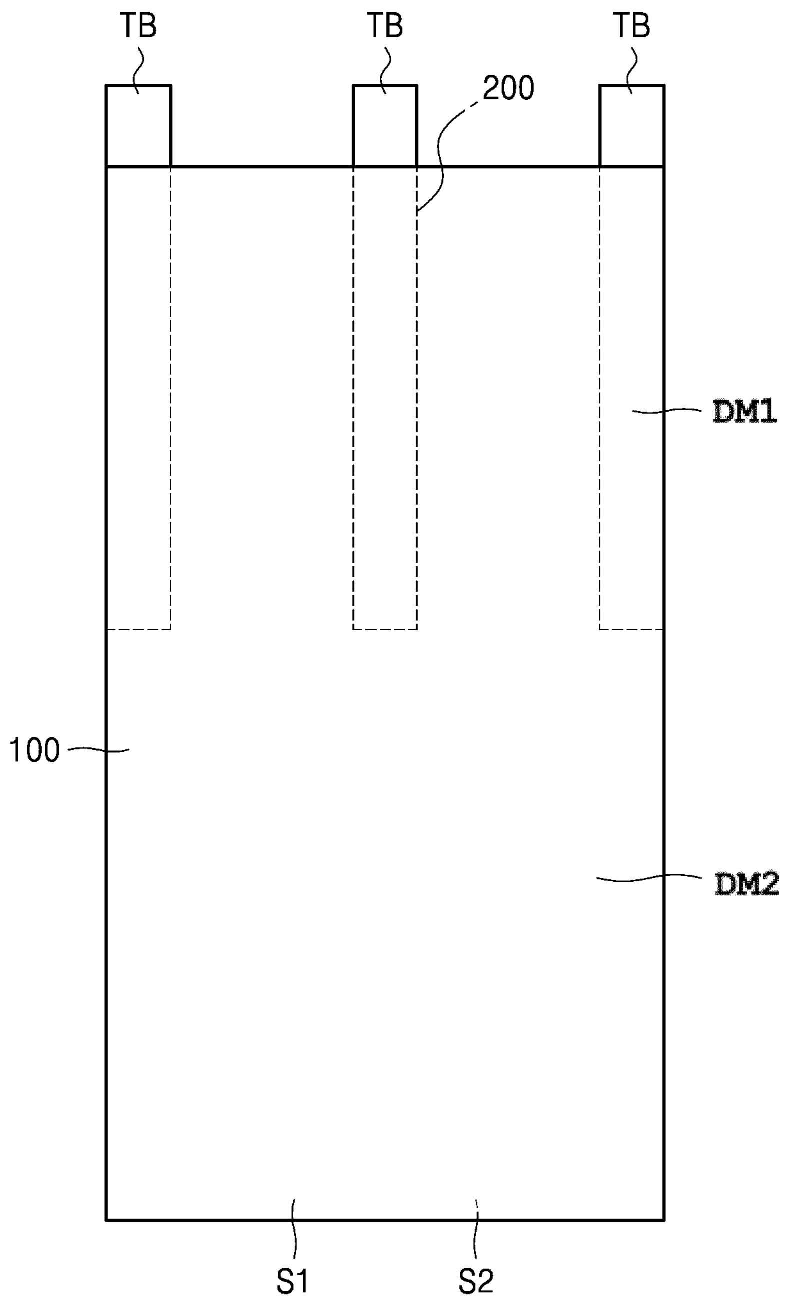

FIG. 7F

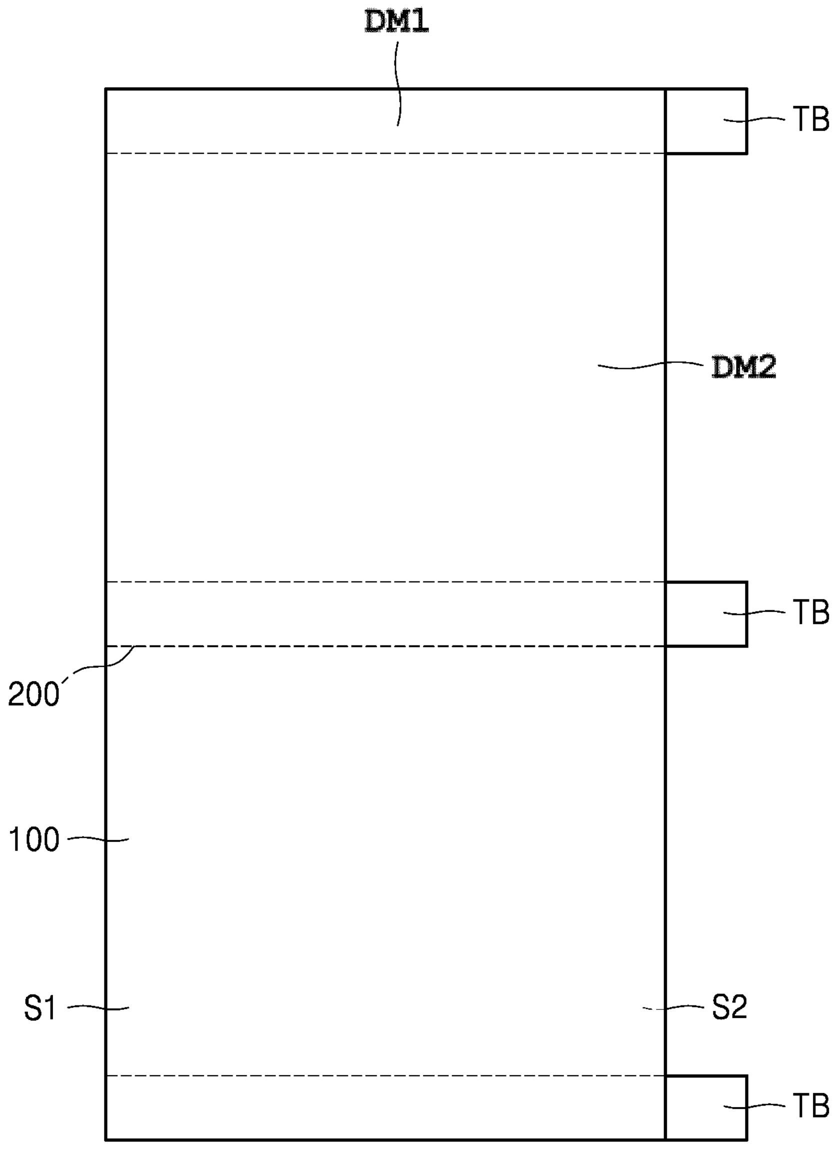

FIG. 8

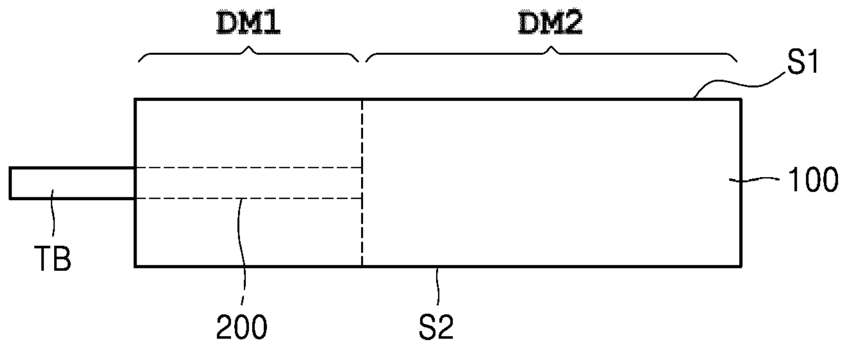

FIG. 9

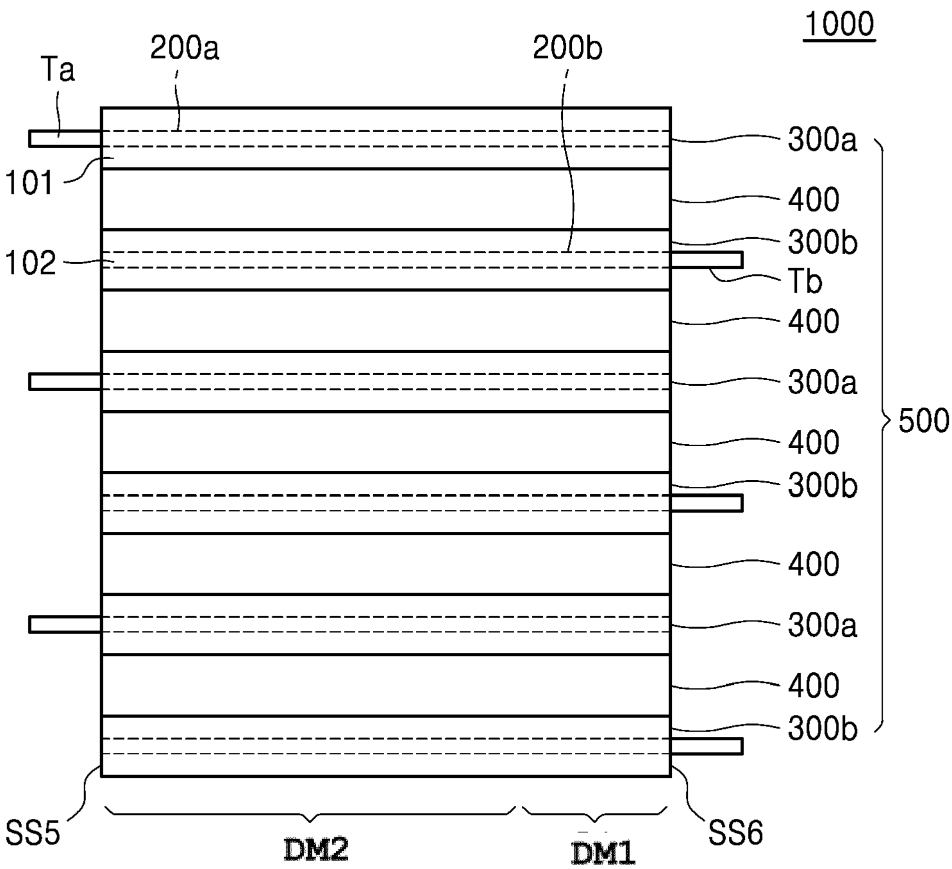
1000
Ta
200a
200b
101
102
300a
400
300b
Tb
400
300a
400
300b
400
300a
400
300b
500
SS5
DM2
DM1
SS6

FIG. 10

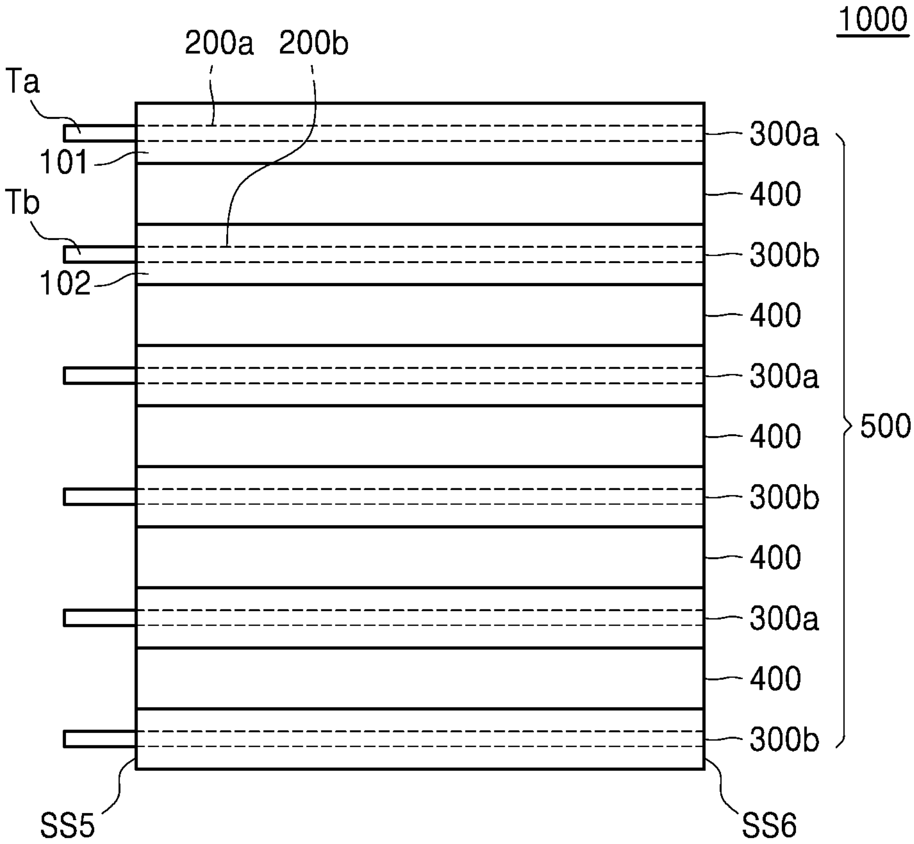
1000
200a
200b
Ta
101
Tb
102
300a
400
300b
400
300a
400
300b
400
300a
400
300b
500
SS5
SS6

FIG. 11

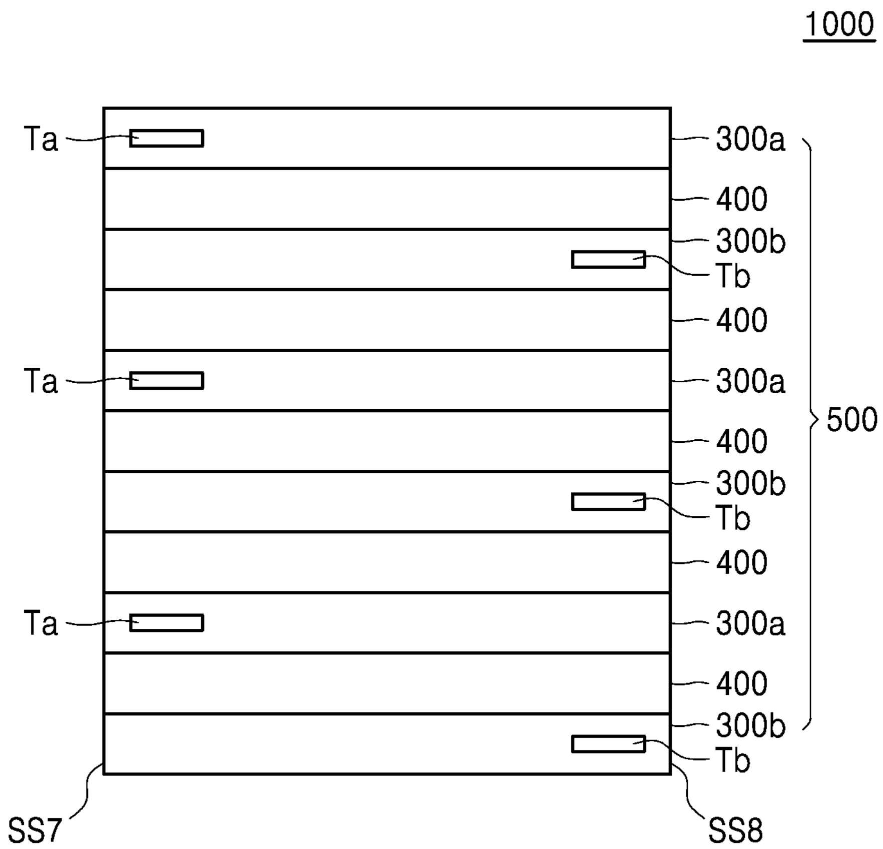
1000
Ta
300a
400
300b
Tb
400
Ta
300a
400
500
300b
Tb
400
Ta
300a
400
300b
Tb
SS7
SS8

FIG. 12

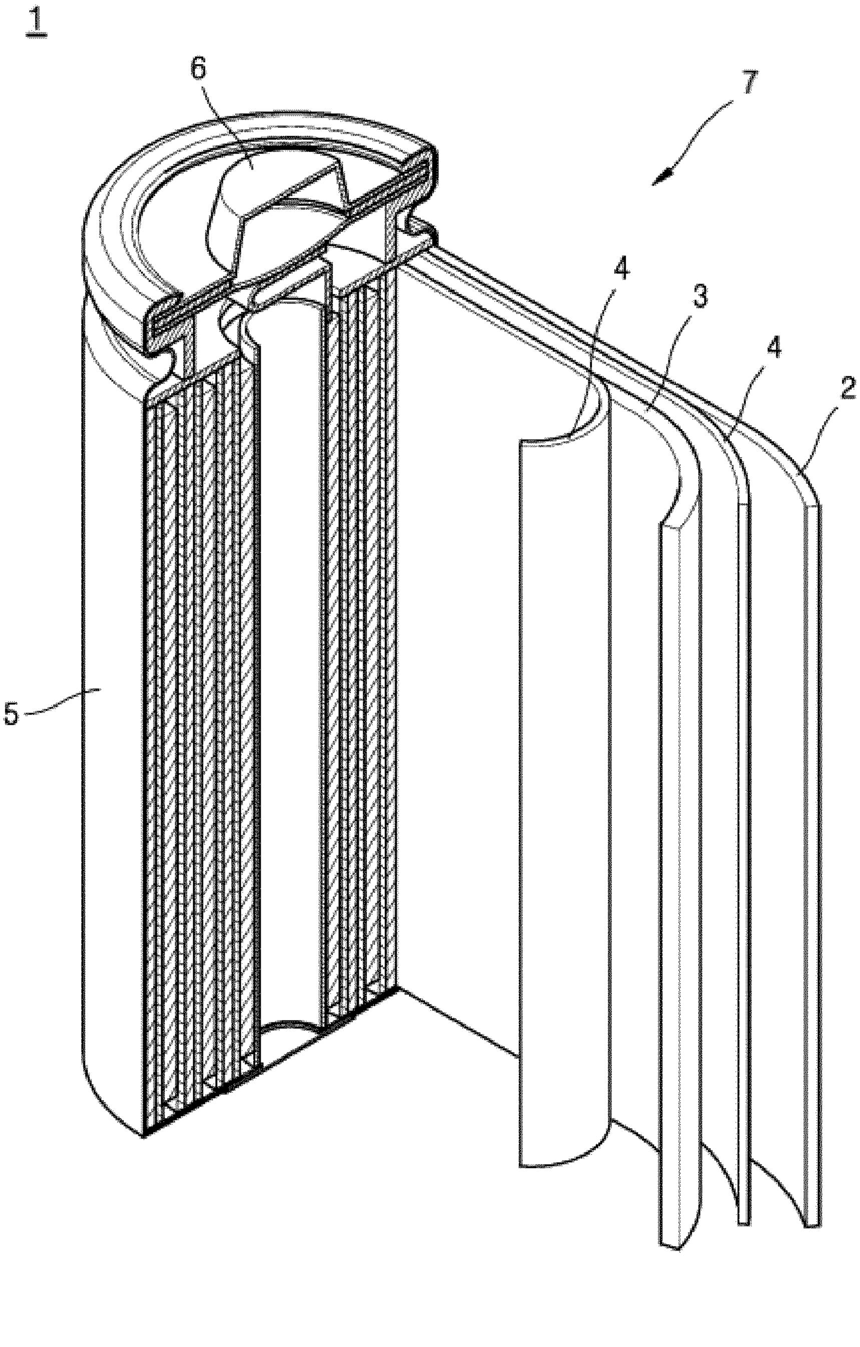

FIG. 13

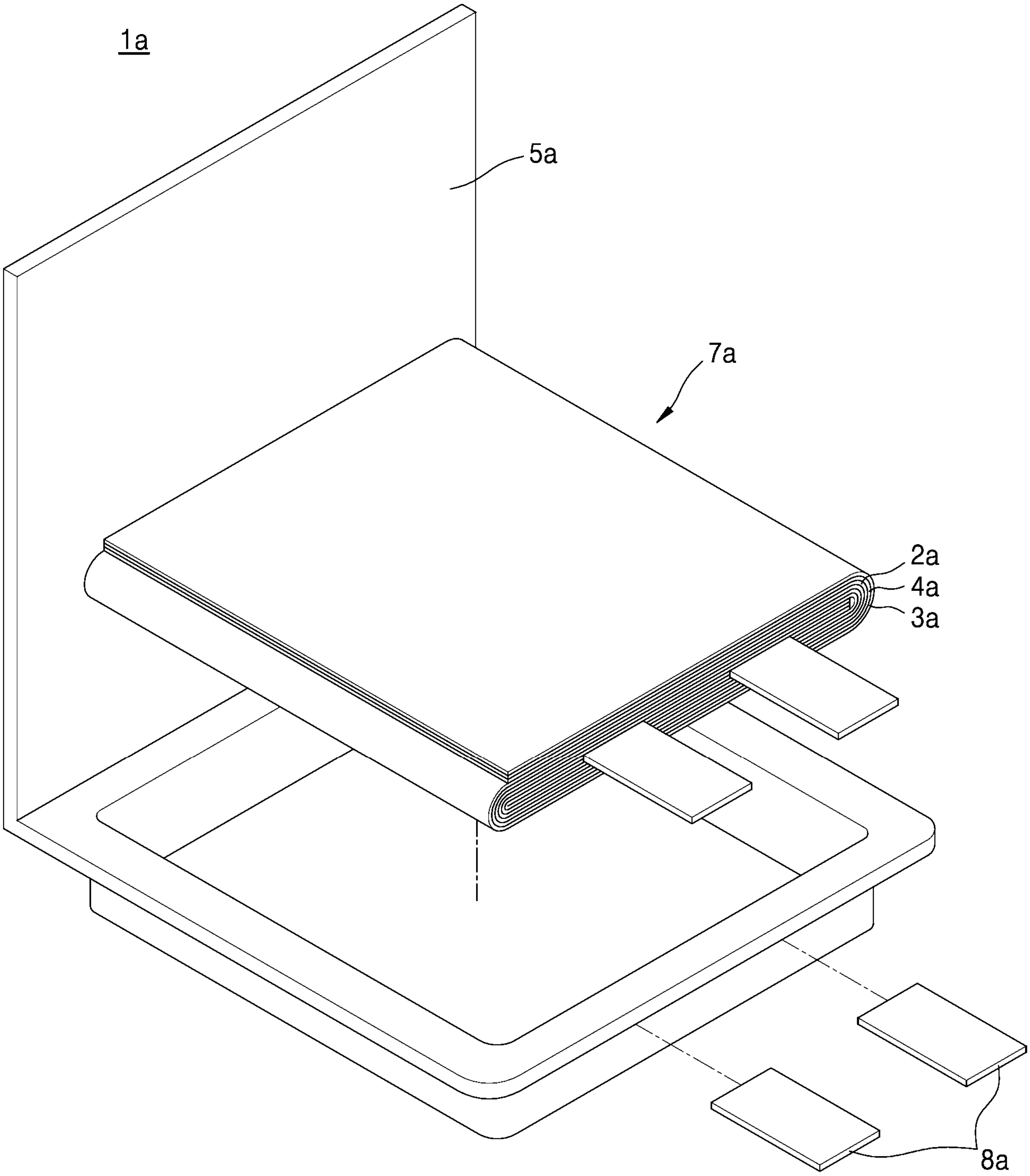

FIG. 14

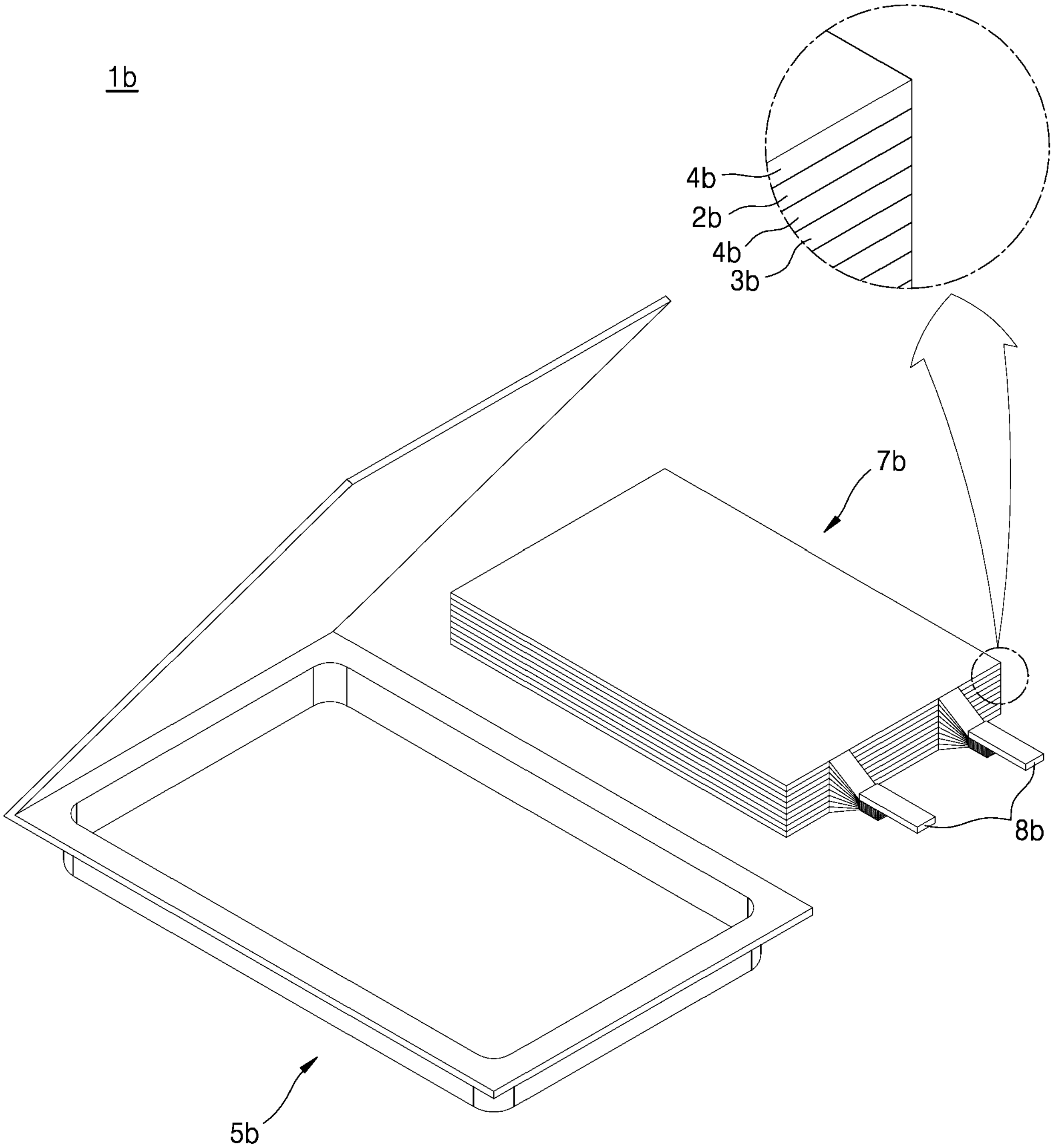

Europäisches Patentamt
European Patent Office
Office européen des brevets

# EUROPEAN SEARCH REPORT

Application Number
EP 24 16 5573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2022/285680 A1 (LEE JINHYON [KR] ET AL) 8 September 2022 (2022-09-08)<br>* page 1, paragraph 0019 - page 19, paragraph 0233; claims 1-20; figures 1-7C; tables 1,2 *<br>----- | 1-15<br><br>3-5 | INV.<br>H01M4/36<br>H01M4/131<br>H01M4/1391<br>H01M4/04<br>H01M4/62<br>H01M10/0525 |
| Y | US 2006/137158 A1 (ZOU BIN [US] ET AL) 29 June 2006 (2006-06-29)<br>* page 9, paragraph 0082 - page 10, paragraph 0088; figure 1a; tables 2, 3 *<br>----- | 3-5 | ADD.<br>H01M4/505<br>H01M4/525<br>H01M4/02 |
| | | | TECHNICAL FIELDS SEARCHED (IPC) |
| | | | H01M |

The present search report has been drawn up for all claims

| Place of search | Date of completion of the search | Examiner |
|---|---|---|
| Munich | 13 August 2024 | Polisski, Sergej |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 16 5573

This annex lists the patent family members relating to the patent documents cited in the above-mentioned European search report. The members are as contained in the European Patent Office EDP file on
The European Patent Office is in no way liable for these particulars which are merely given for the purpose of information.

13-08-2024

| Patent document cited in search report | Publication date | Patent family member(s) | Publication date |
|---|---|---|---|
| US 2022285680 A1 | 08-09-2022 | CN 115050921 A | 13-09-2022 |
| | | EP 4089763 A1 | 16-11-2022 |
| | | JP 7359883 B2 | 11-10-2023 |
| | | JP 2022137005 A | 21-09-2022 |
| | | KR 20220126129 A | 15-09-2022 |
| | | US 2022285680 A1 | 08-09-2022 |
| US 2006137158 A1 | 29-06-2006 | NONE | |

EPO FORM P0459

For more details about this annex : see Official Journal of the European Patent Office, No. 12/82